# EUROPÄISCHE PATENTSCHRIFT

(11) **EP 1 681 932 B1**
(45) Veröffentlichungstag und Bekanntmachung des Hinweises auf die Patenterteilung: **19.03.2008**
(21) Anmeldenummer: 04790700.1
(22) Anmeldetag: 21.10.2004
(51) Int. Cl.: A01N 47/36

(54) **HERBIZID WIRKSAMES MITTEL**
HERBICIDALLY ACTIVE AGENT
AGENT A EFFET HERBICIDE

(30) Priorität: 03.11.2003 DE 10351234; 26.11.2003 DE 10355846
(43) Veröffentlichungstag der Anmeldung: 26.07.2006
(73) Patentinhaber: Bayer CropScience AG, 40789 Monheim (DE)
(72) Erfinder: ZIEMER, Frank, 65830 Kriftel (DE); SCHNABEL, Gerhard, 63820 Elsenfeld (DE); HAASE, Detlev, 65929 Frankfurt (DE); DECKWER, Roland, 65929 Frankfurt (DE); ROSINGER, Christopher, 65719 Hofheim (DE); FEIST, David, Raleigh, NC 27614 (US)
(86) Internationale Anmeldenummer: PCT/EP2004/011893
(87) Internationale Veröffentlichungsnummer: WO 2005/041654

(56) Entgegenhaltungen:
- EP-A- 1 008 297
- WO-A-01/82693
- WO-A-02/17718
- WO-A-20/04004463
- DE-A1- 19 834 627
- DE-A1- 19 834 629
- DE-A1- 19 919 951
- DAVIES J ET AL: "HERBICIDE SAFENERS: A REVIEW" PESTICIDE SCIENCE, ELSEVIER APPLIED SCIENCE PUBLISHER. BARKING, GB, Bd. 55, Nr. 11, November 1999 (1999-11), Seiten 1043-1058, XP000958750 ISSN: 0031-613X

## Beschreibung

Die Erfindung betrifft das technische Gebiet der Pflanzenschutzmittel, insbesondere herbizid wirksame Mittel, enthaltend Sulfonylharnstoff-Safener-Kombinationen (Wirkstoff-Antidot-Kombinationen), die hervorragend für den Einsatz gegen konkurrierende Schadpflanzen in Nutzpflanzenkulturen geeignet sind.

Kombinationen von Herbiziden, welche das Enzym Acetolactatsynthase (ALS) hemmen, und Safenern sind bekannt. So sind in EP 0 492 367 A2 Kombinationen verschiedenster ALS-Inhibitoren mit verschiedensten Safenern beschrieben. Allerdings sind die dort spezifisch offenbarten Kombinationen im Hinblick auf Selektivität und Wirkungsspektrum nicht immer ausreichend.

Aufgabe der vorliegenden Erfindung war es daher, herbizid wirksame Mittel zu finden, in welchen die Selektivität gegenüber wichtigen Kulturpflanzen erhöht ist bei gleichzeitig hoher Wirksamkeit gegenüber Schadpflanzen. Diese Aufgabe wird überraschend gelöst durch das herbizid wirksame Mittel der vorliegenden Erfindung.

Gegenstand der Erfindung ist daher ein herbizid wirksames Mittel, welches als Flüssigformulierung in form eines Ölsuspensionskonzentrats oder einer daraus erhältlichen Wässinger Spritzbrüche vorliegt, enthaltend
(A) einen oder mehrere Sulfonylharnstoffe aus der Gruppe Metsulfuron, Thifensulfuron, Tribenuron, Chlorsulfuron und deren Salze und Ester, vorzugsweise in einer herbizid wirksamer Menge, und
(B) einen oder mehrere Safener aus der Gruppe Mefenpyr, Isoxadifen, Cloquintocet, Fenchlorazol und deren Salze und Ester, vorzugsweise in einer antidotisch wirksamen Menge, bevorzugt Mefenpyr, Isoxadifen, Cloquintocet und deren Salze und Ester, besonders bevorzugt Mefenpyr, Cloquintocet und deren Salze und Ester, ganz besonders bevorzugt Mefenpyr und dessen Salze und Ester.

Die Sulfonylharnstoffe A) und die Safener B) können auch in Form ihrer Salze vorliegen, z.B. als Salze mit anorganischen und organischen Gegenionen. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Salze sind die Alkalimetallsalze wie die Natriumsalze und Kaliumsalze. Die Sulfonylharnstoffe A) können z.B. Salze bilden, bei denen der Wasserstoff der -SO₂-NH-Gruppe durch ein für die Landwirtschaft geeignetes Kation ersetzt ist, z.B. eine Metallion wie ein Alkalimetallion, vorzugsweise ein Natrium- oder Kaliumion.

Die Sulfonylharnstoffe A) und die Safener B) können auch in Form ihrer Ester vorliegen, insbesondere in Form ihrer Alkylester wie C₁-C₁₀-Alkylester. Bei den Sulfonylharnstoffen A) sind besonders bevorzugt Methylester und Ethylester. Bei den Safenern B) sind besonders bevorzugt die Methylester, Ethylester und Methylhexylester.

Die Sulfonylharnstoffe (A) sind vorzugsweise ausgewählt aus der Gruppe bestehend aus Metsulfuron-methyl (A1.1), Thifensulfuron-methyl (A2.1), Tribenuron-methyl (A3.1) und Chlorsulfuron (A4.1) einschließlich der in der Landwirtschaft gebräuchlichen Salze wie der Natriumsalze Metsulfuron-methyl-natrium (A1.2), Thifensulfuron-methyl-natrium (A2.2), Tribenuron-methyl-natrium (A3.2) und Chlorsulfuron-natrium (A4.2). Weiterhin bevorzugt sind Metsulfuron (A1.3), Metsulfuron-natrium (A1.4), Thifensulfuron (A2.3), Thifensulfuron-natrium (A2.4), Tribenuron (A3.3) und Tribenuron-natrium (A3.4). Besonders bevorzugte Sulfonylharnstoffe (A) sind Metsulfuron-methyl (A1.1), Thifensulfuron-methyl (A2.1), Tribenuron-methyl (A3.1) und Chlorsulfuron (A4.1).

Die Safener (B) sind vorzugsweise ausgewählt aus der Gruppe bestehend aus 1-(2,4-Dichlorphenyl)-5-(ethoxycarbonyl)-5-methyl-2-pyrazolin-3-carbonsäureethylester (B1, Mefenpyr-diethyl), 5,5-Diphenyl-2-isoxazolin-3-carbonsäureethylester (B2, Isoxadifen-ethyl), (5-Chlor-8-chinolinoxy)essigsäure-(1-methylhexyl)-ester (B3, Cloquintocet-mexyl), Mefenpyr-dimethyl (B4), Mefenpyr (B5), lsoxadifen (B6) und Cloquintocet (B7), 1-(2,4-Dichlorphenyl)-5-trichlormethyl-(1 H)-1,2,4-triazol-3-carbonsäureethylester (B8, Fenchlorazol-ethyl) und Fenchlorazol (B9), einschließlich der in der Landwirtschaft gebräuchlichen Salze wie der Natriumsalze. Bevorzugte Safener sind (B1), (B2), (B3) und (B8), insbesondere (B1), (B2) und (B3). Besonders bevorzugte Safener sind (B1) und (B2), ganz besonders bevorzugt ist Mefenpyr-diethyl (B1).

Herbizid wirksame Menge bedeutet im Sinne der Erfindung eine Menge an einem oder mehreren Herbiziden, die geeignet ist, den Pflanzenwuchs negativ zu beeinflussen.

Antidotisch wirksame Menge bedeutet im Sinne der Erfindung eine Menge an einem oder mehreren Safenern, die geeignet ist, der phytotoxischen Wirkung eines Herbizids oder Herbizidgemisches an einer Nutzpflanze zumindest teilweise entgegenzuwirken.

Von den Verbindungen (A) und (B) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Sulfonylharnstoffe (A) sind kommerziell erhältlich und z.B. bekannt aus "The Pesticide Manual", 12. Auflage (2000), The British Crop Protection Association und aus US 4,370,480, EP 30138, US 4,701,535, EP 30142, EP 202830 und US 4,127,405, die ausführliche Angaben zu Herstellungsverfahren und Ausgangsmaterialien enthalten. Auf diese Schriften wird ausdrücklich Bezug genommen, sie gelten durch Zitat als Bestandteil dieser Beschreibung.

Safener (B) sind kommerziell erhältlich und z.B. bekannt aus "The Pesticide Manual", 12. Auflage (2000), The British Crop Protection Association und aus WO 91/7874, WO 95/7897, EP-A-94349 und EP-A-174562, die ausführliche Angaben zu Herstellungsverfahren und Ausgangsmaterialien enthalten. Auf diese Schriften wird ausdrücklich Bezug genommen, sie gelten durch Zitat als Bestandteil dieser Beschreibung.

Beispiele bevorzugter erfindungsgemäßer Kombinationen von Sulfonylharnstoffen (A) und Safenern (B) sind:
(A1.1) + (B1), (A1.1) + (B2), (A1.1) + (B3), (A1.1) + (B8), (A2.1) + (B1), (A2.1) + (B2), (A2.1) + (B3), (A2.1) + (B8), (A3.1) + (B1), (A3.1) + (B2), (A3.1) + (B3), (A3.1) + (B8), (A4.1) + (B1), (A4.1) + (B2), (A4.1) + (B3), (A4.1) + (B8), (A1.2) + (B1), (A1.2) + (B2), (A1.2) + (B3), (A1.2) + (B8), (A2.2) + (B1), (A2.2) + (B2), (A2.2) + (B3), (A2.2) + (B8), (A3.2) + (B1), (A3.2) + (B2), (A3.2) + (B3), (A3.2) + (B8), (A4.2) + (B1), (A4.2) + (B2), (A4.2) + (B3), (A4.2) + (B8), (A1.3) + (B1), (A1.3) + (B2), (A1.3) + (B3), (A1.3) + (B8), (A2.3) + (B1), (A2.3) + (B2), (A2.3) + (B3), (A2.3) + (B8), (A3.3) + (B1), (A3.3) + (B2), (A3.3) + (B3), (A3.3) + (B8), (A1.4) + (B1), (A1.4) + (B2), (A1.4) + (B3), (A1.4) + (B8), (A2.4) + (B1), (A2.4) + (B2), (A2.4) + (B3), (A2.4) + (B8), (A3.4) + (B1), (A3.4) + (B2), (A3.4) + (B3), (A3.4) + (B8);
(A1.1) + (A1.2) + (B1), (A1.1) + (A2.1) + (B1), (A1.1) + (A2.2) + (B1), (A1.1) + (A3.1) + (B1), (A1.1) + (A3.2) + (B1), (A1.1) + (A4.1) + (B1), (A1.1) + (A4.2) + (B1);
(A1.2) + (A2.1) + (B1), (A1.2) + (A2.2) + (B1), (A1.2) + (A3.1) + (B1), (A1.2) + (A3.2) + (B1), (A1.2) + (A4.1) + (B1), (A1.2) + (A4.2) + (B1);
(A2.1) + (A2.2) + (B1), (A2.1) + (A3.1) + (B1), (A2.1) + (A3.2) + (B1), (A2.1) + (A4.1) + (B1), (A2.1) + (A4.2) + (B1);
(A2.2) + (A3.1) + (B1), (A2.2) + (A3.2) + (B1), (A2.2) + (A4.1) + (B1), (A2.2) + (A4.2) + (B1);
(A3.1) + (A3.2) + (B1), (A3.1) + (A4.1) + (B1), (A3.1) + (A4.2) + (B1); (A3.2) + (A4.1) + (B1), (A3.2) + (A4.2) + (B1), (A4.1) + (A4.2) + (B1);
(A1.1) + (A1.2) + (B2), (A1.1) + (A2.1) + (B2), (A1.1) + (A2.2) + (B2), (A1.1) + (A3.1) + (B2), (A1.1) + (A3.2) + (B2), (A1.1) + (A4.1) + (B2), (A1.1) + (A4.2) + (B2);
(A1.2) + (A2.1) + (B2), (A1.2) + (A2.2) + (B2), (A1.2) + (A3.1) + (B2), (A1.2) + (A3.2) + (B2), (A1.2) + (A4.1) + (B2), (A1.2) + (A4.2) + (B2);
(A2.1) + (A2.2) + (B2), (A2.1) + (A3.1) + (B2), (A2.1) + (A3.2) + (B2), (A2.1) + (A4.1) + (B2), (A2.1) + (A4.2) + (B2);
(A2.2) + (A3.1) + (B2), (A2.2) + (A3.2) + (B2), (A2.2) + (A4.1) + (B2), (A2.2) + (A4.2) + (B2);
(A3.1) + (A3.2) + (B2), (A3.1) + (A4.1) + (B2), (A3.1) + (A4.2) + (B2); (A3.2) + (A4.1) + (B2), (A3.2) + (A4.2) + (B2), (A4.1) + (A4.2) + (B2);
(A1.1) + (A1.2) + (B3), (A1.1) + (A2.1) + (B3), (A1.1) + (A2.2) + (B3), (A1.1) + (A3.1) + (B3), (A1.1) + (A3.2) + (B3), (A1.1) + (A4.1) + (B3), (A1.1) + (A4.2) + (B3);
(A1.2) + (A2.1) + (B3), (A1.2) + (A2.2) + (B3), (A1.2) + (A3.1) + (B3), (A1.2) + (A3.2) + (B3), (A1.2) + (A4.1) + (B3), (A1.2) + (A4.2) + (B3);
(A2.1) + (A2.2) + (B3), (A2.1) + (A3.1) + (B3), (A2.1) + (A3.2) + (B3), (A2.1) + (A4.1) + (B3), (A2.1) + (A4.2) + (B3);
(A2.2) + (A3.1) + (B3), (A2.2) + (A3.2) + (B3), (A2.2) + (A4.1) + (B3), (A2.2) + (A4.2) + (B3);
(A3.1) + (A3.2) + (B3), (A3.1) + (A4.1) + (B3), (A3.1) + (A4.2) + (B3); (A3.2) + (A4.1) + (B3), (A3.2) + (A4.2) + (B3), (A4.1) + (A4.2) + (B3);
(A1.1) + (A1.2) + (B8), (A1.1) + (A2.1) + (B8), (A1.1) + (A2.2) + (B8), (A1.1) + (A3.1) + (B8), (A1.1) + (A3.2) + (B8), (A1.1) + (A4.1) + (B8), (A1.1) + (A4.2) + (B8);
(A1.2) + (A2.1) + (B8), (A1.2) + (A2.2) + (B8), (A1.2) + (A3.1) + (B8), (A1.2) + (A3.2) + (B8), (A1.2) + (A4.1) + (B8), (A1.2) + (A4.2) + (B8);
(A2.1) + (A2.2) + (B8), (A2.1) + (A3.1) + (B8), (A2.1) + (A3.2) + (B8), (A2.1) + (A4.1) + (B8), (A2.1) + (A4.2) + (B8);
(A2.2) + (A3.1) + (B8), (A2.2) + (A3.2) + (B8), (A2.2) + (A4.1) + (B8), (A2.2) + (A4.2) + (B8);
(A3.1) + (A3.2) + (B8), (A3.1) + (A4.1) + (B8), (A3.1) + (A4.2) + (B8); (A3.2) + (A4.1) + (B8), (A3.2) + (A4.2) + (B8), (A4.1) + (A4.2) + (B8).

Die Safener (Antidote) der Gruppe (B) reduzieren oder unterbinden phytotoxische Effekte, die beim Einsatz der herbiziden Wirkstoffe (A) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais, Reis und andere Kulturen ausgedehnt werden, in denen bisher ein Einsatz der Herbizide nicht möglich oder nur beschränkt, das heißt, in niedrigen Dosierungen mit wenig Breitenwirkung möglich war.

Das Gewichtsverhältnis Safener: Sulfonylharnstoff kann innerhalb weiter Grenzen variieren und liegt vorzugsweise im Bereich von 1:100 bis 100:1, insbesondere von 1:10 bis 10:1. Die jeweils optimalen Mengen an Sulfonylharnstoff und Safener sind vom Typ des verwendeten Sulfonylharnstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäßen herbizid wirksamen Mittel sind vor allem Getreidekulturen (z.B. Weizen, Roggen, Gerste, Hafer), Reis, Mais, Sorghum, Baumwolle und Sojabohne, vorzugsweise Getreide, Reis und Mais.

Die in dem erfindungsgemäßen herbizid wirksamen Mittel enthaltenen Safener können zusammen mit einem Herbizid, insbesondere einem Sulfonylharnstoff (A), vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit einem Herbizid.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Die erfindungsgemäßen herbiziden Mittel können gegebenenfalls als zusätzliche Komponenten noch enthalten:
(C) ein oder mehrere Lösungsmittel, bevorzugt organische Lösungsmittel,
(D) ein oder mehrere Sulfosuccinate,
(E) einen oder mehrere von (A) und (B) verschiedene agrochemische Wirkstoffe, und/oder
(F) übliche Hilfs- und Zusatzstoffe.

Als optional enthaltene organische Lösungsmittel (Komponente C) kommen z.B. in Frage:
1) Kohlenwasserstoffe, die unsubstituiert oder substituiert sein können, z.B.
1a) aromatische Kohlenwasserstoffe, z.B.
   - ein- oder mehrfach alkyl-substituierte Benzole wie Toluol, Xylole, Mesitylen, Ethylbenzol, oder
   - ein- oder mehrfach alkyl-substituierte Naphthaline wie 1-Methylnaphthalin, 2-Methylnaphthalin oder Dimethylnaphtalin, oder
   - andere vom Benzol abgeleitete aromatische Kohlenwasserstoffe, wie Indan oder Tetralin^{®} , oder
   - Gemische hieraus,
1b) aliphatische Kohlenwasserstoffe, z.B.
   - lineare oder verzweigte Aliphaten, z.B. der allgemeinen Formel CₙH₂ₙ₊₂, wie Pentan, Hexan, Octan, 2-Methylbutan oder 2,2,4-Trimethylpentan, oder
   - cyclische, gegebenenfalls alkyl-substituierte Aliphaten, wie Cyclohexan oder Methylcyclopentan, oder
   - Gemische hieraus, wie Lösungsmittel der Exxsol^{®}D-Reihe, Isopar^{®}-Reihe oder Bayol^{®}-Reihe z.B. Bayol^{®}82 (ExxonMobil Chemicals) oder der Isane^{®}IP-Reihe oder Hydroseal^{®}G-Reihe (TotalFinaElf),
1c) Gemische von aromatischen und aliphatischen Kohlenwasserstoffen, wie Lösungsmittel der Solvesso^{®}-Reihe z.B. Solvesso^{®}100, Solvesso^{®}150 oder Solvesso^{®}200 (ExxonMobil Chemicals), der Solvarex^{®}/Solvaro^{®}-Reihe (TotalFinaElf) oder der Caromax^{®}-Reihe z.B. Caromax^{®}28 (Petrochem Carless), oder
1d) halogenierte Kohlenwasserstoffe wie halogenierte aromatische und aliphatische Kohlenwasserstoffe, wie Chlorbenzol oder Methylenchlorid, oder
2) aprotische, polare Lösungsmittel, wie Ether, Ester von C₁-C₉-Alkansäuren, die mono-, di- oder polyfunktional sein können, wie deren Mono-, Di- oder Triester, z.B. mit C₁-C₁₈-Alkylalkoholen, Ketone mit geringer Tautomerietendenz, Phophorsäureester, Amide, Nitrile oder Sulfone, z.B. Diisobutyladipat, Rhodiasolv^{®} RPDE (Rhodia), Cyclohexanon, Jeffsol^{®}PC (Huntsman), γ-Butyrolacton, N-Methylpyrrolidon, Dimethylsulfoxid, Acetonitril, Tributylphosphatam oder Hostarex^{®}PO-Reihe (Clariant), oder
3) Fettsäureester, z.B. natürlichen Ursprungs, z.B. natürliche Öle wie tierische Öle oder Pflanzenöle, oder synthetischen Ursprungs, z.B. Edenor^{®}-Reihe z.B. Edenor^{®}MEPa oder Edenor^{®}MESU oder Agnique^{®}ME-Reihe oder Agnique^{®}AE-Reihe (Cognis), Salim^{®}ME-Reihe (Salim), Radia^{®}-Reihe z.B. Radia^{®}30167 (ICI), Prilube^{®}-Reihe z.B. Prilube^{®}1530 (Petrofina), Stepan^{®}C-Reihe (Stepan) oder Witconol^{®}23-Reihe (Witco). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-Fettsäure-Ester, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-FettsäureEster bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia®-Reihe (ICI), Prilube®-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Bevorzugte organische Lösungsmittel sind aromatische Kohlenwasserstoffe, aliphatische Kohlenwasserstoffe und Fettsäureester wie pflanzliche Öle wie Triglyceride von Fettsäuren mit 10 bis 22 C-Atomen, die sowohl gesättigt als auch ungesättigt, linear oder verzweigt sein können und gegebenenfalls weitere funktionelle Gruppen tragen, wie Maiskeimöl, Rapsöl, Sonnenblumenkernöl, Baumwollsaatöl, Leinöl, Sojaöl, Kokosöl, Palmöl, Distelöl oder Rizinusöl, und deren Umesterungsprodukte wie Fettsäurealkylester, sowie Mischungen hieraus.

Die Lösungsmittel können allein oder im Gemisch enthalten sein. Das verwendete Lösungsmittel bzw. Lösungsmittelgemisch weist bevorzugt ein geringes Lösevermögen für das verwendete bzw. die verwendeten Sulfonylharnstoffe (Komponente A) auf.

Der Gesamtlösungsmittelanteil in den erfindungsgemäßen herbiziden Mitteln liegt im allgemeinen zwischen 0 und 95 Gew.%, bevorzugt im Bereich zwischen 20 und 80 Gew.%. Der Anteil an polaren Lösungsmitteln wie aprotischen, polaren liegt im allgemeinen unter 20 Gew.-%, bevorzugt im Bereich von 0 bis 10 Gew.%.

Die in den erfindungsgemäßen herbiziden Mitteln optional enthaltenen Sulfosuccinate (Komponente D) können z.B. Mono- oder Diester der Sulfobernsteinsäure sein, vorzugsweise solche der allgemeinen Formel (III)

R¹-(X₁)ₙ-O-CO-CH₂-CH(SO₃M)-CO-O-(X₂)ₘ-R² (III)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (III), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-secbutylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)ₚ- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)_{q}- mit q=1 bis q=15, insbesondere q=1 bis q=8, n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Beispiele bevorzugt enthaltener Sulfosuccinate sind,
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol^{®}-Marken (Cytec), der Agrilan^{®}- oder Lankropol^{®}-Marken (Akzo Nobel), der Empimin^{®}-Marken (Albright&Wilson), der Cropol^{®}-Marken (Croda), der Lutensit^{®}-Marken (BASF) der Triton^{®}-Marken (Union Carbide), der Geropon^{®}-Marken (Rhodia) oder der Imbirol^{®}-, Madeol^{®}- oder Polirol^{®}-Marken (Cesalpinia) erhältlich,
a2) Natrium- Alkoholpolyethylenglykolethersulfosuccinat, kommerziell beispielsweise in Form von Geropon^{®} ACR-Marken (Rhodia) erhältlich,
a3) Dinatrium-Alkoholpolyethylenglykolethersemisulfosuccinat, kommerziell beispielsweise in Form der Aerosol^{®}-Marken (Cytec), der Marlinat^{®}- oder Sermul^{®}-Marken (Condea), der Empicol^{®}-Marken (Albright&Wilson), der Secosol^{®}-Marken (Stepan), der Geropon^{®}-Marken (Rhodia), der Disponil^{®}- oder Texapon^{®}-Marken (Cognis) oder der Rolpon^{®}-Marken (Cesalpinia) erhältlich,
a4) Dinatrium-N-Alkylsulfosuccinamat, kommerziell beispielsweise in Form der Aerosol^{®}-Marken (Cytec), der Rewopol^{®}- oder Rewoderm^{®}-Marken (Rewo), der Empimin^{®}-Marken (Albright&Wilson), der Geropon^{®}-Marken (Rhodia) oder der Polirol^{®}-Marken (Cesalpinia) erhältlich,
a5) Dinatrium-Fettsäureamidpolyethylenglykolethersemisulfosuccinat, kommerziell beispielsweise in Form der Elfanol^{®}- oder Lankropol^{®}-Marken (Akzo Nobel), der Rewoderm^{®}-, Rewocid^{®}- oder Rewopol^{®}-Marken (Rewo), der Emcol^{®}-Marken (Witco), der Standapol^{®}-Marken (Cognis) oder der Rolpon^{®}-Marken (Cesalpinia) erhältlich, und
a6) Tetranatrium-N-(1,2-dicarboxyethyl)-N-Octadecyl-sulfosuccinamat, kommerziell beispielsweise in Form von Aerosol 22^{®}- (Cytec) erhältlich.

Kommerziell sind Sulfosuccinate zum Beispiel als Aerosol^{®}- (Cytec), Agrilan^{®}- oder Lankropol^{®}- (Akzo Nobel), Empimin^{®}- (Huntsman), Cropol^{®}- (Croda), Lutensit^{®}-(BASF), Triton^{®}GR-Reihe (UnionCarbide), Imbirol^{®}-/Madeol^{®}-/Polirol^{®}- (Cesalpinia); Geropon^{®}AR-Reihe oder Geropon^{®}SDS (Rhodia) erhältlich.

Bevorzugte Sulfosuccinate sind z.B. die Natrium-, Kalium- und Ammoniumsalze von Bis(alkyl)sulfosuccinaten, wobei die Alkylreste gleich oder verschieden 4 bis 16 Kohlenstoffatome enthalten, und bevorzugt Butyl-, Hexyl-, Octyl- wie 2-Ethylhexyl- oder Decyl-Reste sind, die linear oder verzweigt sein können.

Der Gesamtanteil des Sulfosuccinats bzw. der Sulfosuccinate in den erfindungsgemäßen herbiziden Mitteln liegt im allgemeinen zwischen 0 und 60 Gew.%, insbesondere im Bereich zwischen 0,5 und 30 Gew.%.

Als optional enthaltene von (A) und (B) verschiedene agrochemische Wirkstoffe (E) kommen für die erfindungsgemäßen herbiziden Mittel beispielsweise bekannte Wirkstoffe wie Herbizide, Insektizide oder Fungizide in Frage, wie sie in z.B. Weed Research 26, 441-445 (1986), oder "The Pesticide Manual", 12th edition, The British Crop Protection Council, 2000, und dort zitierter Literatur beschrieben sind, z.B. in Mischungsformulierungen oder als Tank-Mischpartner. Als literaturbekannte Herbizide, die in den erfindungsgemäßen herbiziden Mitteln enthalten sein können, sind z.B. folgende Wirkstoffe zu nennen Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d.h. Ammoniumsulfamat; anilofos; asulam; atrazin; azafenidine (DPX-R6447), azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil, insbesondere bromoxynil-octanoat und bromoxynil-heptanoat; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; cloransulam-methyl (XDE-565), chlorazifop-butyl, chlorbromuron; chlorbufam; chlorfenac; chlorflurenol-methyl; chloridazon; chlorimuron ethyl; chlornitrofen; chlorotoluron; chloroxuron; chlorpropham; chlorthaldimethyl; chlorthiamid; cinidon-ethyl, cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-D; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimidazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), cinosulfon; dimethipin; dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; indanofan (MK-243), EPTC; esprocarb; ethalfluralin; ethametsulfuron-methyl; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); ethoxysulfuron (aus EP 342569); etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683); 3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683); fenoprop; clomazone, fenoxaprop und fenoxaprop-P sowie deren Ester, z.B. fenoxaprop-P-ethyl und fenoxaprop-ethyl; butroxydim; fenuron; flamprop-methyl; flazasulfuron; flufenacet (BAY-FOE-5043), fluazifop und fluazifop-P und deren Ester, z.B. fluazifop-butyl und fluazifop-P-butyl, florasulam (DE-570); fluchloralin; flumetsulam; fluometuron; flumiclorac und dessen Ester (z.B. Pentylester, S-23031); flumioxazin (S-482); flumipropyn; flupoxam (KNW-739); fluorodifen; fluoroglycofenethyl; flupropacil (UBIC-4243); flupyrsulfuron-methyl natrium (DPX-KE459), fluridone; flurochloridone; fluroxypyr; flurtamone; fluthiacet-methyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenzmethyl; imazamox (AC-299263), imazapyr; imazaquin und Salze wie das Ammoniumsalz; imazapic; imazethapyr; imazosulfuron; iodosulfuron-methyl-natrium (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metam; methazole; methoxyphenone; methyldymron; metobenzuron, mesosulfuron-methyl (WO 95/10507); metobromuron; metolachlor; S-metolachlor, metosulam (XRD 511); metoxuron; metribuzin; maleic hydrazide; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; foramsulfuron (WO 95/01344); naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; pyributicarb; pirifenop-butyl; pretilachlor; primisulfuron-methyl; procyazine; prodiamine; profluralin; proglinazine-ethyl; prometon; prometryn; propachlor; propanil; propaquizafop und dessen Ester; propazine; propham; propisochlor; propoxycarbazone-natrium; propyzamide; prosulfalin; prosulfocarb; prosulfuron (CGA-152005); prynachlor; pyraflufen-ethyl (ET-751), chloridazon; pyrazosulfuron-ethyl; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quizalofop, quizalofop und quizalofop-P und deren Esterderivate z.B. quizalofop-ethyl; quizalofop-P-tefuryl und -ethyl; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester; sulfentrazone (FMC-97285, F-6285); sulfazuron; sulfometuron-methyl; glyphosate-trimesium (ICI-A0224); sulfosulfuron (MON-37500), TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1 H-1,2,4-triazol-1-carboxamid; thenylchlor (NSK-850); thiazafluron; thiazopyr (Mon-13200); thidiazimin (SN-124085); thiobencarb; tiocarbazil; tralkoxydim; tri-allate; triasulfuron; triazofenamide; triclopyr; tridiphane; trietazine; trifluralin; triflusulfuron und Ester (z.B. Methylester, DPX-66037); trimeturon; tsitodef; vernolate; WL 110547, d.h. 5-Phenoxy-1-[3-(trifluormethyl)-phenyl]-1 H-tetrazol; UBH-509; D-489; LS 82-556; KPP-300; KPP-421, MT-146, NC-324; butenachlor (KH-218); DPX-N8189; haloxyfopetotyl (DOWCO-535); DK-8910; flumioxazin (V-53482); PP-600; MBH-001, amicarbazone, aminopyralid, beflubutamid, benzobicyclon, benzofenap, benzfendizone, butafenacil, chlorfenprop, cloprop, daimuron, dichlorprop-P, dimepipeate, dimethenamid-P, fentrazamide, flamprop-M, fluazolate, flucarbazone, flucetosulfuron, foramsulfuron, indanofan, isoxachlortole, isoxaflutole, MCPAthioethyl, mecoprop-P, mesosulfuron, mesotrione, metamifop, orthosulfamuron (IR-5878), penoxsulam, pethoxamid, picolinafen, pinoxaden, profluazol, profoxydim, propoxycarbazone, pyraclonil, pyrazolynate, pyridafol, pyriftalid, pyrimisulfan, sulcotrione, thidiazuron, topramezone, trifloxysulfuron, tritosulfuron.

Die Mischungspartner E), können mit den Sulfonylharnstoffen A) und den Safenern B) zusammen (als fertige Formulierung oder als Tankmischung) oder in beliebiger Reihenfolge nacheinander ausgebracht werden.

Bevorzugte Mischungspartner E) sind Bromoxynil (E1) in sämtlichen seiner Anwendungsformen einschließlich der Salze und Ester, z.B. Bromoxynil-octanoat (E1.1), Bromoxynil-heptanoat (E1.2), Bromoxynil-butyrat (E1.3), Bromoxynil-Natrium (E1.4) und Bromoxynil-Kalium (E1.5); 2,4-D (E2) in sämtlichen seiner Anwendungsformen einschließlich der Salze und Ester, z.B. 2,4-D-Butotyl (E2.1), 2,4-D-butyl (E2.2), 2,4-D-dimethylammonium (E2.3), 2,4-D-diethanolamin (E2.4), 2,4-D-2-ethylhexyl (E2.5), 2,4-D-isooctyl (E2.6), 2,4-D-isopropyl (E2.7), 2,4-D-Natrium (E2.8) und 2,4-D-triethanolamin (E2.9); Dicamba (E3) in sämtlichen seiner Anwendungsformen einschließlich der Salze und Ester, z.B. Dicamba-Natrium (E3.1), Dicamba-Kalium (E3.2) und Dicamba-dimethylammonium (E3.3); Fenoxaprop (E4) in sämtlichen seiner Anwendungsformen einschließlich der Ester, z.B. Fenoxaprop-ethyl (E4.1) und Fenoxaprop-P-ethyl (E4.2); Fluroxypyr (E5) in sämtlichen seiner Anwendungsformen einschließlich der Salze und Ester, z.B. Fluroxypyr-meptyl (E5.1) und Fluroxypyr-2-butoxy-1-methylethyl (E5.2); MCPA (E6) in sämtlichen seiner Anwendungsformen einschließlich der Salze und Ester, z.B. MCPA-Natrium (E6.1), MCPA-Kalium (E6.2), MCPA-2-ethylhexyl (E6.3), MCPAbutotyl (E6.4) und MCPA-dimethylammonium (E6.5); lodosulfuron (E7) in sämtlichen seiner Anwendungsformen einschließlich der Salze und Ester, z.B. lodosulfuron-methyl (E7.1) und lodosulfuron-methyl-Natrium (E7.2); Mesosulfuron (E8) in sämtlichen seiner Anwendungsformen einschließlich der Salze und Ester, z.B. Mesosulfuron-methyl (E8.1) und Mesosulfuron-methyl-Natrium (E8.2); Propoxycarbazone (E9) in sämtlichen seiner Anwendungsformen einschließlich der Salze und Ester, z.B. Propoxycarbazone-Natrium (E9.1).

Bevorzugte erfindungsgemäße Kombinationen (A), (B), (E) sind beispielsweise:
(E1) + (A1.1) + (B1), (E1) + (A1.1) + (B2), (E1) + (A1.1) + (B3), (E1) + (A2.1) + (B1),
(E1) + (A2.1) + (B2), (E1) + (A2.1) + (B3), (E1) + (A3.1) + (B1), (E1) + (A3.1) + (B2),
(E1) + (A3.1) + (B3), (E1) + (A4.1) + (B1), (E1) + (A4.1) + (B2), (E1) + (A4.1) + (B3),
(E1) + (A1.2) + (B1), (E1) + (A1.2) + (B2), (E1) + (A1.2) + (B3), (E1) + (A2.2) + (B1),
(E1) + (A2.2) + (B2), (E1) + (A2.2) + (B3), (E1) + (A3.2) + (B1), (E1) + (A3.2) + (B2),
(E1) + (A3.2) + (B3), (E1) + (A4.2) + (B1), (E1) + (A4.2) + (B2), (E1) + (A4.2) + (B3),
(E1) + (A1.1) + (A1.2) + (B1), (E1) + (A1.1) + (A2.1) + (B1), (E1) + (A1.1) + (A2.2) + (B1), (E1) + (A1.1) + (A3.1) + (B1), (E1) + (A1.1) + (A3.2) + (B1), (E1) + (A1.1) + (A4.1) + (B1), (E1) + (A1.1) + (A4.2) + (B1);
(E1) + (A1.2) + (A2.1) + (B1), (E1) + (A1.2) + (A2.2) + (B1), (E1) + (A1.2) + (A3.1) + (B1), (E1) + (A1.2) + (A3.2) + (B1), (E1) + (A1.2) + (A4.1) + (B1), (E1) + (A1.2) + (A4.2) + (B1);
(E1) + (A2.1) + (A2.2) + (B1), (E1) + (A2.1) + (A3.1) + (B1), (E1) + (A2.1) + (A3.2) + (B1), (E1) + (A2.1) + (A4.1) + (B1), (E1) + (A2.1) + (A4.2) + (B1);
(E1) + (A2.2) + (A3.1) + (B1), (E1) + (A2.2) + (A3.2) + (B1), (E1) + (A2.2) + (A4.1) + (B1), (E1) + (A2.2) + (A4.2) + (B1);
(E1) + (A3.1) + (A3.2) + (B1), (E1) + (A3.1) + (A4.1) + (B1), (E1) + (A3.1) + (A4.2) + (B1); (E1) + (A3.2) + (A4.1) + (B1), (E1) + (A3.2) + (A4.2) + (B1), (E1) + (A4.1) + (A4.2) + (B1);
(E1) + (A1.1) + (A1.2) + (B2), (E1) + (A1.1) + (A2.1) + (B2), (E1) + (A1.1) + (A2.2) + (B2), (E1) + (A1.1) + (A3.1) + (B2), (E1) + (A1.1) + (A3.2) + (B2), (E1) + (A1.1) + (A4.1) + (B2), (E1) + (A1.1) + (A4.2) + (B2);
(E1) + (A1.2) + (A2.1) + (B2), (E1) + (A1.2) + (A2.2) + (B2), (E1) + (A1.2) + (A3.1) + (B2), (E1) + (A1.2) + (A3.2) + (B2), (E1) + (A1.2) + (A4.1) + (B2), (E1) + (A1.2) + (A4.2) + (B2);
(E1) + (A2.1) + (A2.2) + (B2), (E1) + (A2.1) + (A3.1) + (B2), (E1) + (A2.1) + (A3.2) + (B2), (E1) + (A2.1) + (A4.1) + (B2), (E1) + (A2.1) + (A4.2) + (B2);
(E1) + (A2.2) + (A3.1) + (B2), (E1) + (A2.2) + (A3.2) + (B2), (E1) + (A2.2) + (A4.1) + (B2), (E1) + (A2.2) + (A4.2) + (B2);
(E1) + (A3.1) + (A3.2) + (B2), (E1) + (A3.1) + (A4.1) + (B2), (E1) + (A3.1) + (A4.2) + (B2); (E1) + (A3.2) + (A4.1) + (B2), (E1) + (A3.2) + (A4.2) + (B2), (E1) + (A4.1) + (A4.2) + (B2);
(E1) + (A1.1) + (A1.2) + (B3), (E1) + (A1.1) + (A2.1) + (B3), (E1) + (A1.1) + (A2.2) + (B3), (E1) + (A1.1) + (A3.1) + (B3), (E1) + (A1.1) + (A3.2) + (B3), (E1) + (A1.1) + (A4.1) + (B3), (E1) + (A1.1) + (A4.2) + (B3);
(E1) + (A1.2) + (A2.1) + (B3), (E1) + (A1.2) + (A2.2) + (B3), (E1) + (A1.2) + (A3.1) + (B3), (E1) + (A1.2) + (A3.2) + (B3), (E1) + (A1.2) + (A4.1) + (B3), (E1) + (A1.2) + (A4.2) + (B3);
(E1) + (A2.1) + (A2.2) + (B3), (E1) + (A2.1) + (A3.1) + (B3), (E1) + (A2.1) + (A3.2) + (B3), (E1) + (A2.1) + (A4.1) + (B3), (E1) + (A2.1) + (A4.2) + (B3);
(E1) + (A2.2) + (A3.1) + (B3), (E1) + (A2.2) + (A3.2) + (B3), (E1) + (A2.2) + (A4.1) + (B3), (E1) + (A2.2) + (A4.2) + (B3);
(E1) + (A3.1) + (A3.2) + (B3), (E1) + (A3.1) + (A4.1) + (B3), (E1) + (A3.1) + (A4.2) + (B3); (E1) + (A3.2) + (A4.1) + (B3), (E1) + (A3.2) + (A4.2) + (B3), (E1) + (A4.1) + (A4.2) + (B3);
(E1.1) + (A1.1) + (B1), (E1.1) + (A1.1) + (B2), (E1.1) + (A1.1) + (B3), (E1.1) + (A2.1) + (B1), (E1.1) + (A2.1) + (B2), (E1.1) + (A2.1) + (B3), (E1.1) + (A3.1) + (B1), (E1.1) + (A3.1) + (B2), (E1.1) + (A3.1) + (B3), (E1.1) + (A4.1) + (B1), (E1.1) + (A4.1) + (B2),
(E1.1) + (A4.1) + (B3), (E1.1) + (A1.2) + (B1), (E1.1) + (A1.2) + (B2), (E1.1) + (A1.2) + (B3), (E1.1) + (A2.2) + (B1), (E1.1) + (A2.2) + (B2), (E1.1) + (A2.2) + (B3). (E1.1) + (A3.2) + (B1), (E1.1) + (A3.2) + (B2), (E1.1) + (A3.2) + (B3), (E1.1) + (A4.2) + (B1),
(E1.1) + (A4.2) + (B2), (E1.1) + (A4.2) + (B3),
(E1.1) + (A1.1) + (A1.2) + (B1), (E1.1) + (A1.1) + (A2.1) + (B1), (E1.1) + (A1.1) + (A2.2) + (B1), (E1.1) + (A1.1) + (A3.1),+ (B1), (E1.1) + (A1.1) + (A3.2) + (B1), (E1.1) + (A1.1) + (A4.1) + (B1), (E1.1) + (A1.1) + (A4.2) + (B1);
(E1.1) + (A1.2) + (A2.1) + (B1), (E1.1) + (A1.2) + (A2.2) + (B1), (E1.1) + (A1.2) + (A3.1) + (B1), (E1.1) + (A1.2) + (A3.2) + (B1), (E1.1) + (A1.2) + (A4.1) + (B1), (E1.1) + (A1.2) + (A4.2) + (B1);
(E1.1) + (A2.1) + (A2.2) + (B1), (E1.1) + (A2.1) + (A3.1) + (B1), (E1.1) + (A2.1) + (A3.2) + (B1), (E1.1) + (A2.1) + (A4.1) + (B1), (E1.1) + (A2.1) + (A4.2) + (B1);
(E1.1) + (A2.2) + (A3.1) + (B1), (E1.1) + (A2.2) + (A3.2) + (B1), (E1.1) + (A2.2) + (A4.1) + (B1), (E1.1) + (A2.2) + (A4.2) + (B1);
(E1.1) + (A3.1) + (A3.2) + (B1), (E1.1) + (A3.1) + (A4.1) + (B1), (E1.1) + (A3.1) + (A4.2) + (B1); (E1.1) + (A3.2) + (A4.1) + (B1), (E1.1) + (A3.2) + (A4.2) + (B1), (E1.1) +(A4.1)+(A4.2)+(B1);
(E1.1) + (A1.1) + (A1.2) + (B2), (E1.1) + (A1.1) + (A2.1) + (B2), (E1.1) + (A1.1) + (A2.2) + (B2), (E1.1) + (A1.1) + (A3.1) + (B2), (E1.1) + (A1.1) + (A3.2) + (B2), (E1.1) + (A1.1) + (A4.1) + (B2), (E1.1) + (A1.1) + (A4.2) + (B2);
(E1.1) + (A1.2) + (A2.1) + (B2), (E1.1) + (A1.2) + (A2.2) + (B2), (E1.1) + (A1.2) + (A3.1) + (B2), (E1.1) + (A1.2) + (A3.2) + (B2), (E1.1) + (A1.2) + (A4.1) + (B2), (E1.1) + (A1.2) + (A4.2) + (B2);
(E1.1) + (A2.1) + (A2.2) + (B2), (E1.1) + (A2.1) + (A3.1) + (B2), (E1.1) + (A2.1) + (A3.2) + (B2), (E1.1) + (A2.1) + (A4.1) + (B2), (E1.1) + (A2.1) + (A4.2) + (B2);
(E1.1) + (A2.2) + (A3.1) + (B2), (E1.1) + (A2.2) + (A3.2) + (B2), (E1.1) + (A2.2) + (A4.1) + (B2), (E1.1) + (A2.2) + (A4.2) + (B2);
(E1.1) + (A3.1) + (A3.2) + (B2), (E1.1) + (A3.1) + (A4.1) + (B2), (E1.1) + (A3.1) + (A4.2) + (B2); (E1.1) + (A3.2) + (A4.1) + (B2), (E1.1) + (A3.2) + (A4.2) + (B2), (E1.1) + (A4.1) + (A4.2) + (B2);
(E1.1) + (A1.1) + (A1.2) + (B3), (E1.1) + (A1.1) + (A2.1) + (B3), (E1.1) + (A1.1) + (A2.2) + (B3), (E1.1) + (A1.1) + (A3.1) + (B3), (E1.1) + (A1.1) + (A3.2) + (B3), (E1.1) + (A1.1) + (A4.1) + (B3), (E1.1) + (A1.1) + (A4.2) + (B3);
(E1.1) + (A1.2) + (A2.1) + (B3), (E1.1) + (A1.2) + (A2.2) + (B3), (E1.1) + (A1.2) + (A3.1) + (B3), (E1.1) + (A1.2) + (A3.2) + (B3), (E1.1) + (A1.2) + (A4.1) + (B3), (E1.1) + (A1.2) + (A4.2) + (B3);
(E1.1) + (A2.1) + (A2.2) + (B3), (E1.1) + (A2.1) + (A3.1) + (B3), (E1.1) + (A2.1) + (A3.2) + (B3), (E1.1) + (A2.1) + (A4.1) + (B3), (E1.1) + (A2.1) + (A4.2) + (B3);
(E1.1) + (A2.2) + (A3.1) + (B3), (E1.1) + (A2.2) + (A3.2) + (B3), (E1.1) + (A2.2) + (A4.1) + (B3), (E1.1) + (A2.2) + (A4.2) + (B3);
(E1.1) + (A3.1) + (A3.2) + (B3), (E1.1) + (A3.1) + (A4.1) + (B3), (E1.1) + (A3.1) + (A4.2) + (B3); (E1.1) + (A3.2) + (A4.1) + (B3), (E1.1) + (A3.2) + (A4.2) + (B3), (E1.1) +(A4.1)+(A4.2)+(B3);
(E1.2) + (A1.1) + (B1), (E1.2) + (A1.1) + (B2), (E1.2) + (A1.1) + (B3), (E1.2) + (A2.1) + (B1), (E1.2) + (A2.1) + (B2), (E1.2) + (A2.1) + (B3), (E1.2) + (A3.1) + (B1), (E1.2) + (A3.1) + (B2), (E1.2) + (A3.1) + (B3), (E1.2) + (A4.1) + (B1), (E1.2) + (A4.1) + (B2),
(E1.2) + (A4.1) + (B3), (E1.2) + (A1.2) + (B1), (E1.2) + (A1.2) + (B2), (E1.2) + (A1.2) + (B3), (E1.2) + (A2.2) + (B1), (E1.2) + (A2.2) + (B2), (E1.2) + (A2.2) + (B3), (E1.2) + (A3.2) + (B1), (E1.2) + (A3.2) + (B2), (E1.2) + (A3.2) + (B3), (E1.2) + (A4.2) + (B1),
(E1.2) + (A4.2) + (B2), (E1.2) + (A4.2) + (B3),
(E1.2) + (A1.1) + (A1.2) + (B1), (E1.2) + (A1.1) + (A2.1) + (B1), (E1.2) + (A1.1) + (A2.2) + (B1), (E1.2) + (A1.1) + (A3.1) + (B1), (E1.2) + (A1.1) + (A3.2) + (B1), (E1.2) + (A1.1) + (A4.1) + (B1), (E1.2) + (A1.1) + (A4.2) + (B1);
(E1.2) + (A1.2) + (A2.1) + (B1), (E1.2) + (A1.2) + (A2.2) + (B1), (E1.2) + (A1.2) + (A3.1) + (B1), (E1.2) + (A1.2) + (A3.2) + (B1), (E1.2) + (A1.2) + (A4.1) + (B1), (E1.2) . +(A1.2)+(A4.2)+(B1);
(E1.2) + (A2.1) + (A2.2) + (B1), (E1.2) + (A2.1) + (A3.1) + (B1), (E1.2) + (A2.1) + (A3.2) + (B1), (E1.2) + (A2.1) + (A4.1) + (B1), (E1.2) + (A2.1) + (A4.2) + (B1);
(E1.2) + (A2.2) + (A3.1) + (B1), (E1.2) + (A2.2) + (A3.2) + (B1), (E1.2) + (A2.2) + (A4.1) + (B1), (E1.2) + (A2.2) + (A4.2) + (B1);
(E1.2) + (A3.1) + (A3.2) + (B1), (E1.2) + (A3.1) + (A4.1) + (B1), (E1.2) + (A3.1) + (A4.2) + (B1); (E1.2) + (A3.2) + (A4.1) + (B1), (E1.2) + (A3.2) + (A4.2) + (B1), (E1.2) + (A4.1) + (A4.2) + (B1);
(E1.2) + (A1.1) + (A1.2) + (B2), (E1.2) + (A1.1) + (A2.1) + (B2), (E1.2) + (A1.1) + (A2.2) + (B2), (E1.2) + (A1.1) + (A3.1) + (B2), (E1.2) + (A1.1) + (A3.2) + (B2), (E1.2) + (A1.1) + (A4.1) + (B2), (E1.2) + (A1.1) + (A4.2) + (B2);
(E1.2) + (A1.2) + (A2.1) + (B2), (E1.2) + (A1.2) + (A2.2) + (B2), (E1.2) + (A1.2) + (A3.1) + (B2), (E1.2) + (A1.2) + (A3.2) + (B2), (E1.2) + (A1.2) + (A4.1) + (B2), (E1.2) + (A1.2) + (A4.2) + (B2);
(E1.2) + (A2.1) + (A2.2) + (B2), (E1.2) + (A2.1) + (A3.1) + (B2), (E1.2) + (A2.1) + (A3.2) + (B2), (E1.2) + (A2.1) + (A4.1) + (B2), (E1.2) + (A2.1) + (A4.2) + (B2);
(E1.2) + (A2.2) + (A3.1) + (B2), (E1.2) + (A2.2) + (A3.2) + (B2), (E1.2) + (A2.2) + (A4.1) + (B2), (E1.2) + (A2.2) + (A4.2) + (B2);
(E1.2) + (A3.1) + (A3.2) + (B2), (E1.2) + (A3.1) + (A4.1) + (B2), (E1.2) + (A3.1) + (A4.2) + (B2); (E1.2) + (A3.2) + (A4.1) + (B2), (E1.2) + (A3.2) + (A4.2) + (B2), (E1.2) + (A4.1) + (A4.2) + (B2);
(E1.2) + (A1.1) + (A1.2) + (B3), (E1.2) + (A1.1) + (A2.1) + (B3), (E1.2) + (A1.1) + (A2.2) + (B3), (E1.2) + (A1.1) + (A3.1) + (B3), (E1.2) + (A1.1) + (A3.2) + (B3), (E1.2) + (A1.1) + (A4.1) + (B3), (E1.2) + (A1.1) + (A4.2) + (B3);
(E1.2) + (A1.2) + (A2.1) + (B3), (E1.2) + (A1.2) + (A2.2) + (B3), (E1.2) + (A1.2) + (A3.1) + (B3), (E1.2) + (A1.2) + (A3.2) + (B3), (E1.2) + (A1.2) + (A4.1) + (B3), (E1.2) + (A1.2) + (A4.2) + (B3);
(E1.2) + (A2.1) + (A2.2) + (B3), (E1.2) + (A2.1) + (A3.1) + (B3), (E1.2) + (A2.1) + (A3.2) + (B3), (E1.2) + (A2.1) + (A4.1) + (B3), (E1.2) + (A2.1) + (A4.2) + (B3);
(E1.2) + (A2.2) + (A3.1) + (B3), (E1.2) + (A2.2) + (A3.2) + (B3), (E1.2) + (A2.2) + (A4.1) + (B3), (E1.2) + (A2.2) + (A4.2) + (B3);
(E1.2) + (A3.1) + (A3.2) + (B3), (E1.2) + (A3.1) + (A4.1) + (B3), (E1.2) + (A3.1) + (A4.2) + (B3); (E1.2) + (A3.2) + (A4.1) + (B3), (E1.2) + (A3.2) + (A4.2) + (B3), (E1.2) + (A4.1) + (A4.2) + (B3);
(E1.3) + (A1.1) + (B1), (E1.3) + (A1.1) + (B2), (E1.3) + (A1.1) + (B3), (E1.3) + (A2.1) + (B1), (E1.3) + (A2.1) + (B2), (E1.3) + (A2.1) + (B3), (E1.3) + (A3.1) + (B1), (E1.3) + (A3.1) + (B2), (E1.3) + (A3.1) + (B3), (E1.3) + (A4.1) + (B1), (E1.3) + (A4.1) + (B2),
(E1.3) + (A4.1) + (B3), (E1.3) + (A1.2) + (B1), (E1.3) + (A1.2) + (B2), (E1.3) + (A1.2)
+ (B3), (E1.3) + (A2.2) + (B1), (E1.3) + (A2.2) + (B2), (E1.3) + (A2.2) + (B3), (E1.3) + (A3.2) + (B1), (E1.3) + (A3.2) + (B2), (E1.3) + (A3.2) + (B3), (E1.3) + (A4.2) + (B1),
(E1.3) + (A4.2) + (B2), (E1.3) + (A4.2) + (B3),
(E1.3) + (A1.1) + (A1.2) + (B1), (E1.3) + (A1.1) + (A2.1) + (B1), (E1.3) + (A1.1) + (A2.2) + (B1), (E1.3) + (A1.1) + (A3.1) + (B1), (E1.3) + (A1.1) + (A3.2) + (B1), (E1.3) + (A1.1) + (A4.1) + (B1), (E1.3) + (A1.1) + (A4.2) + (B1);
(E1.3) + (A1.2) + (A2.1) + (B1), (E1.3) + (A1.2) + (A2.2) + (B1), (E1.3) + (A1.2) + (A3.1) + (B1), (E1.3) + (A1.2) + (A3.2) + (B1), (E1.3) + (A1.2) + (A4.1) + (B1), (E1.3) + (A1.2) + (A4.2) + (B1);
(E1.3) + (A2.1) + (A2.2) + (B1), (E1.3) + (A2.1) + (A3.1) + (B1), (E1.3) + (A2.1) + (A3.2) + (B1), (E1.3) + (A2.1) + (A4.1) + (B1), (E1.3) + (A2.1) + (A4.2) + (B1);
(E1.3) + (A2.2) + (A3.1) + (B1), (E1.3) + (A2.2) + (A3.2) + (B1), (E1.3) + (A2.2) + (A4.1) + (B1), (E1.3) + (A2.2) + (A4.2) + (B1);
(E1.3) + (A3.1) + (A3.2) + (B1), (E1.3) + (A3.1) + (A4.1) + (B1), (E1.3) + (A3.1) + (A4.2) + (B1); (E1.3) + (A3.2) + (A4.1) + (B1), (E1.3) + (A3.2) + (A4.2) + (B1), (E1.3) + (A4.1) + (A4.2) + (B1);
(E1.3) + (A1.1) + (A1.2) + (B2), (E1.3) + (A1.1) + (A2.1) + (B2), (E1.3) + (A1.1) + (A2.2) + (B2), (E1.3) + (A1.1) + (A3.1) + (B2), (E1.3) + (A1.1) + (A3.2) + (B2), (E1.3) + (A1.1) + (A4.1) + (B2), (E1.3) + (A1.1) + (A4.2) + (B2);
(E1.3) + (A1.2) + (A2.1) + (B2), (E1.3) + (A1.2) + (A2.2) + (B2), (E1.3) + (A1.2) + (A3.1) + (B2), (E1.3) + (A1.2) + (A3.2) + (B2), (E1.3) + (A1.2) + (A4.1) + (B2), (E1.3) + (A1.2) + (A4.2) + (B2);
(E1.3) + (A2.1) + (A2.2) + (B2), (E1.3) + (A2.1) + (A3.1) + (B2), (E1.3) + (A2.1) + (A3.2) + (B2), (E1.3) + (A2.1) + (A4.1) + (B2), (E1.3) + (A2.1) + (A4.2) + (B2);
(E1.3) + (A2.2) + (A3.1) + (B2), (E1.3) + (A2.2) + (A3.2) + (B2), (E1.3) + (A2.2) + (A4.1) + (B2), (E1.3) + (A2.2) + (A4.2) + (B2);
(E1.3) + (A3.1) + (A3.2) + (B2), (E1.3) + (A3.1) + (A4.1) + (B2), (E1.3) + (A3.1) + (A4.2) + (B2); (E1.3) + (A3.2) + (A4.1) + (B2), (E1.3) + (A3.2) + (A4.2) + (B2), (E1.3) +(A4.1)+(A4.2)+(B2);
(E1.3) + (A1.1) + (A1.2) + (B3), (E1.3) + (A1.1) + (A2.1) + (B3), (E1.3) + (A1.1) + (A2.2) + (B3), (E1.3) + (A1.1) + (A3.1) + (B3), (E1.3) + (A1.1) + (A3.2) + (B3), (E1.3) + (A1.1) + (A4.1) + (B3), (E1.3) + (A1.1) + (A4.2) + (B3);
(E1.3) + (A1.2) + (A2.1) + (B3), (E1.3) + (A1.2) + (A2.2) + (B3), (E1.3) + (A1.2) + (A3.1) + (B3), (E1.3) + (A1.2) + (A3.2) + (B3), (E1.3) + (A1.2) + (A4.1) + (B3), (E1.3) + (A1.2) + (A4.2) + (B3);
(E1.3) + (A2.1) + (A2.2) + (B3), (E1.3) + (A2.1) + (A3.1) + (B3), (E1.3) + (A2.1) + (A3.2) + (B3), (E1.3) + (A2.1) + (A4.1) + (B3), (E1.3) + (A2.1) + (A4.2) + (B3);
(E1.3) + (A2.2) + (A3.1) + (B3), (E1.3) + (A2.2) + (A3.2) + (B3), (E1.3) + (A2.2) + (A4.1) + (B3), (E1.3) + (A2.2) + (A4.2) + (B3);
(E1.3) + (A3.1) + (A3.2) + (B3), (E1.3) + (A3.1) + (A4.1) + (B3), (E1.3) + (A3.1) + (A4.2) + (B3); (E1.3) + (A3.2) + (A4.1) + (B3), (E1.3) + (A3.2) + (A4.2) + (B3), (E1.3) + (A4.1) + (A4.2) + (B3);
(E1.4) + (A1.1) + (B1), (E1.4) + (A1.1) + (B2), (E1.4) + (A1.1) + (B3), (E1.4) + (A2.1) + (B1), (E1.4) + (A2.1) + (B2), (E1.4) + (A2.1) + (B3), (E1.4) + (A3.1) + (B1), (E1.4) + (A3.1) + (B2), (E1.4) + (A3.1) + (B3), (E1.4) + (A4.1) + (B1), (E1.4) + (A4.1) + (B2),
(E1.4) + (A4.1) + (B3), (E1.4) + (A1.2) + (B1), (E1.4) + (A1.2) + (B2), (E1.4) + (A1.2) + (B3), (E1.4) + (A2.2) + (B1), (E1.4) + (A2.2) + (B2), (E1.4) + (A2.2) + (B3), (E1.4) + (A3.2) + (B1), (E1.4) + (A3.2) + (B2), (E1.4) + (A3.2) + (B3), (E1.4) + (A4.2) + (B1),
(E1.4) + (A4.2) + (B2), (E1.4) + (A4.2) + (B3),
(E1.4) + (A1.1) + (A1.2) + (B1), (E1.4) + (A1.1) + (A2.1) + (B1), (E1.4) + (A1.1) + (A2.2) + (B1), (E1.4) + (A1.1) + (A3.1) + (B1), (E1.4) + (A1.1) + (A3.2) + (B1), (E1.4) + (A1.1) + (A4.1) + (B1), (E1.4) + (A1.1) + (A4.2) + (B1);
(E1.4) + (A1.2) + (A2.1) + (B1), (E1.4) + (A1.2) + (A2.2) + (B1), (E1.4) + (A1.2) + (A3.1) + (B1), (E1.4) + (A1.2) + (A3.2) + (B1), (E1.4) + (A1.2) + (A4.1) + (B1), (E1.4) + (A1.2) + (A4.2) + (B1);
(E1.4) + (A2.1) + (A2.2) + (B1), (E1.4) + (A2.1) + (A3.1) + (B1), (E1.4) + (A2.1) + (A3.2) + (B1), (E1.4) + (A2.1) + (A4.1) + (B1), (E1.4) + (A2.1) + (A4.2) + (B1);
(E1.4) + (A2.2) + (A3.1) + (B1), (E1.4) + (A2.2) + (A3.2) + (B1), (E1.4) + (A2.2) + (A4.1) + (B1), (E1.4) + (A2.2) + (A4.2) + (B1);
(E1.4) + (A3.1) + (A3.2) + (B1), (E1.4) + (A3.1) + (A4.1) + (B1), (E1.4) + (A3.1) + (A4.2) + (B1); (E1.4) + (A3.2) + (A4.1) + (B1), (E1.4) + (A3.2) + (A4.2) + (B1), (E1.4) +(A4.1)+(A4.2)+(B1);
(E1.4) + (A1.1) + (A1.2) + (B2), (E1.4) + (A1.1) + (A2.1) + (B2), (E1.4) + (A1.1) + (A2.2) + (B2), (E1.4) + (A1.1) + (A3.1) + (B2), (E1.4) + (A1.1) + (A3.2) + (B2), (E1.4) + (A1.1) + (A4.1) + (B2), (E1.4) + (A1.1) + (A4.2) + (B2);
(E1.4) + (A1.2) + (A2.1) + (B2), (E1.4) + (A1.2) + (A2.2) + (B2), (E1.4) + (A1.2) + (A3.1) + (B2), (E1.4) + (A1.2) + (A3.2) + (B2), (E1.4) + (A1.2) + (A4.1) + (B2), (E1.4) + (A1.2) + (A4.2) + (B2);
(E1.4) + (A2.1) + (A2.2) + (B2), (E1.4) + (A2.1) + (A3.1) + (B2), (E1.4) + (A2.1) + (A3.2) + (B2), (E1.4) + (A2.1) + (A4.1) + (B2), (E1.4) + (A2.1) + (A4.2) + (B2);
(E1.4) + (A2.2) + (A3.1) + (B2), (E1.4) + (A2.2) + (A3.2) + (B2), (E1.4) + (A2.2) + (A4.1) + (B2), (E1.4) + (A2.2) + (A4.2) + (B2);
(E1.4) + (A3.1) + (A3.2) + (B2), (E1.4) + (A3.1) + (A4.1) + (B2), (E1.4) + (A3.1) + (A4.2) + (B2); (E1.4) + (A3.2) + (A4.1) + (B2), (E1.4) + (A3.2) + (A4.2) + (B2), (E1.4) + (A4.1) + (A4.2) + (B2);
(E1.4) + (A1.1) + (A1.2) + (B3), (E1.4) + (A1.1) + (A2.1) + (B3), (E1.4) + (A1.1) + (A2.2) + (B3), (E1.4) + (A1.1) + (A3.1) + (B3), (E1.4) + (A1.1) + (A3.2) + (B3), (E1.4) + (A1.1) + (A4.1) + (B3), (E1.4) + (A1.1) + (A4.2) + (B3);
(E1.4) + (A1.2) + (A2.1) + (B3), (E1.4) + (A1.2) + (A2.2) + (B3), (E1.4) + (A1.2) + (A3.1) + (B3), (E1.4) + (A1.2) + (A3.2) + (B3), (E1.4) + (A1.2) + (A4.1) + (B3), (E1.4) + (A1.2) + (A4.2) + (B3);
(E1.4) + (A2.1) + (A2.2) + (B3), (E1.4) + (A2.1) + (A3.1) + (B3), (E1.4) + (A2.1) + (A3.2) + (B3), (E1.4) + (A2.1) + (A4.1) + (B3), (E1.4) + (A2.1) + (A4.2) + (B3);
(E1.4) + (A2.2) + (A3.1) + (B3), (E1.4) + (A2.2) + (A3.2) + (B3), (E1.4) + (A2.2) + (A4.1) + (B3), (E1.4) + (A2.2) + (A4.2) + (B3);
(E1.4) + (A3.1) + (A3.2) + (B3), (E1.4) + (A3.1) + (A4.1) + (B3), (E1.4) + (A3.1) + (A4.2) + (B3); (E1.4) + (A3.2) + (A4.1) + (B3), (E1.4) + (A3.2) + (A4.2) + (B3), (E1.4) + (A4.1) + (A4.2) + (B3);
(E1.5) + (A1.1) + (B1), (E1.5) + (A1.1) + (B2), (E1.5) + (A1.1) + (B3), (E1.5) + (A2.1) + (B1), (E1.5) + (A2.1) + (B2), (E1.5) + (A2.1) + (B3), (E1.5) + (A3.1) + (B1), (E1.5) + (A3.1) + (B2), (E1.5) + (A3.1) + (B3), (E1.5) + (A4.1) + (B1), (E1.5) + (A4.1) + (B2),
(E1.5) + (A4.1) + (B3), (E1.5) + (A1.2) + (B1), (E1.5) + (A1.2) + (B2), (E1.5) + (A1.2) + (B3), (E1.5) + (A2.2) + (B1), (E1.5) + (A2.2) + (B2), (E1.5) + (A2.2) + (B3), (E1.5) + (A3.2) + (B1), (E1.5) + (A3.2) + (B2), (E1.5) + (A3.2) + (B3), (E1.5) + (A4.2) + (B1),
(E1.5) + (A4.2) + (B2), (E1.5) + (A4.2) + (B3), (E1.5) + (A1.1) + (A1.2) + (B1), (E1.5) + (A1.1) + (A2.1) + (B1), (E1.5) + (A1.1) +
(A2.2) + (B1), (E1.5) + (A1.1) + (A3.1) + (B1), (E1.5) + (A1.1) + (A3.2) + (B1), (E1.5) + (A1.1) + (A4.1) + (B1), (E1.5) + (A1.1) + (A4.2) + (B1);
(E1.5) + (A1.2) + (A2.1) + (B1), (E1.5) + (A1.2) + (A2.2) + (B1), (E1.5) + (A1.2) + (A3.1) + (B1), (E1.5) + (A1.2) + (A3.2) + (B1), (E1.5) + (A1.2) + (A4.1) + (B1), (E1.5) + (A1.2) + (A4.2) + (B1);
(E1.5) + (A2.1) + (A2.2) + (B1), (E1.5) + (A2.1) + (A3.1) + (B1), (E1.5) + (A2.1) + (A3.2)+(B1), (E1.5) + (A2.1) + (A4.1) + (B 1), (E1.5) + (A2.1) + (A4.2) + (B1);
(E1.5) + (A2.2) + (A3.1) + (B1), (E1.5) + (A2.2) + (A3.2) + (B1), (E1.5) + (A2.2) + (A4.1) + (B1), (E1.5) + (A2.2) + (A4.2) + (B1);
(E1.5) + (A3.1) + (A3.2) + (B1), (E1.5) + (A3.1) + (A4.1) + (B1), (E1.5) + (A3.1) + (A4.2) + (B1); (E1.5) + (A3.2) + (A4.1) + (B1), (E1.5) + (A3.2) + (A4.2) + (B1), (E1.5) + (A4.1)+(A4.2)+(B1);
(E1.5) + (A1.1) + (A1.2) + (B2), (E1.5) + (A1.1) + (A2.1) + (B2), (E1.5) + (A1.1) + (A2.2) + (B2), (E1.5) + (A1.1) + (A3.1) + (B2), (E1.5) + (A1.1) + (A3.2) + (B2), (E1.5) + (A1.1) + (A4.1) + (B2), (E1.5) + (A1.1) + (A4.2) + (B2);
(E1.5) + (A1.2) + (A2.1) + (B2), (E1.5) + (A1.2) + (A2.2) + (B2), (E1.5) + (A1.2) + (A3.1) + (B2), (E1.5) + (A1.2) + (A3.2) + (B2), (E1.5) + (A1.2) + (A4.1) + (B2), (E1.5) + (A1.2) + (A4.2) + (B2);
(E1.5) + (A2.1) + (A2.2) + (B2), (E1.5) + (A2.1) + (A3.1) + (B2), (E1.5) + (A2.1) + (A3.2) + (B2), (E1.5) + (A2.1) + (A4.1) + (B2), (E1.5) + (A2.1) + (A4.2) + (B2);
(E1.5) + (A2.2) + (A3.1) + (B2), (E1.5) + (A2.2) + (A3.2) + (B2), (E1.5) + (A2.2) + (A4.1) + (B2), (E1.5) + (A2.2) + (A4.2) + (B2);
(E1.5) + (A3.1) + (A3.2) + (B2), (E1.5) + (A3.1) + (A4.1) + (B2), (E1.5) + (A3.1) + (A4.2) + (B2); (E1.5) + (A3.2) + (A4.1) + (B2), (E1.5) + (A3.2) + (A4.2) + (B2), (E1.5) + (A4.1) + (A4.2) + (B2);
(E1.5) + (A1.1) + (A1.2) + (B3), (E1.5) + (A1.1) + (A2.1) + (B3), (E1.5) + (A1.1) + (A2.2) + (B3), (E1.5) + (A1.1) + (A3.1) + (B3), (E1.5) + (A1.1) + (A3.2) + (B3), (E1.5) + (A1.1) + (A4.1) + (B3), (E1.5) + (A1.1) + (A4.2) + (B3);
(E1.5) + (A1.2) + (A2.1) + (B3), (E1.5) + (A1.2) + (A2.2) + (B3), (E1.5) + (A1.2) + (A3.1) + (B3), (E1.5) + (A1.2) + (A3.2) + (B3), (E1.5) + (A1.2) + (A4.1) + (B3), (E1.5) + (A1.2) + (A4.2) + (B3);
(E1.5) + (A2.1) + (A2.2) + (B3), (E1.5) + (A2.1) + (A3.1) + (B3), (E1.5) + (A2.1) + (A3.2) + (B3), (E1.5) + (A2.1) + (A4.1) + (B3), (E1.5) + (A2.1) + (A4.2) + (B3);
(E1.5) + (A2.2) + (A3.1) + (B3), (E1.5) + (A2.2) + (A3.2) + (B3), (E1.5) + (A2.2) + (A4.1) + (B3), (E1.5) + (A2.2) + (A4.2) + (B3);
(E1.5) + (A3.1) + (A3.2) + (B3), (E1.5) + (A3.1) + (A4.1) + (B3), (E1.5) + (A3.1) + (A4.2) + (B3); (E1.5) + (A3.2) + (A4.1) + (B3), (E1.5) + (A3.2) + (A4.2) + (B3), (E1.5) + (A4.1) + (A4.2) + (B3);
(E2) + (A1.1) + (B1), (E2) + (A1.1) + (B2), (E2) + (A1.1) + (B3), (E2) + (A2.1) + (B1),
(E2) + (A2.1) + (B2), (E2) + (A2.1) + (B3), (E2) + (A3.1) + (B1), (E2) + (A3.1) + (B2),
(E2) + (A3.1) + (B3), (E2) + (A4.1) + (B1), (E2) + (A4.1) + (B2), (E2) + (A4.1) + (B3),
(E2) + (A1.2) + (B1), (E2) + (A1.2) + (B2), (E2) + (A1.2) + (B3), (E2) + (A2.2) + (B1),
(E2) + (A2.2) + (B2), (E2) + (A2.2) + (B3), (E2) + (A3.2) + (B1), (E2) + (A3.2) + (B2),
(E2) + (A3.2) + (B3), (E2) + (A4.2) + (B1), (E2) + (A4.2) + (B2), (E2) + (A4.2) + (B3),
(E2) + (A1.1) + (A1.2) + (B1), (E2) + (A1.1) + (A2.1) + (B1), (E2) + (A1.1) + (A2.2) + (B1), (E2) + (A1.1) + (A3.1) + (B1), (E2) + (A1.1) + (A3.2) + (B1), (E2) + (A1.1) + (A4.1) + (B1), (E2) + (A1.1) + (A4.2) + (B1);
(E2) + (A1.2) + (A2.1) + (B1), (E2) + (A1.2) + (A2.2) + (B1), (E2) + (A1.2) + (A3.1) + (B1), (E2) + (A1.2) + (A3.2) + (B1), (E2) + (A1.2) + (A4.1) + (B1), (E2) + (A1.2) + (A4.2) + (B1);
(E2) + (A2.1) + (A2.2) + (B1), (E2) + (A2.1) + (A3.1) + (B1), (E2) + (A2.1) + (A3.2) + (B1), (E2) + (A2.1) + (A4.1) + (B1), (E2) + (A2.1) + (A4.2) + (B1);
(E2) + (A2.2) + (A3.1) + (B1), (E2) + (A2.2) + (A3.2) + (B1), (E2) + (A2.2) + (A4.1) + (B1), (E2) + (A2.2) + (A4.2) + (B1);
(E2) + (A3.1) + (A3.2) + (B1), (E2) + (A3.1) + (A4.1) + (B1), (E2) + (A3.1) + (A4.2) + (B1); (E2) + (A3.2) + (A4.1) + (B1), (E2) + (A3.2) + (A4.2) + (B1), (E2) + (A4.1) + (A4.2) + (B1);
(E2) + (A1.1) + (A1.2) + (B2), (E2) + (A1.1) + (A2.1) + (B2), (E2) + (A1.1) + (A2.2) + (B2), (E2) + (A1.1) + (A3.1) + (B2), (E2) + (A1.1) + (A3.2) + (B2), (E2) + (A1.1) + (A4.1) + (B2), (E2) + (A1.1) + (A4.2) + (B2);
(E2) + (A1.2) + (A2.1) + (B2), (E2) + (A1.2) + (A2.2) + (B2), (E2) + (A1.2) + (A3.1) + (B2), (E2) + (A1.2) + (A3.2) + (B2), (E2) + (A1.2) + (A4.1) + (B2), (E2) + (A1.2) + (A4.2) + (B2);
(E2) + (A2.1) + (A2.2) + (B2), (E2) + (A2.1) + (A3.1) + (B2), (E2) + (A2.1) + (A3.2) + (B2), (E2) + (A2.1) + (A4.1) + (B2), (E2) + (A2.1) + (A4.2) + (B2);
(E2) + (A2.2) + (A3.1) + (B2), (E2) + (A2.2) + (A3.2) + (B2), (E2) + (A2.2) + (A4.1) + (B2), (E2) + (A2.2) + (A4.2) + (B2);
(E2) + (A3.1) + (A3.2) + (B2), (E2) + (A3.1) + (A4.1) + (B2), (E2) + (A3.1) + (A4.2) + (B2); (E2) + (A3.2) + (A4.1) + (B2), (E2) + (A3.2) + (A4.2) + (B2), (E2) + (A4.1) + (A4.2) + (B2);
(E2) + (A1.1) + (A1.2) + (B3), (E2) + (A1.1) + (A2.1) + (B3), (E2) + (A1.1) + (A2.2) + (B3), (E2) + (A1.1) + (A3.1) + (B3), (E2) + (A1.1) + (A3.2) + (B3), (E2) + (A1.1) + (A4.1) + (B3), (E2) + (A1.1) + (A4.2) + (B3);
(E2) + (A1.2) + (A2.1) + (B3), (E2) + (A1.2) + (A2.2) + (B3), (E2) + (A1.2) + (A3.1) + (B3), (E2) + (A1.2) + (A3.2) + (B3), (E2) + (A1.2) + (A4.1) + (B3), (E2) + (A1.2) + (A4.2) + (B3);
(E2) + (A2.1) + (A2.2) + (B3), (E2) + (A2.1) + (A3.1) + (B3), (E2) + (A2.1) + (A3.2) + (B3), (E2) + (A2.1) + (A4.1) + (B3), (E2) + (A2.1) + (A4.2) + (B3);
(E2) + (A2.2) + (A3.1) + (B3), (E2) + (A2.2) + (A3.2) + (B3), (E2) + (A2.2) + (A4.1) + (B3), (E2) + (A2.2) + (A4.2) + (B3);
(E2) + (A3.1) + (A3.2) + (B3), (E2) + (A3.1) + (A4.1) + (B3), (E2) + (A3.1) + (A4.2) + (B3); (E2) + (A3.2) + (A4.1) + (B3), (E2) + (A3.2) + (A4.2) + (B3), (E2) + (A4.1) + (A4.2) + (B3);
(E2.1) + (A1.1) + (B1), (E2.1) + (A1.1) + (B2), (E2.1) + (A1.1) + (B3), (E2.1) + (A2.1) + (B1), (E2.1) + (A2.1) + (B2), (E2.1) + (A2.1) + (B3), (E2.1) + (A3.1) + (B1), (E2.1) + (A3.1) + (B2), (E2.1) + (A3.1) + (B3), (E2.1) + (A4.1) + (B1), (E2.1) + (A4.1) + (B2),
(E2.1) + (A4.1) + (B3), (E2.1) + (A1.2) + (B1), (E2.1) + (A1.2) + (B2), (E2.1) + (A1.2) + (B3), (E2.1) + (A2.2) + (B1), (E2.1) + (A2.2) + (B2), (E2.1) + (A2.2) + (B3), (E2.1) + (A3.2) + (B1), (E2.1) + (A3.2) + (B2), (E2.1) + (A3.2) + (B3), (E2.1) + (A4.2) + (B1),
(E2.1) + (A4.2) + (B2), (E2.1) + (A4.2) + (B3),
(E2.1) + (A1.1) + (A1.2) + (B1), (E2.1) + (A1.1) + (A2.1) + (B1), (E2.1) + (A1.1) + (A2.2) + (B1), (E2.1) + (A1.1) + (A3.1) + (B1), (E2.1) + (A1.1) + (A3.2) + (B1), (E2.1) +(A1.1)+(A4.1)+(B1), (E2.1) + (A1.1) + (A4.2) + (B1);
(E2.1) + (A1.2) + (A2.1) + (B1), (E2.1) + (A1.2) + (A2.2) + (B1), (E2.1) + (A1.2) + (A3.1) + (B1), (E2.1) + (A1.2) + (A3.2) + (B1), (E2.1) + (A1.2) + (A4.1) + (B1), (E2.1) + (A1.2) + (A4.2) + (B1);
(E2.1) + (A2.1) + (A2.2) + (B1), (E2.1) + (A2.1) + (A3.1) + (B1), (E2.1) + (A2.1) + (A3.2) + (B1), (E2.1) + (A2.1) + (A4.1) + (B1), (E2.1) + (A2.1) + (A4.2) + (B1);
(E2.1) + (A2.2) + (A3.1) + (B1), (E2.1) + (A2.2) + (A3.2) + (B1), (E2.1) + (A2.2) + (A4.1) + (B1), (E2.1) + (A2.2) + (A4.2) + (B1);
(E2.1) + (A3.1) + (A3.2) + (B1), (E2.1) + (A3.1) + (A4.1) + (B1), (E2.1) + (A3.1) + (A4.2) + (B1); (E2.1) + (A3.2) + (A4.1) + (B1), (E2.1) + (A3.2) + (A4.2) + (B1), (E2.1) +(A4.1)+(A4.2)+(B1);
(E2.1) + (A1.1) + (A1.2) + (B2), (E2.1) + (A1.1) + (A2.1) + (B2). (E2.1) + (A1.1) + (A2.2) + (B2), (E2.1) + (A1.1) + (A3.1) + (B2), (E2.1) + (A1.1) + (A3.2) + (B2), (E2.1) + (A1.1) + (A4.1) + (B2), (E2.1) + (A1.1) + (A4.2) + (B2);
(E2.1) + (A1.2) + (A2.1) + (B2), (E2.1) + (A1.2) + (A2.2) + (B2), (E2.1) + (A1.2) + (A3.1) + (B2), (E2.1) + (A1.2) + (A3.2) + (B2), (E2.1) + (A1.2) + (A4.1) + (B2), (E2.1) + (A1.2) + (A4.2) + (B2);
(E2.1) + (A2.1) + (A2.2) + (B2), (E2.1) + (A2.1) + (A3.1) + (B2), (E2.1) + (A2.1) + (A3.2) + (B2), (E2.1) + (A2.1) + (A4.1) + (B2), (E2.1) + (A2.1) + (A4.2) + (B2);
(E2.1) + (A2.2) + (A3.1) + (B2), (E2.1) + (A2.2) + (A3.2) + (B2), (E2.1) + (A2.2) + (A4.1) + (B2), (E2.1) + (A2.2) + (A4.2) + (B2);
(E2.1) + (A3.1) + (A3.2) + (B2), (E2.1) + (A3.1) + (A4.1) + (B2), (E2.1) + (A3.1) + (A4.2) + (B2); (E2.1) + (A3.2) + (A4.1) + (B2), (E2.1) + (A3.2) + (A4.2) + (B2), (E2.1) +(A4.1)+(A4.2)+(B2);
(E2.1) + (A1.1) + (A1.2) + (B3), (E2.1) + (A1.1) + (A2.1) + (B3), (E2.1) + (A1.1) + (A2.2) + (B3), (E2.1) + (A1.1) + (A3.1) + (B3), (E2.1) + (A1.1) + (A3.2) + (B3), (E2.1) + (A1.1) + (A4.1) + (B3), (E2.1) + (A1.1) + (A4.2) + (B3);
(E2.1) + (A1.2) + (A2.1) + (B3), (E2.1) + (A1.2) + (A2.2) + (B3), (E2.1) + (A1.2) + (A3.1) + (B3), (E2.1) + (A1.2) + (A3.2) + (B3), (E2.1) + (A1.2) + (A4.1) + (B3), (E2.1) + (A1.2) + (A4.2) + (B3);
(E2.1) + (A2.1) + (A2.2) + (B3), (E2.1) + (A2.1) + (A3.1) + (B3), (E2.1) + (A2.1) + (A3.2) + (B3), (E2.1) + (A2.1) + (A4.1) + (B3), (E2.1) + (A2.1) + (A4.2) + (B3);
(E2.1) + (A2.2) + (A3.1) + (B3), (E2.1) + (A2.2) + (A3.2) + (B3), (E2.1) + (A2.2) + (A4.1) + (B3), (E2.1) + (A2.2) + (A4.2) + (B3);
(E2.1) + (A3.1) + (A3.2) + (B3), (E2.1) + (A3.1) + (A4.1) + (B3), (E2.1) + (A3.1) + (A4.2) + (B3); (E2.1) + (A3.2) + (A4.1) + (B3), (E2.1) + (A3.2) + (A4.2) + (B3), (E2.1) + (A4.1) + (A4.2) + (B3);
(E2.2) + (A1.1) + (B1), (E2.2) + (A1.1) + (B2), (E2.2) + (A1.1) + (B3), (E2.2) + (A2.1) + (B1), (E2.2) + (A2.1) + (B2), (E2.2) + (A2.1) + (B3), (E2.2) + (A3.1) + (B1), (E2.2) + (A3.1) + (B2), (E2.2) + (A3.1) + (B3), (E2.2) + (A4.1) + (B1), (E2.2) + (A4.1) + (B2),
(E2.2) + (A4.1) + (B3), (E2.2) + (A1.2) + (B1), (E2.2) + (A1.2) + (B2), (E2.2) + (A1.2) + (B3), (E2.2) + (A2.2) + (B1), (E2.2) + (A2.2) + (B2), (E2.2) + (A2.2) + (B3), (E2.2) + (A3.2) + (B1), (E2.2) + (A3.2) + (B2), (E2.2) + (A3.2) + (B3), (E2.2) + (A4.2) + (B1),
(E2.2) + (A4.2) + (B2), (E2.2) + (A4.2) + (B3),
(E2.2) + (A1.1) + (A1.2) + (B1), (E2.2) + (A1.1) + (A2.1) + (B1), (E2.2) + (A1.1) + (A2.2) + (B1), (E2.2) + (A1.1) + (A3.1) + (B1), (E2.2) + (A1.1) + (A3.2) + (B1), (E2.2) + (A1.1) + (A4.1) + (B1), (E2.2) + (A1.1) + (A4.2) + (B1);
(E2.2) + (A1.2) + (A2.1) + (B1), (E2.2) + (A1.2) + (A2.2) + (B1), (E2.2) + (A1.2) + (A3.1) + (B1), (E2.2) + (A1.2) + (A3.2) + (B1), (E2.2) + (A1.2) + (A4.1) + (B1), (E2.2) + (A1.2) + (A4.2) + (B1);
(E2.2) + (A2.1) + (A2.2) + (B1), (E2.2) + (A2.1) + (A3.1) + (B1), (E2.2) + (A2.1) + (A3.2) + (B1). (E2.2) + (A2.1) + (A4.1) + (B1), (E2.2) + (A2.1) + (A4.2) + (B1);
(E2.2) + (A2.2) + (A3.1) + (B1), (E2.2) + (A2.2) + (A3.2) + (B1), (E2.2) + (A2.2) + (A4.1) + (B1), (E2.2) + (A2.2) + (A4.2) + (B1);
(E2.2) + (A3.1) + (A3.2) + (B1), (E2.2) + (A3.1) + (A4.1) + (B1), (E2.2) + (A3.1) + (A4.2) + (B1); (E2.2) + (A3.2) + (A4.1) + (B1), (E2.2) + (A3.2) + (A4.2) + (B1), (E2.2) + (A4.1) + (A4.2) + (B1);
(E2.2) + (A1.1) + (A1.2) + (B2), (E2.2) + (A1.1) + (A2.1) + (B2), (E2.2) + (A1.1) + (A2.2) + (B2), (E2.2) + (A1.1) + (A3.1) + (B2), (E2.2) + (A1.1) + (A3.2) + (B2), (E2.2) + (A1.1) + (A4.1) + (B2), (E2.2) + (A1.1) + (A4.2) + (B2);
(E2.2) + (A1.2) + (A2.1) + (B2), (E2.2) + (A1.2) + (A2.2) + (B2), (E2.2) + (A1.2) + (A3.1) + (B2), (E2.2) + (A1.2) + (A3.2) + (B2), (E2.2) + (A1.2) + (A4.1) + (B2), (E2.2) + (A1.2) + (A4.2) + (B2);
(E2.2) + (A2.1) + (A2.2) + (B2), (E2.2) + (A2.1) + (A3.1) + (B2), (E2.2) + (A2.1) + (A3.2) + (B2), (E2.2) + (A2.1) + (A4.1) + (B2), (E2.2) + (A2.1) + (A4.2) + (B2);
(E2.2) + (A2.2) + (A3.1) + (B2), (E2.2) + (A2.2) + (A3.2) + (B2), (E2.2) + (A2.2) + (A4.1) + (B2), (E2.2) + (A2.2) + (A4.2) + (B2);
(E2.2) + (A3.1) + (A3.2) + (B2), (E2.2) + (A3.1) + (A4.1) + (B2), (E2.2) + (A3.1) +
(A4.2) + (B2); (E2.2) + (A3.2) + (A4.1) + (B2), (E2.2) + (A3.2) + (A4.2) + (B2), (E2.2) + (A4.1) + (A4.2) + (B2);
(E2.2) + (A1.1) + (A1.2) + (B3), (E2.2) + (A1.1) + (A2.1) + (B3), (E2.2) + (A1.1) + (A2.2) + (B3), (E2.2) + (A1.1) + (A3.1) + (B3), (E2.2) + (A1.1) + (A3.2) + (B3), (E2.2) + (A1.1) + (A4.1) + (B3), (E2.2) + (A1.1) + (A4.2) + (B3);
(E2.2) + (A1.2) + (A2.1) + (B3), (E2.2) + (A1.2) + (A2.2) + (B3), (E2.2) + (A1.2) + (A3.1) + (B3), (E2.2) + (A1.2) + (A3.2) + (B3), (E2.2) + (A1.2) + (A4.1) + (B3), (E2.2) + (A1.2) + (A4.2) + (B3);
(E2.2) + (A2.1) + (A2.2) + (B3), (E2.2) + (A2.1) + (A3.1) + (B3), (E2.2) + (A2.1) + (A3.2) + (B3), (E2.2) + (A2.1) + (A4.1) + (B3), (E2.2) + (A2.1) + (A4.2) + (B3)-,
(E2.2) + (A2.2) + (A3.1) + (B3), (E2.2) + (A2.2) + (A3.2) + (B3), (E2.2) + (A2.2) + (A4.1) + (B3), (E2.2) + (A2.2) + (A4.2) + (B3);
(E2.2) + (A3.1) + (A3.2) + (B3), (E2.2) + (A3.1) + (A4.1) + (B3), (E2.2) + (A3.1) + (A4.2) + (B3); (E2.2) + (A3.2) + (A4.1) + (B3), (E2.2) + (A3.2) + (A4.2) + (B3), (E2.2) + (A4.1) + (A4.2) + (B3);
(E2.3) + (A1.1) + (B1), (E2.3) + (A1.1) + (B2), (E2.3) + (A1.1) + (B3), (E2.3) + (A2.1) + (B1), (E2.3) + (A2.1) + (B2), (E2.3) + (A2.1) + (B3), (E2.3) + (A3.1) + (B1), (E2.3) + (A3.1) + (B2), (E2.3) + (A3.1) + (B3), (E2.3) + (A4.1) + (B1), (E2.3) + (A4.1) + (B2),
(E2.3) + (A4.1) + (B3), (E2.3) + (A1.2) + (B1), (E2.3) + (A1.2) + (B2), (E2.3) + (A1.2) + (B3), (E2.3) + (A2.2) + (B1), (E2.3) + (A2.2) + (B2), (E2.3) + (A2.2) + (B3), (E2.3) + (A3.2) + (B1), (E2.3) + (A3.2) + (B2), (E2.3) + (A3.2) + (B3), (E2.3) + (A4.2) + (B1),
(E2.3) + (A4.2) + (B2), (E2.3) + (A4.2) + (B3),
(E2.3) + (A1.1) + (A1.2) + (B1), (E2.3) + (A1.1) + (A2.1) + (B1), (E2.3) + (A1.1) + (A2.2) + (B1), (E2.3) + (A1.1) + (A3.1) + (B1), (E2.3) + (A1.1) + (A3.2) + (B1), (E2.3) + (A1.1) + (A4.1) + (B1), (E2.3) + (A1.1) + (A4.2) + (B1);
(E2.3) + (A1.2) + (A2.1) + (B1), (E2.3) + (A1.2) + (A2.2) + (B1), (E2.3) + (A1.2) + (A3.1) + (B1), (E2.3) + (A1.2) + (A3.2) + (B1), (E2.3) + (A1.2) + (A4.1) + (B1), (E2.3) + (A1.2) + (A4.2) + (B1);
(E2.3) + (A2.1) + (A2.2) + (B1), (E2.3) + (A2.1) + (A3.1) + (B1), (E2.3) + (A2.1) + (A3.2) + (B1), (E2.3) + (A2.1) + (A4.1) + (B1), (E2.3) + (A2.1) + (A4.2) + (B1);
(E2.3) + (A2.2) + (A3.1) + (B1), (E2.3) + (A2.2) + (A3.2) + (B1), (E2.3) + (A2.2) + (A4.1) + (B1), (E2.3) + (A2.2) + (A4.2) + (B1);
(E2.3) + (A3.1) + (A3.2) + (B1), (E2.3) + (A3.1) + (A4.1) + (B1), (E2.3) + (A3.1) + (A4.2) + (B1); (E2.3) + (A3.2) + (A4.1) + (B1), (E2.3) + (A3.2) + (A4.2) + (B1), (E2.3) + (A4.1) + (A4.2) + (B1);
(E2.3) + (A1.1) + (A1.2) + (B2), (E2.3) + (A1.1) + (A2.1) + (B2), (E2.3) + (A1.1) + (A2.2) + (B2), (E2.3) + (A1.1) + (A3.1) + (B2), (E2.3) + (A1.1) + (A3.2) + (B2), (E2.3) + (A1.1) + (A4.1) + (B2), (E2.3) + (A1.1) + (A4.2) + (B2);
(E2.3) + (A1.2) + (A2.1) + (B2), (E2.3) + (A1.2) + (A2.2) + (B2), (E2.3) + (A1.2) + (A3.1) + (B2), (E2.3) + (A1.2) + (A3.2) + (B2), (E2.3) + (A1.2) + (A4.1) + (B2), (E2.3) + (A1.2) + (A4.2) + (B2);
(E2.3) + (A2.1) + (A2.2) + (B2), (E2.3) + (A2.1) + (A3.1) + (B2), (E2.3) + (A2.1) + (A3.2) + (B2), (E2.3) + (A2.1) + (A4.1) + (B2), (E2.3) + (A2.1) + (A4.2) + (B2);
(E2.3) + (A2.2) + (A3.1) + (B2), (E2.3) + (A2.2) + (A3.2) + (B2), (E2.3) + (A2.2) + (A4.1) + (B2), (E2.3) + (A2.2) + (A4.2) + (B2);
(E2.3) + (A3.1) + (A3.2) + (B2), (E2.3) + (A3.1) + (A4.1) + (B2), (E2.3) + (A3.1) + (A4.2) + (B2); (E2.3) + (A3.2) + (A4.1) + (B2), (E2.3) + (A3.2) + (A4.2) + (B2), (E2.3) + (A4.1) + (A4.2) + (B2);
(E2.3) + (A1.1) + (A1.2) + (B3), (E2.3) + (A1.1) + (A2.1) + (B3), (E2.3) + (A1.1) + (A2.2) + (B3), (E2.3) + (A1.1) + (A3.1) + (B3), (E2.3) + (A1.1) + (A3.2) + (B3), (E2.3) + (A1.1) + (A4.1) + (B3), (E2.3) + (A1.1) + (A4.2) + (B3);
(E2.3) + (A1.2) + (A2.1) + (B3), (E2.3) + (A1.2) + (A2.2) + (B3), (E2.3) + (A1.2) + (A3.1) + (B3), (E2.3) + (A1.2) + (A3.2) + (B3), (E2.3) + (A1.2) + (A4.1) + (B3), (E2.3) + (A1.2) + (A4.2) + (B3);
(E2.3) + (A2.1) + (A2.2) + (B3), (E2.3) + (A2.1) + (A3.1) + (B3), (E2.3) + (A2.1) + (A3.2) + (B3), (E2.3) + (A2.1) + (A4.1) + (B3), (E2.3) + (A2.1) + (A4.2) + (B3);
(E2.3) + (A2.2) + (A3.1) + (B3), (E2.3) + (A2.2) + (A3.2) + (B3), (E2.3) + (A2.2) + (A4.1) + (B3), (E2.3) + (A2.2) + (A4.2) + (B3);
(E2.3) + (A3.1) + (A3.2) + (B3), (E2.3) + (A3.1) + (A4.1) + (B3), (E2.3) + (A3.1) + (A4.2) + (B3); (E2.3) + (A3.2) + (A4.1) + (B3), (E2.3) + (A3.2) + (A4.2) + (B3), (E2.3) + (A4.1) + (A4.2) + (B3);
(E2.4) + (A1.1) + (B1), (E2.4) + (A1.1) + (B2), (E2.4) + (A1.1) + (B3), (E2.4) + (A2.1) + (B1), (E2.4) + (A2.1) + (B2), (E2.4) + (A2.1) + (B3), (E2.4) + (A3.1) + (B1), (E2.4) + (A3.1) + (B2), (E2.4) + (A3.1) + (B3), (E2.4) + (A4.1) + (B1), (E2.4) + (A4.1) + (B2),
(E2.4) + (A4.1) + (B3), (E2.4) + (A1.2) + (B1), (E2.4) + (A1.2) + (B2), (E2.4) + (A1.2) + (B3), (E2.4) + (A2.2) + (B1), (E2.4) + (A2.2) + (B2), (E2.4) + (A2.2) + (B3), (E2.4) + (A3.2) + (B1), (E2.4) + (A3.2) + (B2), (E2.4) + (A3.2) + (B3), (E2.4) + (A4.2) + (B1),
(E2.4) + (A4.2) + (B2), (E2.4) + (A4.2) + (B3),
(E2.4) + (A1.1) + (A1.2) + (B1), (E2.4) + (A1.1) + (A2.1) + (B1), (E2.4) + (A1.1) + (A2.2) + (B1), (E2.4) + (A1.1) + (A3.1) + (B1), (E2.4) + (A1.1) + (A3.2) + (B1), (E2.4) + (A1.1) + (A4.1) + (B1), (E2.4) + (A1.1) + (A4.2) + (B1);
(E2.4) + (A1.2) + (A2.1) + (B1), (E2.4) + (A1.2) + (A2.2) + (B1), (E2.4) + (A1.2) + (A3.1) + (B1), (E2.4) + (A1.2) + (A3.2) + (B1), (E2.4) + (A1.2) + (A4.1) + (B1), (E2.4) + (A1.2) + (A4.2) + (B1);
(E2.4) + (A2.1) + (A2.2) + (B1), (E2.4) + (A2.1) + (A3.1) + (B1), (E2.4) + (A2.1) + (A3.2) + (B1), (E2.4) + (A2.1) + (A4.1) + (B1), (E2.4) + (A2.1) + (A4.2) + (B1);
(E2.4) + (A2.2) + (A3.1) + (B1), (E2.4) + (A2.2) + (A3.2) + (B1), (E2.4) + (A2.2) + (A4.1) + (B1), (E2.4) + (A2.2) + (A4.2) + (B1);
(E2.4) + (A3.1) + (A3.2) + (B1), (E2.4) + (A3.1) + (A4.1) + (B1), (E2.4) + (A3.1) + (A4.2) + (B1); (E2.4) + (A3.2) + (A4.1) + (B1), (E2.4) + (A3.2) + (A4.2) + (B1), (E2.4) +(A4.1)+(A4.2)+(B1);
(E2.4) + (A1.1) + (A1.2) + (B2), (E2.4) + (A1.1) + (A2.1) + (B2), (E2.4) + (A1.1) + (A2.2) + (B2), (E2.4) + (A1.1) + (A3.1) + (B2), (E2.4) + (A1.1) + (A3.2) + (B2), (E2.4) + (A1.1) + (A4.1) + (B2), (E2.4) + (A1.1) + (A4.2) + (B2);
(E2.4) + (A1.2) + (A2.1) + (B2), (E2.4) + (A1.2) + (A2.2) + (B2), (E2.4) + (A1.2) + (A3.1) + (B2), (E2.4) + (A1.2) + (A3.2) + (B2), (E2.4) + (A1.2) + (A4.1) + (B2), (E2.4) + (A1.2) + (A4.2) + (B2);
(E2.4) + (A2.1) + (A2.2) + (B2), (E2.4) + (A2.1) + (A3.1) + (B2), (E2.4) + (A2.1) + (A3.2) + (B2), (E2.4) + (A2.1) + (A4.1) + (B2), (E2.4) + (A2.1) + (A4.2) + (B2);
(E2.4) + (A2.2) + (A3.1) + (B2), (E2.4) + (A2.2) + (A3.2) + (B2), (E2.4) + (A2.2) + (A4.1) + (B2), (E2.4) + (A2.2) + (A4.2) + (B2);
(E2.4) + (A3.1) + (A3.2) + (B2), (E2.4) + (A3.1) + (A4.1) + (B2), (E2.4) + (A3.1) + (A4.2) + (B2); (E2.4) + (A3.2) + (A4.1) + (B2), (E2.4) + (A3.2) + (A4.2) + (B2), (E2.4) + (A4.1) + (A4.2) + (B2);
(E2.4) + (A1.1) + (A1.2) + (B3), (E2.4) + (A1.1) + (A2.1) + (B3), (E2.4) + (A1.1) + (A2.2) + (B3), (E2.4) + (A1.1) + (A3.1) + (B3), (E2.4) + (A1.1) + (A3.2) + (B3), (E2.4) + (A1.1) + (A4.1) + (B3), (E2.4) + (A1.1) + (A4.2) + (B3);
(E2.4) + (A1.2) + (A2.1) + (B3), (E2.4) + (A1.2) + (A2.2) + (B3), (E2.4) + (A1.2) + (A3.1) + (B3), (E2.4) + (A1.2) + (A3.2) + (B3), (E2.4)+ (A1.2) + (A4.1) + (B3), (E2.4) + (A1.2) + (A4.2) + (B3);
(E2.4) + (A2.1) + (A2.2) + (B3), (E2.4) + (A2.1) + (A3.1) + (B3), (E2.4) + (A2.1) + (A3.2) + (B3), (E2.4) + (A2.1) + (A4.1) + (B3), (E2.4) + (A2.1) + (A4.2) + (B3);
(E2.4) + (A2.2) + (A3.1) + (B3), (E2.4) + (A2.2) + (A3.2) + (B3), (E2.4) + (A2.2) + (A4.1) + (B3), (E2.4) + (A2.2) + (A4.2) + (B3);
(E2.4) + (A3.1) + (A3.2) + (B3), (E2.4) + (A3.1) + (A4.1) + (B3), (E2.4) + (A3.1) + (A4.2) + (B3); (E2.4) + (A3.2) + (A4.1) + (B3), (E2.4) + (A3.2) + (A4.2) + (B3), (E2.4) + (A4.1) + (A4.2) + (B3);
(E2.5) + (A1.1) + (B1), (E2.5) + (A1.1) + (B2), (E2.5) + (A1.1) + (B3), (E2.5) + (A2.1) + (B1), (E2.5) + (A2.1) + (B2), (E2.5) + (A2.1) + (B3), (E2.5) + (A3.1) + (B1), (E2.5) + (A3.1) + (B2), (E2.5) + (A3.1) + (B3), (E2.5) + (A4.1) + (B1), (E2.5) + (A4.1) + (B2),
(E2.5) + (A4.1) + (B3), (E2.5) + (A1.2) + (B1), (E2.5) + (A1.2) + (B2), (E2.5) + (A1.2) + (B3), (E2.5) + (A2.2) + (B1), (E2.5) + (A2.2) + (B2), (E2.5) + (A2.2) + (B3), (E2.5) + (A3.2) + (B1), (E2.5) + (A3.2) + (B2), (E2.5) + (A3.2) + (B3), (E2.5) + (A4.2) + (B1),
(E2.5) + (A4.2) + (B2), (E2.5) + (A4.2) + (B3),
(E2.5) + (A1.1) + (A1.2) + (B1), (E2.5) + (A1.1) + (A2.1) + (B1), (E2.5) + (A1.1) + (A2.2) + (B1), (E2.5) + (A1.1) + (A3.1) + (B1), (E2.5) + (A1.1) + (A3.2) + (B1), (E2.5) + (A1.1) + (A4.1) + (B1), (E2.5) + (A1.1) + (A4.2) + (B1);
(E2.5) + (A1.2) + (A2.1) + (B1), (E2.5) + (A1.2) + (A2.2) + (B1), (E2.5) + (A1.2) + (A3.1) + (B1), (E2.5) + (A1.2) + (A3.2) + (B1), (E2.5) + (A1.2) + (A4.1) + (B1), (E2.5) +(A1.2)+(A4.2)+(B1);
(E2.5) + (A2.1) + (A2.2) + (B1), (E2.5) + (A2.1) + (A3.1) + (B1), (E2.5) + (A2.1) + (A3.2) + (B1), (E2.5) + (A2.1) + (A4.1) + (B1), (E2.5) + (A2.1) + (A4.2) + (B1);
(E2.5) + (A2.2) + (A3.1) + (B1), (E2.5) + (A2.2) + (A3.2) + (B1), (E2.5) + (A2.2) + (A4.1) + (B1), (E2.5) + (A2.2) + (A4.2) + (B1);
(E2.5) + (A3.1) + (A3.2) +(B1), (E2.5) + (A3.1) + (A4.1) + (B1), (E2.5) + (A3.1) + (A4.2) + (B1); (E2.5) + (A3.2) + (A4.1) + (B1), (E2.5) + (A3.2) + (A4.2) + (B1), (E2.5) + (A4.1) + (A4.2)+(B1);
(E2.5) + (A1.1) + (A1.2) + (B2), (E2.5) + (A1.1) + (A2.1) + (B2), (E2.5) + (A1.1) + (A2.2) + (B2), (E2.5) + (A1.1) + (A3.1) + (B2), (E2.5) + (A1.1) + (A3.2) + (B2), (E2.5) + (A1.1) + (A4.1) + (B2), (E2.5) + (A1.1) + (A4.2) + (B2);
(E2.5) + (A1.2) + (A2.1) + (B2), (E2.5) + (A1.2) + (A2.2) + (B2), (E2.5) + (A1.2) + (A3.1) + (B2), (E2.5) + (A1.2) + (A3.2) + (B2), (E2.5) + (A1.2) + (A4.1) + (B2), (E2.5) + (A1.2) + (A4.2) + (B2);
(E2.5) + (A2.1) + (A2.2) + (B2), (E2.5) + (A2.1) + (A3.1) + (B2), (E2.5) + (A2.1) + (A3.2) + (B2), (E2.5) + (A2.1) + (A4.1) + (B2), (E2.5) + (A2.1) + (A4.2) + (B2);
(E2.5) + (A2.2) + (A3.1) + (B2), (E2.5) + (A2.2) + (A3.2) + (B2), (E2.5) + (A2.2) + (A4.1) + (B2), (E2.5) + (A2.2) + (A4.2) + (B2);
(E2.5) + (A3.1) + (A3.2) + (B2), (E2.5) + (A3.1) + (A4.1) + (B2), (E2.5) + (A3.1) + (A4.2) + (B2); (E2.5) + (A3.2) + (A4.1) + (B2), (E2.5) + (A3.2) + (A4.2) + (B2), (E2.5) + (A4.1) + (A4.2) + (B2);
(E2.5) + (A1.1) + (A1.2) + (B3), (E2.5) + (A1.1) + (A2.1) + (B3), (E2.5) + (A1.1) + (A2.2) + (B3), (E2.5) + (A1.1) + (A3.1) + (B3), (E2.5) + (A1.1) + (A3.2) + (B3), (E2.5) + (A1.1) + (A4.1) + (B3), (E2.5) + (A1.1) + (A4.2) + (B3);
(E2.5) + (A1.2) + (A2.1) + (B3), (E2.5) + (A1.2) + (A2.2) + (B3), (E2.5) + (A1.2) + (A3.1) + (B3), (E2.5) + (A1.2) + (A3.2) + (B3), (E2.5) + (A1.2) + (A4.1) + (B3), (E2.5) + (A1.2) + (A4.2) + (B3);
(E2.5) + (A2.1) + (A2.2) + (B3), (E2.5) + (A2.1) + (A3.1) + (B3), (E2.5) + (A2.1) + (A3.2) + (B3), (E2.5) + (A2.1) + (A4.1) + (B3), (E2.5) + (A2.1) + (A4.2) + (B3);
(E2.5) + (A2.2) + (A3.1) + (B3), (E2.5) + (A2.2) + (A3.2) + (B3), (E2.5) + (A2.2) + (A4.1) + (B3), (E2.5) + (A2.2) + (A4.2) + (B3);
(E2.5) + (A3.1) + (A3.2) + (B3), (E2.5) + (A3.1) + (A4.1) + (B3), (E2.5) + (A3.1) + (A4.2) + (B3); (E2.5) + (A3.2) + (A4.1) + (B3), (E2.5) + (A3.2) + (A4.2) + (B3), (E2.5) + (A4.1) + (A4.2) + (B3);
(E2.6) + (A1.1) + (B1), (E2.6) + (A1.1) + (B2), (E2.6) + (A1.1) + (B3), (E2.6) + (A2.1) + (B1), (E2.6) + (A2.1) + (B2), (E2.6) + (A2.1) + (B3), (E2.6) + (A3.1) + (B1), (E2.6) + (A3.1) + (B2), (E2.6) + (A3.1) + (B3), (E2.6) + (A4.1) + (B1), (E2.6) + (A4.1) + (B2),
(E2.6) + (A4.1) + (B3), (E2.6) + (A1.2) + (B1), (E2.6) + (A1.2) + (B2), (E2.6) + (A1.2) + (B3), (E2.6) + (A2.2) + (B1), (E2.6) + (A2.2) + (B2), (E2.6) + (A2.2) + (B3), (E2.6) + (A3.2) + (B1), (E2.6) + (A3.2) + (B2), (E2.6) + (A3.2) + (B3), (E2.6) + (A4.2) + (B1),
(E2.6) + (A4.2) + (B2), (E2.6) + (A4.2) + (B3),
(E2.6) + (A1.1) + (A1.2) + (B1), (E2.6) + (A1.1) + (A2.1) + (B1), (E2.6) + (A1.1) + (A2.2) + (B1), (E2.6) + (A1.1) + (A3.1) + (B1), (E2.6) + (A1.1) + (A3.2) + (B1), (E2.6) + (A1.1) + (A4.1) + (B1), (E2.6) + (A1.1) + (A4.2) + (B1);
(E2.6) + (A1.2) + (A2.1) + (B1), (E2.6) + (A1.2) + (A2.2) + (B1), (E2.6) + (A1.2) + (A3.1) + (B1), (E2.6) + (A1.2) + (A3.2) + (B1), (E2.6) + (A1.2) + (A4.1) + (B1), (E2.6) + (A1.2) + (A4.2) + (B1);
(E2.6) + (A2.1) + (A2.2) + (B1), (E2.6) + (A2.1) + (A3.1) + (B1), (E2.6) + (A2.1) + (A3.2) + (B1), (E2.6) + (A2.1) + (A4.1) + (B1), (E2.6) + (A2.1) + (A4.2) + (B1);
(E2.6) + (A2.2) + (A3.1) + (B1), (E2.6) + (A2.2) + (A3.2) + (B1), (E2.6) + (A2.2) + (A4.1) + (B1), (E2.6) + (A2.2) + (A4.2) + (B1);
(E2.6) + (A3.1) + (A3.2) + (B1), (E2.6) + (A3.1) + (A4.1) + (B1), (E2.6) + (A3.1) + (A4.2) + (B1); (E2.6) + (A3.2) + (A4.1) + (B1), (E2.6) + (A3.2) + (A4.2) + (B1), (E2.6) +(A4.1)+(A4.2)+(B1);
(E2.6) + (A1.1) + (A1.2) + (B2), (E2.6) + (A1.1) + (A2.1) + (B2), (E2.6) + (A1.1) + (A2.2) + (B2), (E2.6) + (A1.1) + (A3.1) + (B2), (E2.6) + (A1.1) + (A3.2) + (B2), (E2.6) + (A1.1) + (A4.1) + (B2), (E2.6) + (A1.1) + (A4.2) + (B2);
(E2.6) + (A1.2) + (A2.1) + (B2), (E2.6) + (A1.2) + (A2.2) + (B2), (E2.6) + (A1.2) + (A3.1) + (B2), (E2.6) + (A1.2) + (A3.2) + (B2), (E2.6) + (A1.2) + (A4.1) + (B2), (E2.6) + (A1.2) + (A4.2) + (B2);
(E2.6) + (A2.1) + (A2.2) + (B2), (E2.6) + (A2.1) + (A3.1) + (B2). (E2.6) + (A2.1) + (A3.2) + (B2), (E2.6) + (A2.1) + (A4.1) + (B2), (E2.6) + (A2.1) + (A4.2) + (B2);
(E2.6) + (A2.2) + (A3.1) + (B2), (E2.6) + (A2.2) + (A3.2) + (B2), (E2.6) + (A2.2) + (A4.1) + (B2), (E2.6) + (A2.2) + (A4.2) + (B2);
(E2.6) + (A3.1) + (A3.2) + (B2), (E2.6) + (A3.1) + (A4.1) + (B2), (E2.6) + (A3.1) + (A4.2) + (B2); (E2.6) + (A3.2) + (A4.1) + (B2), (E2.6) + (A3.2) + (A4.2) + (B2), (E2.6) + (A4.1) + (A4.2) + (B2);
(E2.6) + (A1.1) + (A1.2) + (B3), (E2.6) + (A1.1) + (A2.1) + (B3), (E2.6) + (A1.1) + (A2.2) + (B3), (E2.6) + (A1.1) + (A3.1) + (B3), (E2.6) + (A1.1) + (A3.2) + (B3), (E2.6) + (A1.1) + (A4.1) + (B3), (E2.6) + (A1.1) + (A4.2) + (B3);
(E2.6) + (A1.2) + (A2.1) + (B3), (E2.6) + (A1.2) + (A2.2) + (B3), (E2.6) + (A1.2) + (A3.1) + (B3), (E2.6) + (A1.2) + (A3.2) + (B3), (E2.6) + (A1.2) + (A4.1) + (B3), (E2.6) + (A1.2) + (A4.2) + (B3);
(E2.6) + (A2.1) + (A2.2) + (B3), (E2.6) + (A2.1) + (A3.1) + (B3), (E2.6) + (A2.1) + (A3.2) + (B3), (E2.6) + (A2.1) + (A4.1) + (B3), (E2.6) + (A2.1) + (A4.2) + (B3);
(E2.6) + (A2.2) + (A3.1) + (B3), (E2.6) + (A2.2) + (A3.2) + (B3), (E2.6) + (A2.2) + (A4.1) + (B3), (E2.6) + (A2.2) + (A4.2) + (B3);
(E2.6) + (A3.1) + (A3.2) + (B3), (E2.6) + (A3.1) + (A4.1) + (B3), (E2.6) + (A3.1) + (A4.2) + (B3); (E2.6) + (A3.2) + (A4.1) + (B3), (E2.6) + (A3.2) (A4.2) + (B3), (E2.6) +(A4.1)+(A4.2)+(B3);
(E2.7) + (A1.1) + (B1), (E2.7) + (A1.1) + (B2), (E2.7) + (A1.1) + (B3), (E2.7) + (A2.1) + (B1), (E2.7) + (A2.1) + (B2), (E2.7) + (A2.1) + (B3), (E2.7) + (A3.1) + (B1), (E2.7) + (A3.1) + (B2), (E2.7) + (A3.1) + (B3), (E2.7) + (A4.1) + (B1), (E2.7) + (A4.1) + (B2),
(E2.7) + (A4.1) + (B3), (E2.7) + (A1.2) + (B1), (E2.7) + (A1.2) + (B2), (E2.7) + (A1.2) + (B3), (E2.7) + (A2.2) + (B1), (E2.7) + (A2.2) + (B2), (E2.7) + (A2.2) + (B3), (E2.7) + (A3.2) + (B1), (E2.7) + (A3.2) + (B2), (E2.7) + (A3.2) + (B3), (E2.7) + (A4.2) + (B1),
(E2.7) + (A4.2) + (B2), (E2.7) + (A4.2) + (B3),
(E2.7) + (A1.1) + (A1.2) + (B1), (E2.7) + (A1.1) + (A2.1) + (B1), (E2.7) + (A1.1) + (A2.2) + (B1), (E2.7) + (A1.1) + (A3.1) + (B1), (E2.7) + (A1.1) + (A3.2) + (B1), (E2.7) + (A1.1) + (A4.1) + (B1), (E2.7) + (A1.1) + (A4.2) + (B1);
(E2.7) + (A1.2) + (A2.1) + (B1), (E2.7) + (A1.2) + (A2.2) + (B1), (E2.7) + (A1.2) + (A3.1) + (B1), (E2.7) + (A1.2) + (A3.2) + (B1), (E2.7) + (A1.2) + (A4.1) + (B1), (E2.7) + (A1.2) + (A4.2) + (B1);
(E2.7) + (A2.1) + (A2.2) + (B1), (E2.7) + (A2.1) + (A3.1) + (B1), (E2.7) + (A2.1) + (A3.2) + (B1), (E2.7) + (A2.1) + (A4.1) + (B1), (E2.7) + (A2.1) + (A4.2) + (B1);
(E2.7) + (A2.2) + (A3.1) + (B1), (E2.7) + (A2.2) + (A3.2) + (B1), (E2.7) + (A2.2) + (A4.1) + (B1), (E2.7) + (A2.2) + (A4.2) + (B1);
(E2.7) + (A3.1) + (A3.2) + (B1), (E2.7) + (A3.1) + (A4.1) + (B1), (E2.7) + (A3.1)+ (A4.2) + (B1); (E2.7) + (A3.2) + (A4.1) + (B1), (E2.7) + (A3.2) + (A4.2) + (B1), (E2.7) +(A4.1)+(A4.2)+(B1);
(E2.7) + (A1.1) + (A1.2) + (B2), (E2.7) + (A1.1) + (A2.1) + (B2), (E2.7) + (A1.1) + (A2.2) + (B2), (E2.7) + (A1.1) + (A3.1) + (B2), (E2.7) + (A1.1) + (A3.2) + (B2), (E2.7) + (A1.1) + (A4.1) + (B2), (E2.7) + (A1.1) + (A4.2) + (B2);
(E2.7) + (A1.2) + (A2.1) + (B2), (E2.7) + (A1.2) + (A2.2) + (B2), (E2.7) + (A1.2) + (A3.1) + (B2), (E2.7) + (A1.2) + (A3.2) + (B2), (E2.7) + (A1.2) + (A4.1) + (B2), (E2.7) + (A1.2) + (A4.2) + (B2);
(E2.7) + (A2.1) + (A2.2) + (B2), (E2.7) + (A2.1) + (A3.1) + (B2), (E2.7) + (A2.1) + (A3.2) + (B2), (E2.7) + (A2.1) + (A4.1) + (B2), (E2.7) + (A2.1) + (A4.2) + (B2);
(E2.7) + (A2.2) + (A3.1) + (B2), (E2.7) + (A2.2) + (A3.2) + (B2), (E2.7) + (A2.2) + (A4.1) + (B2), (E2.7) + (A2.2) + (A4.2) + (B2);
(E2.7) + (A3.1) + (A3.2) + (B2), (E2.7) + (A3.1) + (A4.1) + (B2), (E2.7) + (A3.1) + (A4.2) + (B2); (E2.7) + (A3.2) + (A4.1) + (B2), (E2.7) + (A3.2) + (A4.2) + (B2), (E2.7) + (A4.1) + (A4.2) + (B2);
(E2.7) + (A1.1) + (A1.2) + (B3), (E2.7) + (A1.1) + (A2.1) + (B3), (E2.7) + (A1.1) + (A2.2) + (B3), (E2.7) + (A1.1) + (A3.1) + (B3), (E2.7) + (A1.1) + (A3.2) + (B3), (E2.7) + (A1.1) + (A4.1) + (B3), (E2.7) + (A1.1) + (A4.2) + (B3);
(E2.7) + (A1.2) + (A2.1) + (B3), (E2.7) + (A1.2) + (A2.2) + (B3), (E2.7) + (A1.2) + (A3.1) + (B3), (E2.7) + (A1.2) + (A3.2) + (B3), (E2.7) + (A1.2) + (A4.1) + (B3), (E2.7) + (A1.2) + (A4.2) + (B3);
(E2.7) + (A2.1) + (A2.2) + (B3), (E2.7) + (A2.1) + (A3.1) + (B3), (E2.7) + (A2.1) + (A3.2) + (B3), (E2.7) + (A2.1) + (A4.1) + (B3), (E2.7) + (A2.1) + (A4.2) + (B3);
(E2.7) + (A2.2) + (A3.1) + (B3), (E2.7) + (A2.2) + (A3.2) + (B3), (E2.7) + (A2.2) + (A4.1) + (B3), (E2.7) + (A2.2) + (A4.2) + (B3);
(E2.7) + (A3.1) + (A3.2) + (B3), (E2.7) + (A3.1) + (A4.1) + (B3), (E2.7) + (A3.1) + (A4.2) + (B3); (E2.7) + (A3.2) + (A4.1) + (B3), (E2.7) + (A3.2) + (A4.2) + (B3), (E2.7) + (A4.1) + (A4.2) + (B3);
(E2.8) + (A1.1) + (B1), (E2.8) + (A1.1) + (B2), (E2.8) + (A1.1) + (B3), (E2.8) + (A2.1) + (B1), (E2.8) + (A2.1) + (B2), (E2.8) + (A2.1) + (B3), (E2.8) + (A3.1) + (B1), (E2.8) + (A3.1) + (B2), (E2.8) + (A3.1) + (B3), (E2.8) + (A4.1) + (B1), (E2.8) + (A4.1) + (B2),
(E2.8) + (A4.1) + (B3), (E2.8) + (A1.2) + (B1), (E2.8) + (A1.2) + (B2). (E2.8) + (A1.2) + (B3), (E2.8) + (A2.2) + (B1), (E2.8) + (A2.2) + (B2), (E2.8) + (A2.2) + (B3), (E2.8) + (A3.2) + (B1), (E2.8) + (A3.2) + (B2), (E2.8) + (A3.2) + (B3), (E2.8) + (A4.2) + (B1),
(E2.8) + (A4.2) + (B2), (E2.8) + (A4.2) + (B3),
(E2.8) + (A1.1) + (A1.2) + (B1), (E2.8) + (A1.1) + (A2.1) + (B1), (E2.8) + (A1.1) + (A2.2) + (B1), (E2.8) + (A1.1) + (A3.1) + (B1), (E2.8) + (A1.1) + (A3.2) + (B1), (E2.8) + (A1.1) + (A4.1) + (B1), (E2.8) + (A1.1) + (A4.2) + (B1);
(E2.8) + (A1.2) + (A2.1) + (B1), (E2.8) + (A1.2) + (A2.2) + (B1), (E2.8) + (A1.2) +
(A3.1) + (B1), (E2.8) + (A1.2) + (A3.2) + (B1), (E2.8) + (A1.2) + (A4.1) + (B1), (E2.8) + (A1.2) + (A4.2) + (B1);
(E2.8) + (A2.1) + (A2.2) + (B1), (E2.8) + (A2.1) + (A3.1) + (B1), (E2.8) + (A2.1) + (A3.2) + (B1), (E2.8) + (A2.1) + (A4.1) + (B1), (E2.8) + (A2.1) + (A4.2) + (B1);
(E2.8) + (A2.2) + (A3.1) + (B1), (E2.8) + (A2.2) + (A3.2) + (B1), (E2.8) + (A2.2) + (A4.1) + (B1), (E2.8) + (A2.2) + (A4.2) + (B1);
(E2.8) + (A3.1) + (A3.2) + (B1), (E2.8) + (A3.1) + (A4.1) + (B1), (E2.8) + (A3.1) + (A4.2) + (B1); (E2.8) + (A3.2) + (A4.1) + (B1), (E2.8) + (A3.2) + (A4.2) + (B1), (E2.8) + (A4.1) + (A4.2) + (B1);
(E2.8) + (A1.1) + (A1.2) + (B2), (E2.8) + (A1.1) + (A2.1) + (B2), (E2.8) + (A1.1) + (A2.2) + (B2), (E2.8) + (A1.1) + (A3.1) + (B2), (E2.8) + (A1.1) + (A3.2) + (B2), (E2.8) + (A1.1) + (A4.1) + (B2), (E2.8) + (A1.1) + (A4.2) + (B2);
(E2.8) + (A1.2) + (A2.1) + (B2), (E2.8) + (A1.2) + (A2.2) + (B2), (E2.8) + (A1.2) + (A3.1) + (B2), (E2.8) + (A1.2) + (A3.2) + (B2), (E2.8) + (A1.2) + (A4.1) + (B2), (E2.8) + (A1.2) + (A4.2) + (B2);
(E2.8) + (A2.1) + (A2.2) + (B2), (E2.8) + (A2.1) + (A3.1) + (B2), (E2.8) + (A2.1) + (A3.2) + (B2), (E2.8) + (A2.1) + (A4.1) + (B2), (E2.8) + (A2.1) + (A4.2) + (B2);
(E2.8) + (A2.2) + (A3.1) + (B2), (E2.8) + (A2.2) + (A3.2) + (B2), (E2.8) + (A2.2) + (A4.1) + (B2), (E2.8) + (A2.2) + (A4.2) + (B2);
(E2.8) + (A3.1) + (A3.2) + (B2), (E2.8) + (A3.1) + (A4.1) + (B2), (E2.8) + (A3.1) + (A4.2) + (B2); (E2.8) + (A3.2) + (A4.1) + (B2), (E2.8) + (A3.2) + (A4.2) + (B2), (E2.8) + (A4.1) + (A4.2) + (B2);
(E2.8) + (A1.1) + (A1.2) + (B3), (E2.8) + (A1.1) + (A2.1) + (B3), (E2.8) + (A1.1) + (A2.2) + (B3), (E2.8) + (A1.1) + (A3.1) + (B3), (E2.8) + (A1.1) + (A3.2) + (B3), (E2.8) + (A1.1) + (A4.1) + (B3), (E2.8) + (A1.1) + (A4.2) + (B3);
(E2.8) + (A1.2) + (A2.1) + (B3), (E2.8) + (A1.2) + (A2.2) + (B3), (E2.8) + (A1.2) + (A3.1) + (B3), (E2.8) + (A1.2) + (A3.2) + (B3), (E2.8) + (A1.2) + (A4.1) + (B3), (E2.8) + (A1.2) + (A4.2) + (B3);
(E2.8) + (A2.1) + (A2.2) + (B3), (E2.8) + (A2.1) + (A3.1) + (B3), (E2.8) + (A2.1) + (A3.2) + (B3), (E2.8) + (A2.1) + (A4.1) + (B3), (E2.8) + (A2.1) + (A4.2) + (B3);
(E2.8) + (A2.2) + (A3.1) + (B3), (E2.8) + (A2.2) + (A3.2) + (B3), (E2.8) + (A2.2) + (A4.1) + (B3), (E2.8) + (A2.2) + (A4.2) + (B3);
(E2.8) + (A3.1) + (A3.2) + (B3), (E2.8) + (A3.1) + (A4.1) + (B3), (E2.8) + (A3.1) + (A4.2) + (B3); (E2.8) + (A3.2) + (A4.1) + (B3), (E2.8) + (A3.2) + (A4.2) + (B3), (E2.8) +(A4.1)+(A4.2)+(B3);
(E2.9) + (A1.1) + (B1). (E2.9) + (A1.1) + (B2), (E2.9) + (A1.1) + (B3), (E2.9) + (A2.1) + (B1), (E2.9) + (A2.1) + (B2), (E2.9) + (A2.1) + (B3), (E2.9) + (A3.1) + (B1), (E2.9) + (A3.1) + (B2), (E2.9) + (A3.1) + (B3), (E2.9) + (A4.1) + (B1), (E2.9) + (A4.1) + (B2),
(E2.9) + (A4.1) + (B3), (E2.9) + (A1.2) + (B1), (E2.9) + (A1.2) + (B2), (E2.9) + (A1.2) + (B3), (E2.9) + (A2.2) + (B1), (E2.9) + (A2.2) + (B2), (E2.9) + (A2.2) + (B3), (E2.9) + (A3.2) + (B1), (E2.9) + (A3.2) + (B2), (E2.9) + (A3.2) + (B3), (E2.9) + (A4.2) + (B1),
(E2.9) + (A4.2) + (B2), (E2.9) + (A4.2) + (B3),
(E2.9) + (A1.1) + (A1.2) + (B1), (E2.9) + (A1.1) + (A2.1) + (B1), (E2.9) + (A1.1) + (A2.2) + (B1), (E2.9) + (A1.1) + (A3.1) + (B1), (E2.9) + (A1.1) + (A3.2) + (B1), (E2.9) + (A1.1) + (A4.1) + (B1), (E2.9) + (A1.1) + (A4.2) + (B1);
(E2.9) + (A1.2) + (A2.1) + (B1), (E2.9) + (A1.2) + (A2.2) + (B1), (E2.9) + (A1.2) + (A3.1) + (B1), (E2.9) + (A1.2) + (A3.2) + (B1), (E2.9) + (A1.2) + (A4.1) + (B1), (E2.9) + (A1.2) + (A4.2) + (B1);
(E2.9) + (A2.1) + (A2.2) + (B1), (E2.9) + (A2.1) + (A3.1) + (B1), (E2.9) + (A2.1) + (A3.2) + (B1), (E2.9) + (A2.1) + (A4.1) + (B1), (E2.9) + (A2.1) + (A4.2) + (B1);
(E2.9) + (A2.2) + (A3.1) + (B1), (E2.9) + (A2.2) + (A3.2) + (B1), (E2.9) + (A2.2) + (A4.1) + (B1), (E2.9) + (A2.2) + (A4.2) + (B1);
(E2.9) + (A3.1) + (A3.2) + (B1), (E2.9) + (A3.1) + (A4.1) + (B1), (E2.9) + (A3.1) + (A4.2) + (B1); (E2.9) + (A3.2) + (A4.1) + (B1), (E2.9) + (A3.2) + (A4.2) + (B1), (E2.9) +(A4.1)+(A4.2)+(B1);
(E2.9) + (A1.1) + (A1.2) + (B2), (E2.9) + (A1.1) + (A2.1) + (B2), (E2.9) + (A1.1) + (A2.2) + (B2), (E2.9) + (A1.1) + (A3.1) + (B2), (E2.9) + (A1.1) + (A3.2) + (B2), (E2.9) + (A1.1) + (A4.1) + (B2), (E2.9) + (A1.1) + (A4.2) + (B2);
(E2.9) + (A1.2) + (A2.1) + (B2), (E2.9) + (A1.2) + (A2.2) + (B2), (E2.9) + (A1.2) + (A3.1) + (B2), (E2.9) + (A1.2) + (A3.2) + (B2), (E2.9) + (A1.2) + (A4.1) + (B2), (E2.9) + (A1.2) + (A4.2) + (B2);
(E2.9) + (A2.1) + (A2.2) + (B2), (E2.9) + (A2.1) + (A3.1) + (B2), (E2.9) + (A2.1) + (A3.2) + (B2), (E2.9) + (A2.1) + (A4.1) + (B2), (E2.9) + (A2.1) + (A4.2) + (B2);
(E2.9) + (A2.2) + (A3.1) + (B2), (E2.9) + (A2.2) + (A3.2) + (B2), (E2.9) + (A2.2) + (A4.1) + (B2), (E2.9) + (A2.2) + (A4.2) + (B2);
(E2.9) + (A3.1) + (A3.2) + (B2), (E2.9) + (A3.1) + (A4.1) + (B2), (E2.9) + (A3.1) + (A4.2) + (B2); (E2.9) + (A3.2) + (A4.1) + (B2), (E2.9) + (A3.2) + (A4.2) + (B2), (E2.9) + (A4.1) + (A4.2)+(B2);
(E2.9) + (A1.1) + (A1.2) + (B3), (E2.9) + (A1.1) + (A2.1) + (B3), (E2.9) + (A1.1) + (A2.2) + (B3), (E2.9) + (A1.1) + (A3.1) + (B3), (E2.9) + (A1.1) + (A3.2) + (B3), (E2.9) + (A1.1) + (A4.1) + (B3), (E2.9) + (A1.1) + (A4.2) + (B3);
(E2.9) + (A1.2) + (A2.1) + (B3), (E2.9) + (A1.2) + (A2.2) + (B3), (E2.9) + (A1.2) + (A3.1) + (B3), (E2.9) + (A1.2) + (A3.2) + (B3), (E2.9) + (A1.2) + (A4.1) + (B3), (E2.9) + (A1.2) + (A4.2) + (B3);
(E2.9) + (A2.1) + (A2.2) + (B3), (E2.9) + (A2.1) + (A3.1) + (B3), (E2.9) + (A2.1) + (A3.2) + (B3), (E2.9) + (A2.1) + (A4.1) + (B3), (E2.9) + (A2.1) + (A4.2) + (B3);
(E2.9) + (A2.2) + (A3.1) + (B3), (E2.9) + (A2.2) + (A3.2) + (B3), (E2.9) + (A2.2) + (A4.1) + (B3), (E2.9) + (A2.2) + (A4.2) + (B3);
(E2.9) + (A3.1) + (A3.2) + (B3), (E2.9) + (A3.1) + (A4.1) + (B3), (E2.9) + (A3.1) + (A4.2) + (B3); (E2.9) + (A3.2) + (A4.1) + (B3), (E2.9) + (A3.2) + (A4.2) + (B3), (E2.9) + (A4.1) + (A4.2) + (B3);
(E3) + (A1.1) + (B1), (E3) + (A1.1) + (B2), (E3) + (A1.1) + (B3), (E3) + (A2.1) + (B1),
(E3) + (A2.1) + (B2), (E3) + (A2.1) + (B3), (E3) + (A3.1) + (B1), (E3) + (A3.1) + (B2),
(E3) + (A3.1) + (B3), (E3) + (A4.1) + (B1), (E3) + (A4.1) + (B2), (E3) + (A4.1) + (B3),
(E3) + (A1.2) + (B1), (E3) + (A1.2) + (B2), (E3) + (A1.2) + (B3), (E3) + (A2.2) + (B1),
(E3) + (A2.2) + (B2), (E3) + (A2.2) + (B3), (E3) + (A3.2) + (B1), (E3) + (A3.2) + (B2),
(E3) + (A3.2) + (B3), (E3) + (A4.2) + (B1), (E3) + (A4.2) + (B2), (E3) + (A4.2) + (B3),
(E3) + (A1.1) + (A1.2) + (B1), (E3) + (A1.1) + (A2.1) + (B1), (E3) + (A1.1) + (A2.2) + (B1), (E3) + (A1.1) + (A3.1) + (B1), (E3) + (A1.1) + (A3.2) + (B1), (E3) + (A1.1) + (A4.1) + (B1), (E3) + (A1.1) + (A4.2) + (B1);
(E3) + (A1.2) + (A2.1) + (B1), (E3) + (A1.2) + (A2.2) + (B1), (E3) + (A1.2) + (A3.1) + (B1), (E3) + (A1.2) + (A3.2) + (B1), (E3) + (A1.2) + (A4.1) + (B1), (E3) + (A1.2) + (A4.2) + (B1);
(E3) + (A2.1) + (A2.2) + (B1), (E3) + (A2.1) + (A3.1) + (B1), (E3) + (A2.1) + (A3.2) + (B1), (E3) + (A2.1) + (A4.1) + (B1), (E3) + (A2.1) + (A4.2) + (B1);
(E3) + (A2.2) + (A3.1) + (B1), (E3) + (A2.2) + (A3.2) + (B1), (E3) + (A2.2) + (A4.1) + (B1), (E3) + (A2.2) + (A4.2) + (B1);
(E3) + (A3.1) + (A3.2) + (B1), (E3) + (A3.1) + (A4.1) + (B1), (E3) + (A3.1) + (A4.2) + (B1); (E3) + (A3.2) + (A4.1) + (B1), (E3) + (A3.2) + (A4.2) + (B1), (E3) + (A4.1) + (A4.2) + (B1);
(E3) + (A1.1) + (A1.2) + (B2), (E3) + (A1.1) + (A2.1) + (B2), (E3) + (A1.1) + (A2.2) + (B2), (E3) + (A1.1) + (A3.1) + (B2), (E3) + (A1.1) + (A3.2) + (B2), (E3) + (A1.1) + (A4.1) + (B2), (E3) + (A1.1) + (A4.2) + (B2);
(E3) + (A1.2) + (A2.1) + (B2), (E3) + (A1.2) + (A2.2) + (B2), (E3) + (A1.2) + (A3.1) + (B2), (E3) + (A1.2) + (A3.2) + (B2), (E3) + (A1.2) + (A4.1) + (B2), (E3) + (A1.2) + (A4.2) + (B2);
(E3) + (A2.1) + (A2.2) + (B2), (E3) + (A2.1) + (A3.1) + (B2), (E3) + (A2.1) + (A3.2) + (B2), (E3) + (A2.1) + (A4.1) + (B2), (E3) + (A2.1) + (A4.2) + (B2);
(E3) + (A2.2) + (A3.1) + (B2), (E3) + (A2.2) + (A3.2) + (B2), (E3) + (A2.2) + (A4.1) + (B2), (E3) + (A2.2) + (A4.2) + (B2);
(E3) + (A3.1) + (A3.2) + (B2), (E3) + (A3.1) + (A4.1) + (B2), (E3) + (A3.1) + (A4.2) + (B2); (E3) + (A3.2) + (A4.1) + (B2), (E3) + (A3.2) + (A4.2) + (B2), (E3) + (A4.1) + (A4.2) + (B2);
(E3) + (A1.1) + (A1.2) + (B3), (E3) + (A1.1) + (A2.1) + (B3), (E3) + (A1.1) + (A2.2) + (B3), (E3) + (A1.1) + (A3.1) + (B3), (E3) + (A1.1) + (A3.2) + (B3), (E3) + (A1.1) + (A4.1) + (B3), (E3) + (A1.1) + (A4.2) + (B3);
(E3) + (A1.2) + (A2.1) + (B3), (E3) + (A1.2) + (A2.2) + (B3), (E3) + (A1.2) + (A3.1) + (B3), (E3) + (A1.2) + (A3.2) + (B3), (E3) + (A1.2) + (A4.1) + (B3), (E3) + (A1.2) + (A4.2) + (B3);
(E3) + (A2.1) + (A2.2) + (B3), (E3) + (A2.1) + (A3.1) + (B3), (E3) + (A2.1) + (A3.2) + (B3), (E3) + (A2.1) + (A4.1) + (B3), (E3) + (A2.1) + (A4.2) + (B3);
(E3) + (A2.2) + (A3.1) + (B3), (E3) + (A2.2) + (A3.2) + (B3), (E3) + (A2.2) + (A4.1) + (B3), (E3) + (A2.2) + (A4.2) + (B3);
(E3) + (A3.1) + (A3.2) + (B3), (E3) + (A3.1) + (A4.1) + (B3), (E3) + (A3.1) + (A4.2) + (B3); (E3) + (A3.2) + (A4.1) + (B3), (E3) + (A3.2) + (A4.2) + (B3), (E3) + (A4.1) + (A4.2) + (B3);
(E3.1) + (A1.1) + (B1), (E3.1) + (A1.1) + (B2), (E3.1) + (A1.1) + (B3), (E3.1) + (A2.1) + (B1), (E3.1) + (A2.1) + (B2), (E3.1) + (A2.1) + (B3), (E3.1) + (A3.1) + (B1), (E3.1) + (A3.1) + (B2), (E3.1) + (A3.1) + (B3), (E3.1) + (A4.1) + (B1), (E3.1) + (A4.1) + (B2),
(E3.1) + (A4.1) + (B3), (E3.1) + (A1.2) + (B1), (E3.1) + (A1.2) + (B2), (E3.1) + (A1.2) + (B3), (E3.1) + (A2.2) + (B1), (E3.1) + (A2.2) + (B2), (E3.1) + (A2.2) + (B3), (E3.1) + (A3.2) + (B1), (E3.1) + (A3.2) + (B2), (E3.1) + (A3.2) + (B3), (E3.1) + (A4.2) + (B1),
(E3.1) + (A4.2) + (B2), (E3.1) + (A4.2) + (B3),
(E3.1) + (A1.1) + (A1.2) + (B1), (E3.1) + (A1.1) + (A2.1) + (B1), (E3.1) + (A1.1) + (A2.2) + (B1), (E3.1) + (A1.1) + (A3.1) + (B1), (E3.1) + (A1.1) + (A3.2) + (B1), (E3.1) +(A1.1)+(A4.1)+(B1), (E3.1) + (A1.1) + (A4.2) + (B1);
(E3.1) + (A1.2) + (A2.1) + (B1), (E3.1) + (A1.2) + (A2.2) + (B1), (E3.1) + (A1.2) + (A3.1) + (B1), (E3.1) + (A1.2) + (A3.2) + (B1), (E3.1) + (A1.2) + (A4.1) + (B1), (E3.1) + (A1.2) + (A4.2) + (B1);
(E3.1) + (A2.1) + (A2.2) + (B1), (E3.1) + (A2.1) + (A3.1) + (B1), (E3.1) + (A2.1) + (A3.2)+(B1), (E3.1) + (A2.1) + (A4.1) + (B1), (E3.1) + (A2.1) + (A4.2) + (B1);
(E3.1) + (A2.2) + (A3.1) + (B1), (E3.1) + (A2.2) + (A3.2) + (B1), (E3.1) + (A2.2) + (A4.1)+(B1), (E3.1) + (A2.2) + (A4.2) + (B1);
(E3.1) + (A3.1) + (A3.2) + (B1), (E3.1) + (A3.1) + (A4.1) + (B1), (E3.1) + (A3.1) + (A4.2) + (B1); (E3.1) + (A3.2) + (A4.1) + (B1), (E3.1) + (A3.2) + (A4.2) + (B1), (E3.1) + (A4.1) + (A4.2) + (B1);
(E3.1) + (A1.1) + (A1.2) + (B2), (E3.1) + (A1.1) + (A2.1) + (B2), (E3.1) + (A1.1) + (A2.2) + (B2), (E3.1) + (A1.1) + (A3.1) + (B2), (E3.1) + (A1.1) + (A3.2) + (B2), (E3.1) + (A1.1) + (A4.1) + (B2), (E3.1) + (A1.1) + (A4.2) + (B2);
(E3.1) + (A1.2) + (A2.1) + (B2), (E3.1) + (A1.2) + (A2.2) + (B2), (E3.1) + (A1.2) + (A3.1) + (B2), (E3.1) + (A1.2) + (A3.2) + (B2), (E3.1) + (A1.2) + (A4.1) + (B2), (E3.1) + (A1.2) + (A4.2) + (B2);
(E3.1) + (A2.1) + (A2.2) + (B2), (E3.1) + (A2.1) + (A3.1) + (B2), (E3.1) + (A2.1) + (A3.2) + (B2), (E3.1) + (A2.1) + (A4.1) + (B2), (E3.1) + (A2.1) + (A4.2) + (B2);
(E3.1) + (A2.2) + (A3.1) + (B2), (E3.1) + (A2.2) + (A3.2) + (B2), (E3.1) + (A2.2) + (A4.1) + (B2), (E3.1) + (A2.2) + (A4.2) + (B2);
(E3.1) + (A3.1) + (A3.2) + (B2), (E3.1) + (A3.1) + (A4.1) + (B2), (E3.1) + (A3.1) + (A4.2) + (B2); (E3.1) + (A3.2) + (A4.1) + (B2), (E3.1) + (A3.2) + (A4.2) + (B2), (E3.1) + (A4.1) + (A4.2) + (B2);
(E3.1) + (A1.1) + (A1.2) + (B3), (E3.1) + (A1.1) + (A2.1) + (B3), (E3.1) + (A1.1) +
(A2.2) + (B3), (E3.1) + (A1.1) + (A3.1) + (B3), (E3.1) + (A1.1) + (A3.2) + (B3), (E3.1) + (A1.1) + (A4.1) + (B3), (E3.1) + (A1.1) + (A4.2) + (B3);
(E3.1) + (A1.2) + (A2.1) + (B3), (E3.1) + (A1.2) + (A2.2) + (B3), (E3.1) + (A1.2) + (A3.1) + (B3), (E3.1) + (A1.2) + (A3.2) + (B3), (E3.1) + (A1.2) + (A4.1) + (B3), (E3.1) + (A1.2) + (A4.2) + (B3);
(E3.1) + (A2.1) + (A2.2) + (B3), (E3.1) + (A2.1) + (A3.1) + (B3), (E3.1) + (A2.1) + (A3.2) + (B3), (E3.1) + (A2.1) + (A4.1) + (B3), (E3.1) + (A2.1) + (A4.2) + (B3);
(E3.1) + (A2.2) + (A3.1) + (B3), (E3.1) + (A2.2) + (A3.2) + (B3), (E3.1) + (A2.2) + (A4.1) + (B3), (E3.1) + (A2.2) + (A4.2) + (B3);
(E3.1) + (A3.1) + (A3.2) + (B3), (E3.1) + (A3.1) + (A4.1) + (B3), (E3.1) + (A3.1) + (A4.2) + (B3); (E3.1) + (A3.2) + (A4.1) + (B3), (E3.1) + (A3.2) + (A4.2) + (B3), (E3.1) + (A4.1) + (A4.2) + (B3);
(E3.2) + (A1.1) + (B1), (E3.2) + (A1.1) + (B2), (E3.2) + (A1.1) + (B3), (E3.2) + (A2.1) + (B1), (E3.2) + (A2.1) + (B2), (E3.2) + (A2.1) + (B3), (E3.2) + (A3.1) + (B1), (E3.2) + (A3.1) + (B2), (E3.2) + (A3.1) + (B3), (E3.2) + (A4.1) + (B1), (E3.2) + (A4.1) + (B2),
(E3.2) + (A4.1) + (B3), (E3.2) + (A1.2) + (B1), (E3.2) + (A1.2) + (B2), (E3.2) + (A1.2) + (B3), (E3.2) + (A2.2) + (B1), (E3.2) + (A2.2) + (B2), (E3.2) + (A2.2) + (B3), (E3.2) + (A3.2) + (B1), (E3.2) + (A3.2) + (B2), (E3.2) + (A3.2) + (B3), (E3.2) + (A4.2) + (B1),
(E3.2) + (A4.2) + (B2), (E3.2) + (A4.2) + (B3),
(E3.2) + (A1.1) + (A1.2) + (B1), (E3.2) + (A1.1) + (A2.1) + (B1), (E3.2) + (A1.1) + (A2.2) + (B1), (E3.2) + (A1.1) + (A3.1) + (B1), (E3.2) + (A1.1) + (A3.2) + (B1), (E3.2) + (A1.1) + (A4.1) + (B1), (E3.2) + (A1.1) + (A4.2) + (B1);
(E3.2) + (A1.2) + (A2.1) + (B1), (E3.2) + (A1.2) + (A2.2) + (B1), (E3.2) + (A1.2) + (A3.1) + (B1), (E3.2) + (A1.2) + (A3.2) + (B1), (E3.2) + (A1.2) + (A4.1) + (B1), (E3.2) + (A1.2) + (A4.2) + (B1);
(E3.2) + (A2.1) + (A2.2) + (B1), (E3.2) + (A2.1)+ (A3.1) + (B1), (E3.2) + (A2.1) + (A3.2) + (B1), (E3.2) + (A2.1) + (A4.1) + (B1), (E3.2) + (A2.1) + (A4.2) + (B1);
(E3.2) + (A2.2) + (A3.1) + (B1), (E3.2) + (A2.2) + (A3.2) + (B1), (E3.2) + (A2.2) + (A4.1) + (B1), (E3.2) + (A2.2) + (A4.2) + (B1);
(E3.2) + (A3.1) + (A3.2) + (B1), (E3.2) + (A3.1) + (A4.1) + (B1), (E3.2) + (A3.1) + (A4.2) + (B1); (E3.2) + (A3.2) + (A4.1) + (B1), (E3.2) + (A3.2) + (A4.2) + (B1), (E3.2) + (A4.1)+(A4.2)+(B1);
(E3.2) + (A1.1) + (A1.2) + (B2), (E3.2) + (A1.1) + (A2.1) + (B2), (E3.2) + (A1.1) + (A2.2) + (B2), (E3.2) + (A1.1) + (A3.1) + (B2), (E3.2) + (A1.1) + (A3.2) + (B2), (E3.2) + (A1.1) + (A4.1) + (B2), (E3.2) + (A1.1) + (A4.2) + (B2);
(E3.2) + (A1.2) + (A2.1) + (B2), (E3.2) + (A1.2) + (A2.2) + (B2), (E3.2) + (A1.2) + (A3.1) + (B2), (E3.2) + (A1.2) + (A3.2) + (B2), (E3.2) + (A1.2) + (A4.1) + (B2), (E3.2) + (A1.2) + (A4.2) + (B2);
(E3.2) + (A2.1) + (A2.2) + (B2), (E3.2) + (A2.1) + (A3.1) + (B2), (E3.2) + (A2.1) + (A3.2) + (B2), (E3.2) + (A2.1) + (A4.1) + (B2), (E3.2) + (A2.1) + (A4.2) + (B2);
(E3.2) + (A2.2) + (A3.1) + (B2), (E3.2) + (A2.2) + (A3.2) + (B2), (E3.2) + (A2.2) + (A4.1) + (B2), (E3.2) + (A2.2) + (A4.2) + (B2);
(E3.2) + (A3.1) + (A3.2) + (B2), (E3.2) + (A3.1) + (A4.1) + (B2), (E3.2) + (A3.1) + (A4.2) + (B2); (E3.2) + (A3.2) + (A4.1) + (B2), (E3.2) + (A3.2) + (A4.2) + (B2), (E3.2) + (A4.1) + (A4.2) + (B2);
(E3.2) + (A1.1) + (A1.2) + (B3), (E3.2) + (A1.1) + (A2.1) + (B3), (E3.2) + (A1.1) + (A2.2) + (B3), (E3.2) + (A1.1) + (A3.1) + (B3), (E3.2) + (A1.1) + (A3.2) + (B3), (E3.2) + (A1.1) + (A4.1) + (B3), (E3.2) + (A1.1) + (A4.2) + (B3);
(E3.2) + (A1.2) + (A2.1) + (B3), (E3.2) + (A1.2) + (A2.2) + (B3), (E3.2) + (A1.2) + (A3.1) + (B3), (E3.2) + (A1.2) + (A3.2) + (B3), (E3.2) + (A1.2) + (A4.1) + (B3), (E3.2) + (A1.2) + (A4.2) + (B3);
(E3.2) + (A2.1) + (A2.2) + (B3), (E3.2) + (A2.1) + (A3.1) + (B3), (E3.2) + (A2.1) + (A3.2) + (B3), (E3.2) + (A2.1) + (A4.1) + (B3), (E3.2) + (A2.1) + (A4.2) + (B3);
(E3.2) + (A2.2) + (A3.1) + (B3), (E3.2) + (A2.2) + (A3.2) + (B3), (E3.2) + (A2.2) + (A4.1) + (B3), (E3.2) + (A2.2) + (A4.2) + (B3);
(E3.2) + (A3.1) + (A3.2) + (B3), (E3.2) + (A3.1) + (A4.1) + (B3), (E3.2) + (A3.1) + (A4.2) + (B3); (E3.2) + (A3.2) + (A4.1) + (B3), (E3.2) + (A3.2) + (A4.2) + (B3), (E3.2) + (A4.1) + (A4.2) + (B3);
(E3.3) + (A1.1) + (B1), (E3.3) + (A1.1) + (B2), (E3.3) + (A1.1) + (B3), (E3.3) + (A2.1) + (B1), (E3.3) + (A2.1) + (B2), (E3.3) + (A2.1) + (B3), (E3.3) + (A3.1) + (B1), (E3.3) + (A3.1) + (B2), (E3.3) + (A3.1) + (B3), (E3.3) + (A4.1) + (B1), (E3.3) + (A4.1) + (B2),
(E3.3) + (A4.1) + (B3), (E3.3) + (A1.2) + (B1), (E3.3) + (A1.2) + (B2), (E3.3) + (A1.2) + (B3), (E3.3) + (A2.2) + (B1), (E3.3) + (A2.2) + (B2), (E3.3) + (A2.2) + (B3), (E3.3) + (A3.2) + (B1), (E3.3) + (A3.2) + (B2), (E3.3) + (A3.2) + (B3), (E3.3) + (A4.2) + (B1), (E3.3) + (A4.2) + (B2), (E3.3) + (A4.2) + (B3),
(E3.3) + (A1.1) + (A1.2) + (B1), (E3.3) + (A1.1) + (A2.1) + (B1), (E3.3) + (A1.1) + (A2.2) + (B1), (E3.3) + (A1.1) + (A3.1) + (B1), (E3.3) + (A1.1) + (A3.2) + (B1), (E3.3) +(A1.1)+(A4.1)+(B1), (E3.3) + (A1.1) + (A4.2) + (B1);
(E3.3) + (A1.2) + (A2.1) + (B1), (E3.3) + (A1.2) + (A2.2) + (B1), (E3.3) + (A1.2) + (A3.1) + (B1), (E3.3) + (A1.2) + (A3.2) + (B1), (E3.3) + (A1.2) + (A4.1) + (B1), (E3.3) + (A1.2) + (A4.2) + (B1);
(E3.3) + (A2.1) + (A2.2) + (B1), (E3.3) + (A2.1) + (A3.1) + (B1), (E3.3) + (A2.1) + (A3.2) + (B1), (E3.3) + (A2.1) + (A4.1) + (B1), (E3.3) + (A2.1) + (A4.2) + (B1);
(E3.3) + (A2.2) + (A3.1) + (B1), (E3.3) + (A2.2) + (A3.2) + (B1), (E3.3) + (A2.2) + (A4.1) + (B1), (E3.3) + (A2.2) + (A4.2) + (B1);
(E3.3) + (A3.1) + (A3.2) + (B1), (E3.3) + (A3.1) + (A4.1) + (B1), (E3.3) + (A3.1) + (A4.2) + (B1); (E3.3) + (A3.2) + (A4.1) + (B1), (E3.3) + (A3.2) + (A4.2) + (B1), (E3.3) + (A4.1) + (A4.2) + (B1);
(E3.3) + (A1.1) + (A1.2) + (B2), (E3.3) + (A1.1) + (A2.1) + (B2), (E3.3) + (A1.1) + (A2.2) + (B2), (E3.3) + (A1.1) + (A3.1) + (B2), (E3.3) + (A1.1) + (A3.2) + (B2), (E3.3) + (A1.1) + (A4.1) + (B2), (E3.3) + (A1.1) + (A4.2) + (B2);
(E3.3) + (A1.2) + (A2.1) + (B2), (E3.3) + (A1.2) + (A2.2) + (B2), (E3.3) + (A1.2) + (A3.1) + (B2), (E3.3) + (A1.2) + (A3.2) + (B2), (E3.3) + (A1.2) + (A4.1) + (B2), (E3.3) + (A1.2) + (A4.2) + (B2);
(E3.3) + (A2.1) + (A2.2) + (B2), (E3.3) + (A2.1) + (A3.1) + (B2), (E3.3) + (A2.1) + (A3.2) + (B2), (E3.3) + (A2.1) + (A4.1) + (B2), (E3.3) + (A2.1) + (A4.2) + (B2);
(E3.3) + (A2.2) + (A3.1) + (B2), (E3.3) + (A2.2) + (A3.2) + (B2), (E3.3) + (A2.2) + (A4.1) + (B2), (E3.3) + (A2.2) + (A4.2) + (B2);
(E3.3) + (A3.1) + (A3.2) + (B2), (E3.3) + (A3.1) + (A4.1) + (B2), (E3.3) + (A3.1) + (A4.2) + (B2); (E3.3) + (A3.2) + (A4.1) + (B2), (E3.3) + (A3.2) + (A4.2) + (B2), (E3.3) + (A4.1) + (A4.2) + (B2);
(E3.3) + (A1.1) + (A1.2) + (B3), (E3.3) + (A1.1) + (A2.1) + (B3), (E3.3) + (A1.1) + (A2.2) + (B3), (E3.3) + (A1.1) + (A3.1) + (B3), (E3.3) + (A1.1) + (A3.2) + (B3), (E3.3) + (A1.1) + (A4.1) + (B3), (E3.3) + (A1.1) + (A4.2) + (B3);
(E3.3) + (A1.2) + (A2.1) + (B3), (E3.3) + (A1.2) + (A2.2) + (B3), (E3.3) + (A1.2) + (A3.1) + (B3), (E3.3) + (A1.2) + (A3.2) + (B3), (E3.3) + (A1.2) + (A4.1) + (B3), (E3.3) + (A1.2) + (A4.2) + (B3);
(E3.3) + (A2.1) + (A2.2) + (B3), (E3.3) + (A2.1) + (A3.1) + (B3), (E3.3) + (A2.1) + (A3.2) + (B3), (E3.3) + (A2.1) + (A4.1) + (B3), (E3.3) + (A2.1) + (A4.2) + (B3);
(E3.3) + (A2.2) + (A3.1) + (B3), (E3.3) + (A2.2) + (A3.2) + (B3), (E3.3) + (A2.2) + (A4.1) + (B3), (E3.3) + (A2.2) + (A4.2) + (B3);
(E3.3) + (A3.1) + (A3.2) + (B3), (E3.3) + (A3.1) + (A4.1) + (B3), (E3.3) + (A3.1) + (A4.2) + (B3); (E3.3) + (A3.2) + (A4.1) + (B3), (E3.3) + (A3.2) + (A4.2) + (B3), (E3.3) + (A4.1) + (A4.2) + (B3);
(E4) + (A1.1) + (B1), (E4) + (A1.1) + (82), (E4) + (A1.1) + (B3), (E4) + (A2.1) + (B1),
(E4) + (A2.1) + (B2), (E4) + (A2.1) + (B3), (E4) + (A3.1) + (B1), (E4) + (A3.1) + (B2),
(E4) + (A3.1) + (B3), (E4) + (A4.1) + (B1), (E4) + (A4.1) + (B2), (E4) + (A4.1) + (B3),
(E4) + (A1.2) + (B1), (E4) + (A1.2) + (B2). (E4) + (A1.2) + (B3), (E4) + (A2.2) + (B1),
(E4) + (A2.2) + (B2), (E4) + (A2.2) + (B3), (E4) + (A3.2) + (B1), (E4) + (A3.2) + (B2),
(E4) + (A3.2) + (B3), (E4) + (A4.2) + (B1), (E4) + (A4.2) + (B2), (E4) + (A4.2) + (B3),
(E4) + (A1.1) + (A1.2) + (B1), (E4) + (A1.1) + (A2.1) + (B1), (E4) + (A1.1) + (A2.2) + (B1), (E4) + (A1.1) + (A3.1) + (B1), (E4) + (A1.1) + (A3.2) + (B1), (E4) + (A1.1) + (A4.1) + (B1), (E4) + (A1.1) + (A4.2) + (B1);
(E4) + (A1.2) + (A2.1) + (B1), (E4) + (A1.2) + (A2.2) + (B1), (E4) + (A1.2) + (A3.1) + (B1), (E4) + (A1.2) + (A3.2) + (B1), (E4) + (A1.2) + (A4.1) + (B1), (E4) + (A1.2) + (A4.2)+(B1);
(E4) + (A2.1) + (A2.2) + (B1), (E4) + (A2.1) + (A3.1) + (B1), (E4) + (A2.1) + (A3.2) + (B1), (E4) + (A2.1) + (A4.1) + (B1), (E4) + (A2.1) + (A4.2) + (B1);
(E4) + (A2.2) + (A3.1) + (B1), (E4) + (A2.2) + (A3.2) + (B1), (E4) + (A2.2) + (A4.1) + (B1), (E4) + (A2.2) + (A4.2) + (B1);
(E4) + (A3.1) + (A3.2) + (B1), (E4) + (A3.1) + (A4.1) + (B1), (E4) + (A3.1) + (A4.2) + (B1); (E4) + (A3.2) + (A4.1) + (B1), (E4) + (A3.2) + (A4.2) + (B1), (E4) + (A4.1) + (A4.2) + (B1);
(E4) + (A1.1) + (A1.2) + (B2), (E4) + (A1.1) + (A2.1) + (B2), (E4) + (A1.1) + (A2.2) + (B2), (E4) + (A1.1) + (A3.1) + (B2), (E4) + (A1.1) + (A3.2) + (B2), (E4) + (A1.1) + (A4.1) + (B2), (E4) + (A1.1) + (A4.2) + (B2);
(E4) + (A1.2) + (A2.1) + (B2), (E4) + (A1.2) + (A2.2) + (B2), (E4) + (A1.2) + (A3.1) + (B2), (E4) + (A1.2) + (A3.2) + (B2), (E4) + (A1.2) + (A4.1) + (B2), (E4) + (A1.2) + (A4.2) + (B2);
(E4) + (A2.1) + (A2.2) + (B2), (E4) + (A2.1) + (A3.1) + (B2), (E4) + (A2.1) + (A3.2) + (B2), (E4) + (A2.1) + (A4.1) + (B2), (E4) + (A2.1) + (A4.2) + (B2);
(E4) + (A2.2) + (A3.1) + (B2), (E4) + (A2.2) + (A3.2) + (B2), (E4) + (A2.2) + (A4.1) + (B2), (E4) + (A2.2) + (A4.2) + (B2);
(E4) + (A3.1) + (A3.2) + (B2), (E4) + (A3.1) + (A4.1) + (B2), (E4) + (A3.1) + (A4.2) + (B2); (E4) + (A3.2) + (A4.1) + (B2), (E4) + (A3.2) + (A4.2) + (B2), (E4) + (A4.1) + (A4.2) + (B2);
(E4) + (A1.1) + (A1.2) + (B3), (E4) + (A1.1) + (A2.1) + (B3), (E4) + (A1.1) + (A2.2) + (B3), (E4) + (A1.1) + (A3.1) + (B3), (E4) + (A1.1) + (A3.2) + (B3), (E4) + (A1.1) + (A4.1) + (B3), (E4) + (A1.1) + (A4.2) + (B3);
(E4) + (A1.2) + (A2.1) + (B3), (E4) + (A1.2) + (A2.2) + (B3), (E4) + (A1.2) + (A3.1) + (B3), (E4) + (A1.2) + (A3.2) + (B3), (E4) + (A1.2) + (A4.1) + (B3), (E4) + (A1.2) + (A4.2) + (B3);
(E4) + (A2.1) + (A2.2) + (B3), (E4) + (A2.1) + (A3.1) + (B3), (E4) + (A2.1) + (A3.2) + (B3), (E4) + (A2.1) + (A4.1) + (B3), (E4) + (A2.1) + (A4.2) + (B3);
(E4) + (A2.2) + (A3.1) + (B3), (E4) + (A2.2) + (A3.2) + (B3), (E4) + (A2.2) + (A4.1) + (B3), (E4) + (A2.2) + (A4.2) + (B3);
(E4) + (A3.1) + (A3.2) + (B3), (E4) + (A3.1) + (A4.1) + (B3), (E4) + (A3.1) + (A4.2) + (B3); (E4) + (A3.2) + (A4.1) + (B3), (E4) + (A3.2) + (A4.2) + (B3), (E4) + (A4.1) + (A4.2) + (B3);
(E4.1) + (A1.1) + (B1), (E4.1) + (A1.1) + (B2), (E4.1) + (A1.1) + (B3), (E4.1) + (A2.1) + (B1), (E4.1) + (A2.1) + (B2), (E4.1) + (A2.1) + (B3), (E4.1) + (A3.1) + (B1), (E4.1) + (A3.1) + (B2), (E4.1) + (A3.1) + (B3), (E4.1) + (A4.1) + (B1), (E4.1) + (A4.1) + (B2),
(E4.1) + (A4.1) + (B3), (E4.1) + (A1.2) + (B1), (E4.1) + (A1.2) + (B2), (E4.1) + (A1.2) + (B3), (E4.1) + (A2.2) + (B1), (E4.1) + (A2.2) + (B2), (E4.1) + (A2.2) + (B3), (E4.1) + (A3.2) + (B1), (E4.1) + (A3.2) + (B2), (E4.1) + (A3.2) + (B3), (E4.1) + (A4.2) + (B1),
(E4.1) + (A4.2) + (B2), (E4.1) + (A4.2) + (B3),
(E4.1) + (A1.1) + (A1.2) + (B1), (E4.1) + (A1.1) + (A2.1) + (B1), (E4.1) + (A1.1) + (A2.2) + (B1), (E4.1) + (A1.1) + (A3.1) + (B1), (E4.1) + (A1.1) + (A3.2) + (B1), (E4.1) + (A1.1) + (A4.1) + (B1), (E4.1) + (A1.1) + (A4.2) + (B1);
(E4.1) + (A1.2) + (A2.1) + (B1), (E4.1) + (A1.2) + (A2.2) + (B1), (E4.1) + (A1.2) + (A3.1) + (B1), (E4.1) + (A1.2) + (A3.2) + (B1), (E4.1) + (A1.2) + (A4.1) + (B1), (E4.1) + (A1.2) + (A4.2) + (B1);
(E4.1) + (A2.1) + (A2.2) + (B1), (E4.1) + (A2.1) + (A3.1) + (B1), (E4.1) + (A2.1) + (A3.2)+(B1), (E4.1) + (A2.1) + (A4.1) + (B1), (E4.1) + (A2.1) + (A4.2) + (B1);
(E4.1) + (A2.2) + (A3.1) + (B1), (E4.1) + (A2.2) + (A3.2) + (B1), (E4.1) + (A2.2) + (A4.1)+(B1), (E4.1) + (A2.2) + (A4.2) + (B1);
(E4.1) + (A3.1) + (A3.2) + (B1), (E4.1) + (A3.1) + (A4.1) + (B1), (E4.1) + (A3.1) + (A4.2) + (B1); (E4.1) + (A3.2) + (A4.1) + (B1), (E4.1) + (A3.2) + (A4.2) + (B1), (E4.1) +(A4.1)+(A4.2)+(B1);
(E4.1) + (A1.1) + (A1.2) + (B2), (E4.1) + (A1.1) + (A2.1) + (B2), (E4.1) + (A1.1) + (A2.2) + (B2), (E4.1) + (A1.1) + (A3.1) + (B2), (E4.1) + (A1.1) + (A3.2) + (B2), (E4.1) + (A1.1) + (A4.1) + (B2), (E4.1) + (A1.1) + (A4.2) + (B2);
(E4.1) + (A1.2) + (A2.1) + (B2), (E4.1) + (A1.2) + (A2.2) + (B2), (E4.1) + (A1.2) + (A3.1) + (B2), (E4.1) + (A1.2) + (A3.2) + (B2), (E4.1) + (A1.2) + (A4.1) + (B2), (E4.1) + (A1.2) + (A4.2) + (B2);
(E4.1) + (A2.1) + (A2.2) + (B2), (E4.1) + (A2.1) + (A3.1) + (B2), (E4.1) + (A2.1) + (A3.2) + (B2), (E4.1) + (A2.1) + (A4.1) + (B2), (E4.1) + (A2.1) + (A4.2) + (B2);
(E4.1) + (A2.2) + (A3.1) + (B2), (E4.1) + (A2.2) + (A3.2) + (B2), (E4.1) + (A2.2) + (A4.1) + (B2), (E4.1) + (A2.2) + (A4.2) + (B2);
(E4.1) + (A3.1) + (A3.2) + (B2), (E4.1) + (A3.1) + (A4.1) + (B2), (E4.1) + (A3.1) + (A4.2) + (B2); (E4.1) + (A3.2) + (A4.1) + (B2), (E4.1) + (A3.2) + (A4.2) + (B2), (E4.1) + (A4.1) + (A4.2) + (B2);
(E4.1) + (A1.1) + (A1.2) + (B3), (E4.1) + (A1.1) + (A2.1) + (B3), (E4.1) + (A1.1) + (A2.2) + (B3), (E4.1) + (A1.1) + (A3.1) + (B3), (E4.1) + (A1.1) + (A3.2) + (B3), (E4.1) + (A1.1) + (A4.1) + (B3), (E4.1) + (A1.1) + (A4.2) + (B3);
(E4.1) + (A1.2) + (A2.1) + (B3), (E4.1) + (A1.2) + (A2.2) + (B3), (E4.1) + (A1.2) + (A3.1) + (B3), (E4.1) + (A1.2) + (A3.2) + (B3), (E4.1) + (A1.2) + (A4.1) + (B3), (E4.1) + (A1.2) + (A4.2) + (B3);
(E4.1) + (A2.1) + (A2.2) + (B3), (E4.1) + (A2.1) + (A3.1) + (B3), (E4.1) + (A2.1) + (A3.2) + (B3), (E4.1) + (A2.1) + (A4.1) + (B3), (E4.1) + (A2.1) + (A4.2) + (B3);
(E4.1) + (A2.2) + (A3.1) + (B3), (E4.1) + (A2.2) + (A3.2) + (B3), (E4.1) + (A2.2) + (A4.1) + (B3), (E4.1) + (A2.2) + (A4.2) + (B3);
(E4.1) + (A3.1) + (A3.2) + (B3), (E4.1) + (A3.1) + (A4.1) + (B3), (E4.1) + (A3.1) + (A4.2) + (B3); (E4.1) + (A3.2) + (A4.1) + (B3), (E4.1) + (A3.2) + (A4.2) + (B3), (E4.1) + (A4.1) + (A4.2) + (B3);
(E4.2) + (A1.1) + (B1), (E4.2) + (A1.1) + (B2), (E4.2) + (A1.1) + (B3), (E4.2) + (A2.1) + (B1), (E4.2) + (A2.1) + (B2), (E4.2) + (A2.1) + (B3), (E4.2) + (A3.1) + (B1), (E4.2) + (A3.1) + (B2), (E4.2) + (A3.1) + (B3), (E4.2) + (A4.1) + (B1), (E4.2) + (A4.1) + (B2),
(E4.2) + (A4.1) + (B3), (E4.2) + (A1.2) + (B1), (E4.2) + (A1.2) + (B2), (E4.2) + (A1.2) + (B3), (E4.2) + (A2.2) + (B1), (E4.2) + (A2.2) + (B2), (E4.2) + (A2.2) + (B3), (E4.2) + (A3.2) + (B1), (E4.2) + (A3.2) + (B2), (E4.2) + (A3.2) + (B3), (E4.2) + (A4.2) + (B1),
(E4.2) + (A4.2) + (B2), (E4.2) + (A4.2) + (B3),
(E4.2) + (A1.1) + (A1.2) + (B1), (E4.2) + (A1.1) + (A2.1) + (B1), (E4.2) + (A1.1) + (A2.2) + (B1), (E4.2) + (A1.1) + (A3.1) + (B1), (E4.2) + (A1.1) + (A3.2) + (B1), (E4.2) + (A1.1) + (A4.1) + (B1), (E4.2) + (A1.1) + (A4.2) + (B1);
(E4.2) + (A1.2) + (A2.1) + (B1), (E4.2) + (A1.2) + (A2.2) + (B1), (E4.2) + (A1.2) + (A3.1) + (B1), (E4.2) + (A1.2) + (A3.2) + (B1), (E4.2) + (A1.2) + (A4.1) + (B1), (E4.2) + (A1.2) + (A4.2) + (B1);
(E4.2) + (A2.1) + (A2.2) + (B1), (E4.2) + (A2.1) + (A3.1) + (B1), (E4.2) + (A2.1) + (A3.2) + (B1), (E4.2) + (A2.1) + (A4.1) + (B1), (E4.2) + (A2.1) + (A4.2) + (B1);
(E4.2) + (A2.2) + (A3.1) + (B1), (E4.2) + (A2.2) + (A3.2) + (B1), (E4.2) + (A2.2) + (A4.1) + (B1), (E4.2) + (A2.2) + (A4.2) + (B1);
(E4.2) + (A3.1) + (A3.2) + (B1), (E4.2) + (A3.1) + (A4.1) + (B1), (E4.2) + (A3.1) + (A4.2) + (B1); (E4.2) + (A3.2) + (A4.1) + (B1), (E4.2) + (A3.2) + (A4.2) + (B1), (E4.2) + (A4.1) + (A4.2) + (B1);
(E4.2) + (A1.1) + (A1.2) + (B2), (E4.2) + (A1.1) + (A2.1) + (B2), (E4.2) + (A1.1) + (A2.2) + (B2), (E4.2) + (A1.1) + (A3.1) + (B2), (E4.2) + (A1.1) + (A3.2) + (B2), (E4.2) + (A1.1) + (A4.1) + (B2), (E4.2) + (A1.1) + (A4.2) + (B2);
(E4.2) + (A1.2) + (A2.1) + (B2), (E4.2) + (A1.2) + (A2.2) + (B2), (E4.2) + (A1.2) + (A3.1) + (B2), (E4.2) + (A1.2) + (A3.2) + (B2), (E4.2) + (A1.2) + (A4.1) + (B2), (E4.2) + (A1.2) + (A4.2) + (B2);
(E4.2) + (A2.1) + (A2.2) + (B2), (E4.2) + (A2.1) + (A3.1) + (B2), (E4.2) + (A2.1) + (A3.2) + (B2), (E4.2) + (A2.1) + (A4.1) + (B2), (E4.2) + (A2.1) + (A4.2) + (B2);
(E4.2) + (A2.2) + (A3.1) + (B2), (E4.2) + (A2.2) + (A3.2) + (B2), (E4.2) + (A2.2) + (A4.1) + (B2), (E4.2) + (A2.2) + (A4.2) + (B2);
(E4.2) + (A3.1) + (A3.2) + (B2), (E4.2) + (A3.1) + (A4.1) + (B2), (E4.2) + (A3.1) + (A4.2) + (B2); (E4.2) + (A3.2) + (A4.1) + (B2), (E4.2) + (A3.2) + (A4.2) + (B2), (E4.2) + (A4-1) + (A4.2) + (B2);
(E4.2) + (A1.1) + (A1.2) + (B3), (E4.2) + (A1.1) + (A2.1) + (B3), (E4.2) + (A1.1) + (A2.2) + (B3), (E4.2) + (A1.1) + (A3.1) + (B3), (E4.2) + (A1.1) + (A3.2) + (B3), (E4.2) + (A1.1) + (A4.1) + (B3), (E4.2) + (A1.1) + (A4.2) + (B3);
(E4.2) + (A1.2) + (A2.1) + (B3), (E4.2) + (A1.2) + (A2.2) + (B3), (E4.2) + (A1.2) + (A3.1) + (B3), (E4.2) + (A1.2) + (A3.2) + (B3), (E4.2) + (A1.2) + (A4.1) + (B3), (E4.2) + (A1.2) + (A4.2) + (B3);
(E4.2) + (A2.1) + (A2.2) + (B3), (E4.2) + (A2.1) + (A3.1) + (B3), (E4.2) + (A2.1) + (A3.2) + (B3), (E4.2) + (A2.1) + (A4.1) + (B3), (E4.2) + (A2.1) + (A4.2) + (B3);
(E4.2) + (A2.2) + (A3.1) + (B3), (E4.2) + (A2.2) + (A3.2) + (B3), (E4.2) + (A2.2) + (A4.1) + (B3), (E4.2) + (A2.2) + (A4.2) + (B3);
(E4.2) + (A3.1) + (A3.2) + (B3), (E4.2) + (A3.1) + (A4.1) + (B3), (E4.2) + (A3.1) + (A4.2) + (B3); (E4.2) + (A3.2) + (A4.1) + (B3), (E4.2) + (A3.2) + (A4.2) + (B3), (E4.2) + (A4.1) + (A4.2) + (B3);
(E5) + (A1.1) + (B1), (E5) + (A1.1) + (B2), (E5) + (A1.1) + (B3), (E5) + (A2.1) + (B1),
(E5) + (A2.1) + (B2), (E5) + (A2.1) + (B3), (E5) + (A3.1) + (B1), (E5) + (A3.1) + (B2),
(E5) + (A3.1) + (B3), (E5) + (A4.1) + (B1), (E5) + (A4.1) + (B2), (E5) + (A4.1) + (B3),
(E5) + (A1.2) + (B1), (E5) + (A1.2) + (B2), (E5) + (A1.2) + (B3), (E5) + (A2.2) + (B1),
(E5) + (A2.2) + (B2), (E5) + (A2.2) + (B3), (E5) + (A3.2) + (B1), (E5) + (A3.2) + (B2),
(E5) + (A3.2) + (B3), (E5) + (A4.2) + (B1), (E5) + (A4.2) + (B2), (E5) + (A4.2) + (B3),
(E5) + (A1.1) + (A1.2) + (B1), (E5) + (A1.1) + (A2.1) + (B1), (E5) + (A1.1) + (A2.2) + (B1), (E5) + (A1.1) + (A3.1) + (B1), (E5) + (A1.1) + (A3.2) + (B1), (E5) + (A1.1) + (A4.1) + (B1), (E5) + (A1.1) + (A4.2) + (B1);
(E5) + (A1.2) + (A2.1) + (B1), (E5) + (A1.2) + (A2.2) + (B1), (E5) + (A1.2) + (A3.1) + (B1), (E5) + (A1.2) + (A3.2) + (B1), (E5) + (A1.2) + (A4.1) + (B1), (E5) + (A1.2) + (A4.2) + (B1);
(E5) + (A2.1) + (A2.2) + (B1), (E5) + (A2.1) + (A3.1) + (B1), (E5) + (A2.1) + (A3.2) + (B1), (E5) + (A2.1) + (A4.1) + (B1), (E5) + (A2.1) + (A4.2) + (B1);
(E5) + (A2.2) + (A3.1) + (B1), (E5) + (A2.2) + (A3.2) + (B1), (E5) + (A2.2) + (A4.1) + (B1), (E5) + (A2.2) + (A4.2) + (B1);
(E5) + (A3.1) + (A3.2) + (B1), (E5) + (A3.1) + (A4.1) + (B1), (E5) + (A3.1) + (A4.2) + (B1); (E5) + (A3.2) + (A4.1) + (B1), (E5) + (A3.2) + (A4.2) + (B1), (E5) + (A4.1) + (A4.2) + (B1);
(E5) + (A1.1) + (A1.2) + (B2), (E5) + (A1.1) + (A2.1) + (B2), (E5) + (A1.1) + (A2.2) + (B2), (E5) + (A1.1) + (A3.1) + (B2), (E5) + (A1.1) + (A3.2) + (B2), (E5) + (A1.1) + (A4.1) + (B2), (E5) + (A1.1) + (A4.2) + (B2);
(E5) + (A1.2) + (A2.1) + (B2), (E5) + (A1.2) + (A2.2) + (B2), (E5) + (A1.2) + (A3.1) + (B2), (E5) + (A1.2) + (A3.2) + (B2), (E5) + (A1.2) + (A4.1) + (B2), (E5) + (A1.2) + (A4.2) + (B2);
(E5) + (A2.1) + (A2.2) + (B2), (E5) + (A2.1) + (A3.1) + (B2), (E5) + (A2.1) + (A3.2) + (B2), (E5) + (A2.1) + (A4.1) + (B2), (E5) + (A2.1) + (A4.2) + (B2);
(E5) + (A2.2) + (A3.1) + (B2), (E5) + (A2.2) + (A3.2) + (B2), (E5) + (A2.2) + (A4.1) + (B2), (E5) + (A2.2) + (A4.2) + (B2);
(E5) + (A3.1) + (A3.2) + (B2), (E5) + (A3.1) + (A4.1) + (B2), (E5) + (A3.1) + (A4.2) + (B2); (E5) + (A3.2) + (A4.1) + (B2), (E5) + (A3.2) + (A4.2) + (B2), (E5) + (A4.1) + (A4.2) + (B2);
(E5) + (A1.1) + (A1.2) + (B3), (E5) + (A1.1) + (A2.1) + (B3), (E5) + (A1.1) + (A2.2) + (B3), (E5) + (A1.1) + (A3.1) + (B3), (E5) + (A1.1) + (A3.2) + (B3), (E5) + (A1.1) + (A4.1) + (B3), (E5) + (A1.1) + (A4.2) + (B3);
(E5) + (A1.2) + (A2.1) + (B3), (E5) + (A1.2) + (A2.2) + (B3), (E5) + (A1.2) + (A3.1) + (B3), (E5) + (A1.2) + (A3.2) + (B3), (E5) + (A1.2) + (A4.1) + (B3), (E5) + (A1.2) + (A4.2) + (B3);
(E5) + (A2.1) + (A2.2) + (B3), (E5) + (A2.1) + (A3.1) + (B3), (E5) + (A2.1) + (A3.2) + (B3), (E5) + (A2.1) + (A4.1) + (B3), (E5) + (A2.1) + (A4.2) + (B3);
(E5) + (A2.2) + (A3.1) + (B3), (E5) + (A2.2) + (A3.2) + (B3), (E5) + (A2.2) + (A4.1) + (B3), (E5) + (A2.2) + (A4.2) + (B3);
(E5) + (A3.1) + (A3.2) + (B3), (E5) + (A3.1) + (A4.1) + (B3), (E5) + (A3.1) + (A4.2) + (B3); (E5) + (A3.2) + (A4.1) + (B3), (E5) + (A3.2) + (A4.2) + (B3), (E5) + (A4.1) + (A4.2) + (B3);
(E5.1) + (A1.1) + (B1), (E5.1) + (A1.1) + (B2), (E5.1) + (A1.1) + (B3), (E5.1) + (A2.1) + (B1), (E5.1) + (A2.1) + (B2), (E5.1) + (A2.1) + (B3), (E5.1) + (A3.1) + (B1), (E5.1) + (A3.1) + (B2), (E5.1) + (A3.1) + (B3), (E5.1) + (A4.1) + (B1). (E5.1) + (A4.1) + (B2),
(E5.1) + (A4.1) + (B3), (E5.1) + (A1.2) + (B1), (E5.1) + (A1.2) + (B2), (E5.1) + (A1.2) + (B3), (E5.1) + (A2.2) + (B1), (E5.1) + (A2.2) + (B2), (E5.1) + (A2.2) + (B3), (E5.1) + (A3.2) + (B1), (E5.1) + (A3.2) + (B2), (E5.1) + (A3.2) + (B3), (E5.1) + (A4.2) + (B1),
(E5.1) + (A4.2) + (B2), (E5.1) + (A4.2) + (B3),
(E5.1) + (A1.1) + (A1.2) + (B1), (E5.1) + (A1.1) + (A2.1) + (B1), (E5.1) + (A1.1) + (A2.2) + (B1), (E5.1) + (A1.1) + (A3.1) + (B1), (E5.1) + (A1.1) + (A3.2) + (B1), (E5.1) +(A1.1)+(A4.1)+(B1), (E5.1) + (A1.1) + (A4.2) + (B1);
(E5.1) + (A1.2) + (A2.1) + (B1), (E5.1) + (A1.2) + (A2.2) + (B1), (E5.1) + (A1.2) + (A3.1) + (B1), (E5.1) + (A1.2) + (A3.2) + (B1), (E5.1) + (A1.2) + (A4.1) + (B1), (E5.1) + (A1.2) + (A4.2) + (B1);
(E5.1) + (A2.1) + (A2.2) + (B1), (E5.1) + (A2.1) + (A3.1) + (B1), (E5.1) + (A2.1) + (A3.2) + (B1), (E5.1) + (A2.1) + (A4.1) + (B1), (E5.1) + (A2.1) + (A4.2) + (B1);
(E5.1) + (A2.2) + (A3.1) + (B1), (E5.1) + (A2.2) + (A3.2) + (B1), (E5.1) + (A2.2) + (A4.1) + (B1), (E5.1) + (A2.2) + (A4.2) + (B1);
(E5.1) + (A3.1) + (A3.2) + (B1), (E5.1) + (A3.1) + (A4.1) + (B1), (E5.1) + (A3.1) + (A4.2) + (B1); (E5.1) + (A3.2) + (A4.1) + (B1), (E5.1) + (A3.2) + (A4.2) + (B1), (E5.1) + (A4.1) + (A4.2) + (B1);
(E5.1) + (A1.1) + (A1.2) + (B2), (E5.1) + (A1.1) + (A2.1) + (B2). (E5.1) + (A1.1) + (A2.2) + (B2), (E5.1) + (A1.1) + (A3.1) + (B2), (E5.1) + (A1.1) + (A3.2) + (B2), (E5.1) + (A1.1) + (A4.1) + (B2), (E5.1) + (A1.1) + (A4.2) + (B2);
(E5.1) + (A1.2) + (A2.1) + (B2), (E5.1) + (A1.2) + (A2.2) + (B2), (E5.1) + (A1.2) + (A3.1) + (B2), (E5.1) + (A1.2) + (A3.2) + (B2), (E5.1) + (A1.2) + (A4.1) + (B2), (E5.1) + (A1.2) + (A4.2) + (B2);
(E5.1) + (A2.1) + (A2.2) + (B2), (E5.1) + (A2.1) + (A3.1) + (B2), (E5.1) + (A2.1) + (A3.2) + (B2), (E5.1) + (A2.1) + (A4.1) + (B2), (E5.1) + (A2.1) + (A4.2) + (B2);
(E5.1) + (A2.2) + (A3.1) + (B2), (E5.1) + (A2.2) + (A3.2) + (B2), (E5.1) + (A2.2) + (A4.1) + (B2), (E5.1) + (A2.2) + (A4.2) + (B2);
(E5.1) + (A3.1) + (A3.2) + (B2), (E5.1) + (A3.1) + (A4.1) + (B2), (E5.1) + (A3.1) + (A4.2) + (B2); (E5.1) + (A3.2) + (A4.1) + (B2), (E5.1) + (A3.2) + (A4.2) + (B2), (E5.1) + (A4.1) + (A4.2) + (B2);
(E5.1) + (A1.1) + (A1.2) + (B3), (E5.1) + (A1.1) + (A2.1) + (B3), (E5.1) + (A1.1) +
(A2.2) + (B3), (E5.1) + (A1.1) + (A3.1) + (B3), (E5.1) + (A1.1) + (A3.2) + (B3), (E5.1) + (A1.1) + (A4.1) + (B3), (E5.1) + (A1.1) + (A4.2) + (B3);
(E5.1) + (A1.2) + (A2.1) + (B3), (E5.1) + (A1.2) + (A2.2) + (B3), (E5.1) + (A1.2) + (A3.1) + (B3), (E5.1) + (A1.2) + (A3.2) + (B3), (E5.1) + (A1.2) + (A4.1) + (B3), (E5.1) + (A1.2) + (A4.2) + (B3);
(E5.1) + (A2.1) + (A2.2) + (B3), (E5.1) + (A2.1) + (A3.1) + (B3), (E5.1) + (A2.1) + (A3.2) + (B3), (E5.1) + (A2.1) + (A4.1) + (B3), (E5.1) + (A2.1) + (A4.2) + (B3);
(E5.1) + (A2.2) + (A3.1) + (B3), (E5.1) + (A2.2) + (A3.2) + (B3), (E5.1) + (A2.2) + (A4.1) + (B3), (E5.1) + (A2.2) + (A4.2) + (B3);
(E5.1) + (A3.1) + (A3.2) + (B3), (E5.1) + (A3.1) + (A4.1) + (B3), (E5.1) + (A3.1) + (A4.2) + (B3); (E5.1) + (A3.2) + (A4.1) + (B3), (E5.1) + (A3.2) + (A4.2) + (B3), (E5.1) + (A4.1) + (A4.2) + (B3);
(E5.2) + (A1.1) + (B1), (E5.2) + (A1.1) + (B2), (E5.2) + (A1.1) + (B3), (E5.2) + (A2.1) + (B1), (E5.2) + (A2.1) + (B2), (E5.2) + (A2.1) + (B3), (E5.2) + (A3.1) + (B1), (E5.2) + (A3.1) + (B2), (E5.2) + (A3.1) + (B3), (E5.2) + (A4.1) + (B1), (E5.2) + (A4.1) + (B2),
(E5.2) + (A4.1) + (B3), (E5.2) + (A1.2) + (B1), (E5.2) + (A1.2) + (B2), (E5.2) + (A1.2) + (B3), (E5.2) + (A2.2) + (B1), (E5.2) + (A2.2) + (B2), (E5.2) + (A2.2) + (B3), (E5.2) + (A3.2) + (B1), (E5.2) + (A3.2) + (B2), (E5.2) + (A3.2) + (B3), (E5.2) + (A4.2) + (B1),
(E5.2) + (A4.2) + (B2), (E5.2) + (A4.2) + (B3),
(E5.2) + (A1.1) + (A1.2) + (B1), (E5.2) + (A1.1) + (A2.1) + (B1), (E5.2) + (A1.1) + (A2.2) + (B1), (E5.2) + (A1.1) + (A3.1) + (B1), (E5.2) + (A1.1) + (A3.2) + (B1), (E5.2) + (A1.1) + (A4.1) + (B1), (E5.2) + (A1.1) + (A4.2) + (B1);
(E5.2) + (A1.2) + (A2.1) + (B1), (E5.2) + (A1.2) + (A2.2) + (B1), (E5.2) + (A1.2) + (A3.1) + (B1), (E5.2) + (A1.2) + (A3.2) + (B1), (E5.2) + (A1.2) + (A4.1) + (B1), (E5.2) + (A1.2) + (A4.2) + (B1);
(E5.2) + (A2.1) + (A2.2) + (B1), (E5.2) + (A2.1) + (A3.1) + (B1), (E5.2) + (A2.1) + (A3.2) + (B1), (E5.2) + (A2.1) + (A4.1) + (B1), (E5.2) + (A2.1) + (A4.2) + (B1);
(E5.2) + (A2.2) + (A3.1) + (B1), (E5.2) + (A2.2) + (A3.2) + (B1), (E5.2) + (A2.2) + (A4.1) + (B1), (E5.2) + (A2.2) + (A4.2) + (B1);
(E5.2) + (A3.1) + (A3.2) + (B1), (E5.2) + (A3.1) + (A4.1) + (B1), (E5.2) + (A3.1) + (A4.2) + (B1); (E5.2) + (A3.2) + (A4.1) + (B1), (E5.2) + (A3.2) + (A4.2) + (B1), (E5.2) + (A4-1) + (A4.2) + (B1);
(E5.2) + (A1.1) + (A1.2) + (B2), (E5.2) + (A1.1) + (A2.1) + (B2), (E5.2) + (A1.1) + (A2.2) + (B2), (E5.2) + (A1.1) + (A3.1) + (B2), (E5.2) + (A1.1) + (A3.2) + (B2), (E5.2) + (A1.1) + (A4.1) + (B2), (E5.2) + (A1.1) + (A4.2) + (B2);
(E5.2) + (A1.2) + (A2.1) + (B2), (E5.2) + (A1.2) + (A2.2) + (B2), (E5.2) + (A1.2) + (A3.1) + (B2), (E5.2) + (A1.2) + (A3.2) + (B2), (E5.2) + (A1.2) + (A4.1) + (B2), (E5.2) + (A1.2) + (A4.2) + (B2);
(E5.2) + (A2.1) + (A2.2) + (B2), (E5.2) + (A2.1) + (A3.1) + (B2), (E5.2) + (A2.1) + (A3.2) + (B2), (E5.2) + (A2.1) + (A4.1) + (B2), (E5.2) + (A2.1) + (A4.2) + (B2);
(E5.2) + (A2.2) + (A3.1) + (B2), (E5.2) + (A2.2) + (A3.2) + (B2), (E5.2) + (A2.2) + (A4.1) + (B2), (E5.2) + (A2.2) + (A4.2) + (B2);
(E5.2) + (A3.1) + (A3.2) + (B2), (E5.2) + (A3.1) + (A4.1) + (B2), (E5.2) + (A3.1) + (A4.2) + (B2); (E5.2) + (A3.2) + (A4.1) + (B2), (E5.2) + (A3.2) + (A4.2) + (B2), (E5.2) + (A4.1) + (A4.2) + (B2);
(E5.2) + (A1.1) + (A1.2) + (B3), (E5.2) + (A1.1) + (A2.1) + (B3), (E5.2) + (A1.1) + (A2.2) + (B3), (E5.2) + (A1.1) + (A3.1) + (B3), (E5.2) + (A1.1) + (A3.2) + (B3), (E5.2) + (A1.1) + (A4.1) + (B3), (E5.2) + (A1.1) + (A4.2) + (B3);
(E5.2) + (A1.2) + (A2.1) + (B3), (E5.2) + (A1.2) + (A2.2) + (B3), (E5.2) + (A1.2) + (A3.1) + (B3), (E5.2) + (A1.2) + (A3.2) + (B3), (E5.2) + (A1.2) + (A4.1) + (B3), (E5.2) + (A1.2) + (A4.2) + (B3);
(E5.2) + (A2.1) + (A2.2) + (B3), (E5.2) + (A2.1) + (A3.1) + (B3), (E5.2) + (A2.1) + (A3.2) + (B3), (E5.2) + (A2.1) + (A4.1) + (B3), (E5.2) + (A2.1) + (A4.2) + (B3);
(E5.2) + (A2.2) + (A3.1) + (B3), (E5.2) + (A2.2) + (A3.2) + (B3), (E5.2) + (A2.2) + (A4.1) + (B3), (E5.2) + (A2.2) + (A4.2) + (B3);
(E5.2) + (A3.1) + (A3.2) + (B3), (E5.2) + (A3.1) + (A4.1) + (B3), (E5.2) + (A3.1) + (A4.2) + (B3); (E5.2) + (A3.2) + (A4.1) + (B3), (E5.2) + (A3.2) + (A4.2) + (B3), (E5.2) + (A4.1) + (A4.2) + (B3);
(E6) + (A1.1) + (B1), (E6) + (A1.1) + (B2), (E6) + (A1.1) + (B3), (E6) + (A2.1) + (B1),
(E6) + (A2.1) + (B2), (E6) + (A2.1) + (B3), (E6) + (A3.1) + (B1), (E6) + (A3.1) + (B2),
(E6) + (A3.1) + (B3), (E6) + (A4.1) + (B1), (E6) + (A4.1) + (B2), (E6) + (A4.1) + (B3),
(E6) + (A1.2) + (B1), (E6) + (A1.2) + (B2), (E6) + (A1.2) + (B3), (E6) + (A2.2) + (B1),
(E6) + (A2.2) + (B2), (E6) + (A2.2) + (B3), (E6) + (A3.2) + (B1), (E6) + (A3.2) + (B2),
(E6) + (A3.2) + (B3), (E6) + (A4.2) + (B1), (E6) + (A4.2) + (B2), (E6) + (A4.2) + (B3),
(E6) + (A1.1) + (A1.2) + (B1), (E6) + (A1.1) + (A2.1) + (B1), (E6) + (A1.1) + (A2.2) + (B1), (E6) + (A1.1) + (A3.1) + (B1), (E6) + (A1.1) + (A3.2) + (B1), (E6) + (A1.1) + (A4.1) + (B1), (E6) + (A1.1) + (A4.2) + (B1);
(E6) + (A1.2) + (A2.1) + (B1), (E6) + (A1.2) + (A2.2) + (B1), (E6) + (A1.2) + (A3.1) + (B1), (E6) + (A1.2) + (A3.2) + (B1), (E6) + (A1.2) + (A4.1) + (B1), (E6) + (A1.2) + (A4.2) + (B1);
(E6) + (A2.1) + (A2.2) + (B1), (E6) + (A2.1) + (A3.1) + (B1), (E6) + (A2.1) + (A3.2) + (B1), (E6) + (A2.1) + (A4.1) + (B1), (E6) + (A2.1) + (A4.2) + (B1);
(E6) + (A2.2) + (A3.1) + (B1), (E6) + (A2.2) + (A3.2) + (B1), (E6) + (A2.2) + (A4.1) + (B1), (E6) + (A2.2) + (A4.2) + (B1);
(E6) + (A3.1) + (A3.2) + (B1), (E6) + (A3.1) + (A4.1) + (B1), (E6) + (A3.1) + (A4.2) + (B1); (E6) + (A3.2) + (A4.1) + (B1), (E6) + (A3.2) + (A4.2) + (B1), (E6) + (A4.1) + (A4.2) + (B1);
(E6) + (A1.1) + (A1.2) + (B2), (E6) + (A1.1) + (A2.1) + (B2), (E6) + (A1.1) + (A2.2) + (B2), (E6) + (A1.1) + (A3.1) + (B2), (E6) + (A1.1) + (A3.2) + (B2), (E6) + (A1.1) + (A4.1) + (B2), (E6) + (A1.1) + (A4.2) + (B2);
(E6) + (A1.2) + (A2.1) + (B2), (E6) + (A1.2) + (A2.2) + (B2), (E6) + (A1.2) + (A3.1) + (B2), (E6) + (A1.2) + (A3.2) + (B2), (E6) + (A1.2) + (A4.1) + (B2), (E6) + (A1.2) + (A4.2) + (B2);
(E6) + (A2.1) + (A2.2) + (B2), (E6) + (A2.1) + (A3.1) + (B2), (E6) + (A2.1) + (A3.2) + (B2), (E6) + (A2.1) + (A4.1) + (B2), (E6) + (A2.1) + (A4.2) + (B2);
(E6) + (A2.2) + (A3.1) + (B2), (E6) + (A2.2) + (A3.2) + (B2), (E6) + (A2.2) + (A4.1) + (B2), (E6) + (A2.2) + (A4.2) + (B2);
(E6) + (A3.1) + (A3.2) + (B2), (E6) + (A3.1) + (A4.1) + (B2), (E6) + (A3.1) + (A4.2) + (B2); (E6) + (A3.2) + (A4.1) + (B2), (E6) + (A3.2) + (A4.2) + (B2), (E6) + (A4.1) + (A4.2) + (B2);
(E6) + (A1.1) + (A1.2) + (B3), (E6) + (A1.1) + (A2.1) + (B3), (E6) + (A1.1) + (A2.2) + (B3), (E6) + (A1.1) + (A3.1) + (B3), (E6) + (A1.1) + (A3.2) + (B3), (E6) + (A1.1) + (A4.1) + (B3), (E6) + (A1.1) + (A4.2) + (B3);
(E6) + (A1.2) + (A2.1) + (B3), (E6) + (A1.2) + (A2.2) + (B3), (E6) + (A1.2) + (A3.1) + (B3), (E6) + (A1.2) + (A3.2) + (B3), (E6) + (A1.2) + (A4.1) + (B3), (E6) + (A1.2) + (A4.2) + (B3);
(E6) + (A2.1) + (A2.2) + (B3), (E6) + (A2.1) + (A3.1) + (B3), (E6) + (A2.1) + (A3.2) + (B3), (E6) + (A2.1) + (A4.1) + (B3), (E6) + (A2.1) + (A4.2) + (B3);
(E6) + (A2.2) + (A3.1) + (B3), (E6) + (A2.2) + (A3.2) + (B3), (E6) + (A2.2) + (A4.1) + (B3), (E6) + (A2.2) + (A4.2) + (B3);
(E6) + (A3.1) + (A3.2) + (B3), (E6) + (A3.1) + (A4.1) + (B3), (E6) + (A3.1) + (A4.2) + (B3); (E6) + (A3.2) + (A4.1) + (B3), (E6) + (A3.2) + (A4.2) + (B3), (E6) + (A4.1) + (A4.2) + (B3);
(E6.1) + (A1.1) + (B1), (E6.1) + (A1.1) + (B2), (E6.1) + (A1.1) + (B3), (E6.1) + (A2.1) + (B1), (E6.1) + (A2.1) + (B2), (E6.1) + (A2.1) + (83), (E6.1) + (A3.1) + (B1), (E6.1) + (A3.1) + (B2), (E6.1) + (A3.1) + (B3), (E6.1) + (A4.1) + (B1), (E6.1) + (A4.1) + (B2),
(E6.1) + (A4.1) + (B3), (E6.1) + (A1.2) + (B1), (E6.1) + (A1.2) + (B2), (E6.1) + (A1.2) + (B3), (E6.1) + (A2.2) + (B 1), (E6.1) + (A2.2) + (B2), (E6.1) + (A2.2) + (B3), (E6.1) + (A3.2) + (B1), (E6.1) + (A3.2) + (B2), (E6.1) + (A3.2) + (B3), (E6.1) + (A4.2) + (B1),
(E6.1) + (A4.2) + (B2), (E6.1) + (A4.2) + (B3).
(E6.1) + (A1.1) + (A1.2) + (B1), (E6.1) + (A1.1) + (A2.1) + (B1), (E6.1) + (A1.1) + (A2.2) + (B1), (E6.1) + (A1.1) + (A3.1) + (B1), (E6.1) + (A1.1) + (A3.2) + (B1), (E6.1) + (A1.1) + (A4.1) + (B1), (E6.1) + (A1.1) + (A4.2) + (B1);
(E6.1) + (A1.2) + (A2.1) + (B1), (E6.1) + (A1.2) + (A2.2) + (B1), (E6.1) + (A1.2) + (A3.1) + (B1), (E6.1) + (A1.2) + (A3.2) + (B1), (E6.1) + (A1.2) + (A4.1) + (B1), (E6.1) + (A1.2) + (A4.2) + (B1);
(E6.1) + (A2.1) + (A2.2) + (B1), (E6.1) + (A2.1) + (A3.1) + (B1), (E6.1) + (A2.1) + (A3.2)+(B1), (E6.1) + (A2.1) + (A4.1) + (B1), (E6.1) + (A2.1) + (A4.2) + (B1);
(E6.1) + (A2.2) + (A3.1) + (B1), (E6.1) + (A2.2) + (A3.2) + (B1), (E6.1) + (A2.2) + (A4.1) + (B1), (E6.1) + (A2.2) + (A4.2) + (B1);
(E6.1) + (A3.1) + (A3.2) + (B1), (E6.1) + (A3.1) + (A4.1) + (B1), (E6.1) + (A3.1) + (A4.2) + (B1); (E6.1) + (A3.2) + (A4.1) + (B1), (E6.1) + (A3.2) + (A4.2) + (B1), (E6.1) + (A4.1) + (A4.2) + (B1);
(E6.1) + (A1.1) + (A1.2) + (B2), (E6.1) + (A1.1) + (A2.1) + (B2), (E6.1) + (A1.1) + (A2.2) + (B2), (E6.1) + (A1.1) + (A3.1) + (B2), (E6.1) + (A1.1) + (A3.2) + (B2), (E6.1) + (A1.1) + (A4.1) + (B2), (E6.1) + (A1.1) + (A4.2) + (B2);
(E6.1) + (A1.2) + (A2.1) + (B2), (E6.1) + (A1.2) + (A2.2) + (B2), (E6.1) + (A1.2) + (A3.1) + (B2), (E6.1) + (A1.2) + (A3.2) + (B2), (E6.1) + (A1.2) + (A4.1) + (B2), (E6.1) + (A1.2) + (A4.2) + (B2);
(E6.1) + (A2.1) + (A2.2) + (B2), (E6.1) + (A2.1) + (A3.1) + (B2), (E6.1) + (A2.1) + (A3.2) + (B2), (E6.1) + (A2.1) + (A4.1) + (B2), (E6.1) + (A2.1) + (A4.2) + (B2);
(E6.1) + (A2.2) + (A3.1) + (B2), (E6.1) + (A2.2) + (A3.2) + (B2), (E6.1) + (A2.2) + (A4.1) + (B2), (E6.1) + (A2.2) + (A4.2) + (B2);
(E6.1) + (A3.1) + (A3.2) + (B2), (E6.1) + (A3.1) + (A4.1) + (B2), (E6.1) + (A3.1) + (A4.2) + (B2); (E6.1) + (A3.2) + (A4.1) + (B2), (E6.1) + (A3.2) + (A4.2) + (B2), (E6.1) + (A4.1) + (A4.2) + (B2);
(E6.1) + (A1.1) + (A1.2) + (B3), (E6.1) + (A1.1) + (A2.1) + (B3), (E6.1) + (A1.1) + (A2.2) + (B3), (E6.1) + (A1.1) + (A3.1) + (B3), (E6.1) + (A1.1) + (A3.2) + (B3), (E6.1) + (A1.1) + (A4.1) + (B3), (E6.1) + (A1.1) + (A4.2) + (B3);
(E6.1) + (A1.2) + (A2.1) + (B3), (E6.1) + (A1.2) + (A2.2) + (B3), (E6.1) + (A1.2) + (A3.1) + (B3), (E6.1) + (A1.2) + (A3.2) + (B3), (E6.1) + (A1.2) + (A4.1) + (B3), (E6.1) + (A1.2) + (A4.2) + (B3);
(E6.1) + (A2.1) + (A2.2) + (B3), (E6.1) + (A2.1) + (A3.1) + (B3), (E6.1) + (A2.1) + (A3.2) + (B3), (E6.1) + (A2.1) + (A4.1) + (B3), (E6.1) + (A2.1) + (A4.2) + (B3);
(E6.1) + (A2.2) + (A3.1) + (B3), (E6.1) + (A2.2) + (A3.2) + (B3), (E6.1) + (A2.2) + (A4.1) + (B3), (E6.1) + (A2.2) + (A4.2) + (B3);
(E6.1) + (A3.1) + (A3.2) + (B3), (E6.1) + (A3.1) + (A4.1) + (B3), (E6.1) + (A3.1) + (A4.2) + (B3); (E6.1) + (A3.2) + (A4.1) + (B3), (E6.1) + (A3.2) + (A4.2) + (B3), (E6.1) + (A4.1) + (A4.2) + (B3);
(E6.2) + (A1.1) + (B1), (E6.2) + (A1.1) + (B2), (E6.2) + (A1.1) + (B3), (E6.2) + (A2.1) + (B1), (E6.2) + (A2.1) + (B2), (E6.2) + (A2.1) + (B3), (E6.2) + (A3.1) + (B1), (E6.2) + (A3.1) + (B2), (E6.2) + (A3.1) + (B3), (E6.2) + (A4.1) + (B1), (E6.2) + (A4.1) + (B2),
(E6.2) + (A4.1) + (B3), (E6.2) + (A1.2) + (B1), (E6.2) + (A1.2) + (B2), (E6.2) + (A1.2) + (B3), (E6.2) + (A2.2) + (B1), (E6.2) + (A2.2) + (B2), (E6.2) + (A2.2) + (B3), (E6.2) + (A3.2) + (B1), (E6.2) + (A3.2) + (B2), (E6.2) + (A3.2) + (B3), (E6.2) + (A4.2) + (B1),
(E6.2) + (A4.2) + (B2), (E6.2) + (A4.2) + (B3),
(E6.2) + (A1.1) + (A1.2) + (B1), (E6.2) + (A1.1) + (A2.1) + (B1), (E6.2) + (A1.1) + (A2.2) + (B1), (E6.2) + (A1.1) + (A3.1) + (B1), (E6.2) + (A1.1) + (A3.2) + (B1), (E6.2) + (A1.1) + (A4.1) + (B1), (E6.2) + (A1.1) + (A4.2) + (B1);
(E6.2) + (A1.2) + (A2.1) + (B1), (E6.2) + (A1.2) + (A2.2) + (B1), (E6.2) + (A1.2) + (A3.1) + (B1), (E6.2) + (A1.2) + (A3.2) + (B1), (E6.2) + (A1.2) + (A4.1) + (B1), (E6.2) + (A1.2) + (A4.2) + (B1);
(E6.2) + (A2.1) + (A2.2) + (B1), (E6.2) + (A2.1) + (A3.1) + (B1), (E6.2) + (A2.1) + (A3.2) + (B1), (E6.2) + (A2.1) + (A4.1) + (B1), (E6.2) + (A2.1) + (A4.2) + (B1);
(E6.2) + (A2.2) + (A3.1) + (B1), (E6.2) + (A2.2) + (A3.2) + (B1), (E6.2) + (A2.2) + (A4.1) + (B1), (E6.2) + (A2.2) + (A4.2) + (B1);
(E6.2) + (A3.1) + (A3.2) + (B1), (E6.2) + (A3.1) + (A4.1) + (B1), (E6.2) + (A3.1) + (A4.2) + (B1); (E6.2) + (A3.2) + (A4.1) + (B1), (E6.2) + (A3.2) + (A4.2) + (B1), (E6.2) + (A4.1) + (A4.2) + (B1);
(E6.2) + (A1.1) + (A1.2) + (B2), (E6.2) + (A1.1) + (A2.1) + (B2), (E6.2) + (A1.1) + (A2.2) + (B2), (E6.2) + (A1.1) + (A3.1) + (B2), (E6.2) + (A1.1) + (A3.2) + (B2), (E6.2) + (A1.1) + (A4.1) + (B2), (E6.2) + (A1.1) + (A4.2) + (B2);
(E6.2) + (A1.2) + (A2.1) + (B2), (E6.2) + (A1.2) + (A2.2) + (B2), (E6.2) + (A1.2) + (A3.1) + (B2), (E6.2) + (A1.2) + (A3.2) + (B2), (E6.2) + (A1.2) + (A4.1) + (B2), (E6.2) + (A1.2) + (A4.2) + (B2);
(E6.2) + (A2.1) + (A2.2) + (B2), (E6.2) + (A2.1) + (A3.1) + (B2), (E6.2) + (A2.1) + (A3.2) + (B2), (E6.2) + (A2.1) + (A4.1) + (B2), (E6.2) + (A2.1) + (A4.2) + (B2);
(E6.2) + (A2.2) + (A3.1) + (B2), (E6.2) + (A2.2) + (A3.2) + (B2), (E6.2) + (A2.2) + (A4.1) + (B2), (E6.2) + (A2.2) + (A4.2) + (B2);
(E6.2) + (A3.1) + (A3.2) + (B2), (E6.2) + (A3.1) + (A4.1) + (B2), (E6.2) + (A3.1) + (A4.2) + (B2); (E6.2) + (A3.2) + (A4.1) + (B2), (E6.2) + (A3.2) + (A4.2) + (B2), (E6.2) + (A4.1) + (A4.2) + (B2);
(E6.2) + (A1.1) + (A1.2) + (B3), (E6.2) + (A1.1) + (A2.1) + (B3), (E6.2) + (A1.1) + (A2.2) + (B3), (E6.2) + (A1.1) + (A3.1) + (B3), (E6.2) + (A1.1) + (A3.2) + (B3), (E6.2) + (A1.1) + (A4.1) + (B3), (E6.2) + (A1.1) + (A4.2) + (B3);
(E6.2) + (A1.2) + (A2.1) + (B3), (E6.2) + (A1.2) + (A2.2) + (B3), (E6.2) + (A1.2) + (A3.1) + (B3), (E6.2) + (A1.2) + (A3.2) + (B3), (E6.2) + (A1.2) + (A4.1) + (B3), (E6.2) + (A1.2) + (A4.2) + (B3);
(E6.2) + (A2.1) + (A2.2) + (B3), (E6.2) + (A2.1) + (A3.1) + (B3), (E6.2) + (A2.1) + (A3.2) + (B3), (E6.2) + (A2.1) + (A4.1) + (B3), (E6.2) + (A2.1) + (A4.2) + (B3);
(E6.2) + (A2.2) + (A3.1) + (B3), (E6.2) + (A2.2) + (A3.2) + (B3), (E6.2) + (A2.2) + (A4.1) + (B3), (E6.2) + (A2.2) + (A4.2) + (B3);
(E6.2) + (A3.1) + (A3.2) + (B3), (E6.2) + (A3.1) + (A4.1) + (B3), (E6.2) + (A3.1) + (A4.2) + (B3); (E6.2) + (A3.2) + (A4.1) + (B3), (E6.2) + (A3.2) + (A4.2) + (B3), (E6.2) +(A4.1)+(A4.2)+(B3);
(E6.3) + (A1.1) + (B1), (E6.3) + (A1.1) + (B2), (E6.3) + (A1.1) + (B3), (E6.3) + (A2.1) + (B1), (E6.3) + (A2.1) + (B2), (E6.3) + (A2.1) + (B3), (E6.3) + (A3.1) + (B1), (E6.3) + (A3.1) + (B2), (E6.3) + (A3.1) + (B3), (E6.3) + (A4.1) + (B1), (E6.3) + (A4.1) + (B2),
(E6.3) + (A4.1) + (B3), (E6.3) + (A1.2) + (B1), (E6.3) + (A1.2) + (B2), (E6.3) + (A1.2) + (B3), (E6.3) + (A2.2) + (B1), (E6.3) + (A2.2) + (B2), (E6.3) + (A2.2) + (B3), (E6.3) + (A3.2) + (B1), (E6.3) + (A3.2) + (B2), (E6.3) + (A3.2) + (B3), (E6.3) + (A4.2) + (B1),
(E6.3) + (A4.2) + (B2), (E6.3) + (A4.2) + (B3),
(E6.3) + (A1.1) + (A1.2) + (B1), (E6.3) + (A1.1) + (A2.1) + (B1), (E6.3) + (A1.1) + (A2.2) + (B1), (E6.3) + (A1.1) + (A3.1) + (B1), (E6.3) + (A1.1) + (A3.2) + (B1), (E6.3) + (A1.1) + (A4.1) + (B1), (E6.3) + (A1.1) + (A4.2) + (B1);
(E6.3) + (A1.2) + (A2.1) + (B1), (E6.3) + (A1.2) + (A2.2) + (B1), (E6.3) + (A1.2) + (A3.1) + (B1), (E6.3) + (A1.2) + (A3.2) + (B1), (E6.3) + (A1.2) + (A4.1) + (B1), (E6.3) + (A1.2) + (A4.2) + (B1);
(E6.3) + (A2.1) + (A2.2) + (B1), (E6.3) + (A2.1) + (A3.1) + (B1), (E6.3) + (A2.1) + (A3.2) + (B1), (E6.3) + (A2.1) + (A4.1) + (B1), (E6.3) + (A2.1) + (A4.2) + (B1);
(E6.3) + (A2.2) + (A3.1) + (B1), (E6.3) + (A2.2) + (A3.2) + (B1), (E6.3) + (A2.2) + (A4.1) + (B1), (E6.3) + (A2.2) + (A4.2) + (B1);
(E6.3) + (A3.1) + (A3.2) + (B1), (E6.3) + (A3.1) + (A4.1) + (B1), (E6.3) + (A3.1) + (A4.2) + (B1); (E6.3) + (A3.2) + (A4.1) + (B1), (E6.3) + (A3.2) + (A4.2) + (B1), (E6.3) +(A4.1)+(A4.2)+(B1);
(E6.3) + (A1.1) + (A1.2) + (B2), (E6.3) + (A1.1) + (A2.1) + (B2), (E6.3) + (A1.1) + (A2.2) + (B2), (E6.3) + (A1.1) + (A3.1) + (B2), (E6.3) + (A1.1) + (A3.2) + (B2), (E6.3) + (A1.1) + (A4.1) + (B2), (E6.3) + (A1.1) + (A4.2) + (B2);
(E6.3) + (A1.2) + (A2.1) + (B2), (E6.3) + (A1.2) + (A2.2) + (B2), (E6.3) + (A1.2) + (A3.1) + (B2), (E6.3) + (A1.2) + (A3.2) + (B2), (E6.3) + (A1.2) + (A4.1) + (B2), (E6.3) + (A1.2) + (A4.2) + (B2);
(E6.3) + (A2.1) + (A2.2) + (B2), (E6.3) + (A2.1) + (A3.1) + (B2), (E6.3) + (A2.1) + (A3.2) + (B2), (E6.3) + (A2.1) + (A4.1) + (B2), (E6:3) + (A2.1) + (A4.2) + (B2);
(E6.3) + (A2.2) + (A3.1) + (B2), (E6.3) + (A2.2) + (A3.2) + (B2), (E6.3) + (A2.2) + (A4.1) + (B2), (E6.3) + (A2.2) + (A4.2) + (B2);
(E6.3) + (A3.1) + (A3.2) + (B2), (E6.3) + (A3.1) + (A4.1) + (B2), (E6.3) + (A3.1) + (A4.2) + (B2); (E6.3) + (A3.2) + (A4.1) + (B2), (E6.3) + (A3.2) + (A4.2) + (B2), (E6.3) + (A4.1) + (A4.2) + (B2);
(E6.3) + (A1.1) + (A1.2) + (B3), (E6.3) + (A1.1) + (A2.1) + (B3), (E6.3) + (A1.1) + (A2.2) + (B3), (E6.3) + (A1.1) + (A3.1) + (B3), (E6.3) + (A1.1) + (A3.2) + (B3), (E6.3) + (A1.1) + (A4.1) + (B3), (E6.3) + (A1.1) + (A4.2) + (B3);
(E6.3) + (A1.2) + (A2.1) + (B3), (E6.3) + (A1.2) + (A2.2) + (B3), (E6.3) + (A1.2) + (A3.1) + (B3), (E6.3) + (A1.2) + (A3.2) + (B3), (E6.3) + (A1.2) + (A4.1) + (B3), (E6.3) + (A1.2) + (A4.2) + (B3);
(E6.3) + (A2.1) + (A2.2) + (B3), (E6.3) + (A2.1) + (A3.1) + (B3), (E6.3) + (A2.1) + (A3.2) + (B3), (E6.3) + (A2.1) + (A4.1) + (B3), (E6.3) + (A2.1) + (A4.2) + (B3);
(E6.3) + (A2.2) + (A3.1) + (B3), (E6.3) + (A2.2) + (A3.2) + (B3), (E6.3) + (A2.2) + (A4.1) + (B3), (E6.3) + (A2.2) + (A4.2) + (B3);
(E6.3) + (A3.1) + (A3.2) + (B3), (E6.3) + (A3.1) + (A4.1) + (B3), (E6.3) + (A3.1) + (A4.2) + (B3); (E6.3) + (A3.2) + (A4.1) + (B3), (E6.3) + (A3.2) + (A4.2) + (B3), (E6.3) + (A4.1) + (A4.2) + (B3);
(E6.4) + (A1.1) + (B1), (E6.4) + (A1.1) + (B2), (E6.4) + (A1.1) + (B3), (E6.4) + (A2.1) + (B1), (E6.4) + (A2.1) + (B2), (E6.4) + (A2.1) + (B3), (E6.4) + (A3.1) + (B1), (E6.4) + (A3.1) + (B2), (E6.4) + (A3.1) + (B3), (E6.4) + (A4.1) + (B1), (E6.4) + (A4.1) + (B2),
(E6.4) + (A4.1) + (B3), (E6.4) + (A1.2) + (B1), (E6.4) + (A1.2) + (B2), (E6.4) + (A1.2) + (B3), (E6.4) + (A2.2) + (B1), (E6.4) + (A2.2) + (B2), (E6.4) + (A2.2) + (B3), (E6.4) + (A3.2) + (B1), (E6.4) + (A3.2) + (B2), (E6.4) + (A3.2) + (B3), (E6.4) + (A4.2) + (B1),
(E6.4) + (A4.2) + (B2), (E6.4) + (A4.2) + (B3),
(E6.4) + (A1.1) + (A1.2) + (B1), (E6.4) + (A1.1) + (A2.1) + (B1), (E6.4) + (A1.1) + (A2.2) + (B1), (E6.4) + (A1.1) + (A3.1) + (B1), (E6.4) + (A1.1) + (A3.2) + (B1), (E6.4) + (A1.1) + (A4.1) + (B1), (E6.4) + (A1.1) + (A4.2) + (B1);
(E6.4) + (A1.2) + (A2.1) + (B1), (E6.4) + (A1.2) + (A2.2) + (B1), (E6.4) + (A1.2) + (A3.1) + (B1), (E6.4) + (A1.2) + (A3.2) + (B1), (E6.4) + (A1.2) + (A4.1) + (B1), (E6.4) + (A1.2) + (A4.2) + (B1);
(E6.4) + (A2.1) + (A2.2) + (B1), (E6.4) + (A2.1) + (A3.1) + (B1), (E6.4) + (A2.1) + (A3.2) + (B1), (E6.4) + (A2.1) + (A4.1) + (B1), (E6.4) + (A2.1) + (A4.2) + (B1);
(E6.4) + (A2.2) + (A3.1) + (B1), (E6.4) + (A2.2) + (A3.2) + (B1), (E6.4) + (A2.2) + (A4.1) + (B1), (E6.4) + (A2.2) + (A4.2) + (B1);
(E6.4) + (A3.1) + (A3.2) + (B1), (E6.4) + (A3.1) + (A4.1) + (B1), (E6.4) + (A3.1) + (A4.2) + (B1); (E6.4) + (A3.2) + (A4.1) + (B1), (E6.4) + (A3.2) + (A4.2) + (B1), (E6.4) +(A4.1)+(A4.2)+(B1);
(E6.4) + (A1.1) + (A1.2) + (B2), (E6.4) + (A1.1) + (A2.1) + (B2), (E6.4) + (A1.1) + (A2.2) + (B2), (E6.4) + (A1.1) + (A3.1) + (B2), (E6.4) + (A1.1) + (A3.2) + (B2), (E6.4) + (A1.1) + (A4.1) + (B2), (E6.4) + (A1.1) + (A4.2) + (B2);
(E6.4) + (A1.2) + (A2.1) + (B2), (E6.4) + (A1.2) + (A2.2) + (B2), (E6.4) + (A1.2) + (A3.1) + (B2), (E6.4) + (A1.2) + (A3.2) + (B2), (E6.4) + (A1.2) + (A4.1) + (B2), (E6.4) + (A1.2) + (A4.2) + (B2);
(E6.4) + (A2.1) + (A2.2) + (B2), (E6.4) + (A2.1) + (A3.1) + (B2), (E6.4) + (A2.1) + (A3.2) + (B2), (E6.4) + (A2.1) + (A4.1) + (B2), (E6.4) + (A2.1) + (A4.2) + (B2);
(E6.4) + (A2.2) + (A3.1) + (B2), (E6.4) + (A2.2) + (A3.2) + (B2), (E6.4) + (A2.2) + (A4.1) + (B2), (E6.4) + (A2.2) + (A4.2) + (B2);
(E6.4) + (A3.1) + (A3.2) + (B2), (E6.4) + (A3.1) + (A4.1) + (B2), (E6.4) + (A3.1) + (A4.2) + (B2); (E6.4) + (A3.2) + (A4.1) + (B2), (E6.4) + (A3.2) + (A4.2) + (B2), (E6.4) + (A4.1) + (A4.2) + (B2);
(E6.4) + (A1.1) + (A1.2) + (B3), (E6.4) + (A1.1) + (A2.1) + (B3), (E6.4) + (A1.1) + (A2.2) + (B3), (E6.4) + (A1.1) + (A3.1) + (B3), (E6.4) + (A1.1) + (A3.2) + (B3), (E6.4) + (A1.1) + (A4.1) + (B3), (E6.4) + (A1.1) + (A4.2) + (B3);
(E6.4) + (A1.2) + (A2.1) + (B3), (E6.4) + (A1.2) + (A2.2) + (B3), (E6.4) + (A1.2) + (A3.1) + (B3), (E6.4) + (A1.2) + (A3.2) + (B3), (E6.4) + (A1.2) + (A4.1) + (B3), (E6.4) + (A1.2) + (A4.2) + (B3);
(E6.4) + (A2.1) + (A2.2) + (B3), (E6.4) + (A2.1) + (A3.1) + (B3), (E6.4) + (A2.1) + (A3.2) + (B3), (E6.4) + (A2.1) + (A4.1) + (B3), (E6.4) + (A2.1) + (A4.2) + (B3);
(E6.4) + (A2.2) + (A3.1) + (B3), (E6.4) + (A2.2) + (A3.2) + (B3), (E6.4) + (A2.2) + (A4.1) + (B3), (E6.4) + (A2.2) + (A4.2) + (B3);
(E6.4) + (A3.1) + (A3.2) + (B3), (E6.4) + (A3.1) + (A4.1) + (B3), (E6.4) + (A3.1) + (A4.2) + (B3); (E6.4) + (A3.2) + (A4.1) + (B3), (E6.4) + (A3.2) + (A4.2) + (B3), (E6.4) + (A4.1) + (A4.2) + (B3);
(E6.5) + (A1.1) + (B1), (E6.5) + (A1.1) + (B2), (E6.5) + (A1.1) + (B3), (E6.5) + (A2.1) + (B1), (E6.5) + (A2.1) + (B2), (E6.5) + (A2.1) + (B3), (E6.5) + (A3.1) + (B1), (E6.5) + (A3.1) + (B2), (E6.5) + (A3.1) + (B3), (E6.5) + (A4.1) + (B1), (E6.5) + (A4.1) + (B2),
(E6.5) + (A4.1) + (B3), (E6.5) + (A1.2) + (B1), (E6.5) + (A1.2) + (B2), (E6.5) + (A1.2) + (B3), (E6.5) + (A2.2) + (B1), (E6.5) + (A2.2) + (B2), (E6.5) + (A2.2) + (B3), (E6.5) + (A3.2) + (B1), (E6.5) + (A3.2) + (B2), (E6.5) + (A3.2) + (B3), (E6.5) + (A4.2) + (B1),
(E6.5) + (A4.2) + (B2), (E6.5) + (A4.2) + (B3),
(E6.5) + (A1.1) + (A1.2) + (B1), (E6.5) + (A1.1) + (A2.1) + (B1), (E6.5) + (A1.1) + (A2.2) + (B1), (E6.5) + (A1.1) + (A3.1) + (B1), (E6.5) + (A1.1) + (A3.2) + (B1), (E6.5) + (A1.1) + (A4.1) + (B1), (E6.5) + (A1.1) + (A4.2) + (B1);
(E6.5) + (A1.2) + (A2.1) + (B1), (E6.5) + (A1.2) + (A2.2) + (B1), (E6.5) + (A1.2) + (A3.1) + (B1), (E6.5) + (A1.2) + (A3.2) + (B1), (E6.5) + (A1.2) + (A4.1) + (B1), (E6.5) + (A1.2) + (A4.2)+(B1);
(E6.5) + (A2.1) + (A2.2) + (B1), (E6.5) + (A2.1) + (A3.1) + (B1), (E6.5) + (A2.1) + (A3.2) + (B1), (E6.5) + (A2.1) + (A4.1) + (B1), (E6.5) + (A2.1) + (A4.2) + (B1);
(E6.5) + (A2.2) + (A3.1) + (B1), (E6.5) + (A2.2) + (A3.2) + (B1), (E6.5) + (A2.2) + (A4.1) + (B1), (E6.5) + (A2.2) + (A4.2) + (B1);
(E6.5) + (A3.1) + (A3.2) + (B1), (E6.5) + (A3.1) + (A4.1) + (B1), (E6.5) + (A3.1) + (A4.2) + (B1); (E6.5) + (A3.2) + (A4.1) + (B1), (E6.5) + (A3.2) + (A4.2) + (B1), (E6.5) + (A4.1) + (A4.2) + (B1);
(E6.5) + (A1.1) + (A1.2) + (B2), (E6.5) + (A1.1) + (A2.1) + (B2), (E6.5) + (A1.1) + (A2.2) + (B2), (E6.5) + (A1.1) + (A3.1) + (B2), (E6.5) + (A1.1) + (A3.2) + (B2), (E6.5) + (A1.1) + (A4.1) + (B2), (E6.5) + (A1.1) + (A4.2) + (B2);
(E6.5) + (A1.2) + (A2.1) + (B2), (E6.5) + (A1.2) + (A2.2) + (B2), (E6.5) + (A1.2) + (A3.1) + (B2), (E6.5) + (A1.2) + (A3.2) + (B2), (E6.5) + (A1.2) + (A4.1) + (B2), (E6.5) + (A1.2) + (A4.2) + (B2);
(E6.5) + (A2.1) + (A2.2) + (B2), (E6.5) + (A2.1) + (A3.1) + (B2), (E6.5) + (A2.1) + (A3.2) + (B2), (E6.5) + (A2.1) + (A4.1) + (B2), (E6.5) + (A2.1) + (A4.2) + (B2);
(E6.5) + (A2.2) + (A3.1) + (B2), (E6.5) + (A2.2) + (A3.2) + (B2), (E6.5) + (A2.2) + (A4.1) + (B2), (E6.5) + (A2.2) + (A4.2) + (B2);
(E6.5) + (A3.1) + (A3.2) + (B2), (E6.5) + (A3.1) + (A4.1) + (B2), (E6.5) + (A3.1) + (A4.2) + (B2); (E6.5) + (A3.2) + (A4.1) + (B2), (E6.5) + (A3.2) + (A4.2) + (B2), (E6.5) + (A4.1) + (A4.2) + (B2);
(E6.5) + (A1.1) + (A1.2) + (B3), (E6.5) + (A1.1) + (A2.1) + (B3), (E6.5) + (A1.1) + (A2.2) + (B3), (E6.5) + (A1.1) + (A3.1) + (B3), (E6.5) + (A1.1) + (A3.2) + (B3), (E6.5) + (A1.1) + (A4.1) + (B3), (E6.5) + (A1.1) + (A4.2) + (B3);
(E6.5) + (A1.2) + (A2.1) + (B3), (E6.5) + (A1.2) + (A2.2) + (B3), (E6.5) + (A1.2) + (A3.1) + (B3), (E6.5) + (A1.2) + (A3.2) + (B3), (E6.5) + (A1.2) + (A4.1) + (B3), (E6.5) + (A1.2) + (A4.2) + (B3);
(E6.5) + (A2.1) + (A2.2) + (B3), (E6.5) + (A2.1) + (A3.1) + (B3), (E6.5) + (A2.1) + (A3.2) + (B3), (E6.5) + (A2.1) + (A4.1) + (B3), (E6.5) + (A2.1) + (A4.2) + (B3);
(E6.5) + (A2.2) + (A3.1) + (B3), (E6.5) + (A2.2) + (A3.2) + (B3), (E6.5) + (A2.2) + (A4.1) + (B3), (E6.5) + (A2.2) + (A4.2) + (B3);
(E6.5) + (A3.1) + (A3.2) + (B3), (E6.5) + (A3.1) + (A4.1) + (B3), (E6.5) + (A3.1) + (A4.2) + (B3); (E6.5) + (A3.2) + (A4.1) + (B3), (E6.5) + (A3.2) + (A4.2) + (B3), (E6.5) + (A4.1) + (A4.2) + (B3);
(E7) + (A1.1) + (B1), (E7) + (A1.1) + (B2), (E7) + (A1.1) + (B3), (E7) + (A2.1) + (B1),
(E7) + (A2.1) + (B2), (E7) + (A2.1) + (B3), (E7) + (A3.1) + (B1), (E7) + (A3.1) + (B2),
(E7) + (A3.1) + (B3), (E7) + (A4.1) + (B1), (E7) + (A4.1) + (B2), (E7) + (A4.1) + (B3),
(E7) + (A1.2) + (B1), (E7) + (A1.2) + (B2), (E7) + (A1.2) + (B3), (E7) + (A2.2) + (B1),
(E7) + (A2.2) + (B2), (E7) + (A2.2) + (B3), (E7) + (A3.2) + (B1), (E7) + (A3.2) + (B2),
(E7) + (A3.2) + (B3), (E7) + (A4.2) + (B1), (E7) + (A4.2) + (B2), (E7) + (A4.2) + (B3),
(E7) + (A1.1) + (A1.2) + (B1), (E7) + (A1.1) + (A2.1) + (B1), (E7) + (A1.1) + (A2.2) + (B1), (E7) + (A1.1) + (A3.1) + (B1), (E7) + (A1.1) + (A3.2) + (B1), (E7) + (A1.1) + (A4.1) + (B1), (E7) + (A1.1) + (A4.2) + (B1);
(E7) + (A1.2) + (A2.1) + (B1), (E7) + (A1.2) + (A2.2) + (B1), (E7) + (A1.2) + (A3.1) + (B1), (E7) + (A1.2) + (A3.2) + (B1), (E7) + (A1.2) + (A4.1) + (B1), (E7) + (A1.2) + (A4.2) + (B1);
(E7) + (A2.1) + (A2.2) + (B1), (E7) + (A2.1) + (A3.1) + (B1), (E7) + (A2.1) + (A3.2) + (B1), (E7) + (A2.1) + (A4.1) + (B1), (E7) + (A2.1) + (A4.2) + (B1);
(E7) + (A2.2) + (A3.1) + (B1), (E7) + (A2.2) + (A3.2) + (B1), (E7) + (A2.2) + (A4.1) + (B1), (E7) + (A2.2) + (A4.2) + (B1);
(E7) + (A3.1) + (A3.2) + (B1), (E7) + (A3.1) + (A4.1) + (B1), (E7) + (A3.1) + (A4.2) + (B1); (E7) + (A3.2) + (A4.1) + (B1), (E7) + (A3.2) + (A4.2) + (B1), (E7) + (A4.1) + (A4.2) + (B1);
(E7) + (A1.1) + (A1.2) + (B2), (E7) + (A1.1) + (A2.1) + (B2), (E7) + (A1.1) + (A2.2) + (B2), (E7) + (A1.1) + (A3.1) + (B2), (E7) + (A1.1) + (A3.2) + (B2), (E7) + (A1.1) + (A4.1) + (B2), (E7) + (A1.1) + (A4.2) + (B2);
(E7) + (A1.2) + (A2.1) + (B2), (E7) + (A1.2) + (A2.2) + (B2), (E7) + (A1.2) + (A3.1) + (B2), (E7) + (A1.2) + (A3.2) + (B2), (E7) + (A1.2) + (A4.1) + (B2), (E7) + (A1.2) + (A4.2) + (B2);
(E7) + (A2.1) + (A2.2) + (B2), (E7) + (A2.1) + (A3.1) + (B2), (E7) + (A2.1) + (A3.2) + (B2), (E7) + (A2.1) + (A4.1) + (B2), (E7) + (A2.1) + (A4.2) + (B2);
(E7) + (A2.2) + (A3.1) + (B2), (E7) + (A2.2) + (A3.2) + (B2), (E7) + (A2.2) + (A4.1) + (B2), (E7) + (A2.2) + (A4.2) + (B2);
(E7) + (A3.1) + (A3.2) + (B2), (E7) + (A3.1) + (A4.1) + (B2), (E7) + (A3.1) + (A4.2) + (B2); (E7) + (A3.2) + (A4.1) + (B2), (E7) + (A3.2) + (A4.2) + (B2), (E7) + (A4.1) + (A4.2) + (B2);
(E7) + (A1.1) + (A1.2) + (B3), (E7) + (A1.1) + (A2.1) + (B3), (E7) + (A1.1) + (A2.2) + (B3), (E7) + (A1.1) + (A3.1) + (B3), (E7) + (A1.1) + (A3.2) + (B3), (E7) + (A1.1) + (A4.1) + (B3), (E7) + (A1.1) + (A4.2) + (B3);
(E7) + (A1.2) + (A2.1) + (B3), (E7) + (A1.2) + (A2.2) + (B3), (E7) + (A1.2) + (A3.1) + (B3), (E7) + (A1.2) + (A3.2) + (B3), (E7) + (A1.2) + (A4.1) + (B3), (E7) + (A1.2) + (A4.2) + (B3);
(E7) + (A2.1) + (A2.2) + (B3), (E7) + (A2.1) + (A3.1) + (B3), (E7) + (A2.1) + (A3.2) + (B3), (E7) + (A2.1) + (A4.1) + (B3), (E7) + (A2.1) + (A4.2) + (B3);
(E7) + (A2.2) + (A3.1) + (B3), (E7) + (A2.2) + (A3.2) + (B3), (E7) + (A2.2) + (A4.1) + (B3), (E7) + (A2.2) + (A4.2) + (B3);
(E7) + (A3.1) + (A3.2) + (B3), (E7) + (A3.1) + (A4.1) + (B3), (E7) + (A3.1) + (A4.2) + (B3); (E7) + (A3.2) + (A4.1) + (B3), (E7) + (A3.2) + (A4.2) + (B3), (E7) + (A4.1) + (A4.2) + (B3);
(E7.1) + (A1.1) + (B1), (E7.1) + (A1.1) + (B2), (E7.1) + (A1.1) + (B3), (E7.1) + (A2.1) + (B1), (E7.1) + (A2.1) + (B2), (E7.1) + (A2.1) + (B3), (E7.1) + (A3.1) + (B1), (E7.1) + (A3.1) + (B2), (E7.1) + (A3.1) + (B3), (E7.1) + (A4.1) + (B1), (E7.1) + (A4.1) + (B2),
(E7.1) + (A4.1) + (B3), (E7.1) + (A1.2) + (B1), (E7.1) + (A1.2) + (B2), (E7.1) + (A1.2) + (B3), (E7.1) + (A2.2) + (B1), (E7.1) + (A2.2) + (B2), (E7.1) + (A2.2) + (B3), (E7.1) + (A3.2) + (B1), (E7.1) + (A3.2) + (B2), (E7.1) + (A3.2) + (B3), (E7.1) + (A4.2) + (B1),
(E7.1) + (A4.2) + (B2), (E7.1) + (A4.2) + (B3),
(E7.1) + (A1.1) + (A1.2) + (B1), (E7.1) + (A1.1) + (A2.1) + (B1), (E7.1) + (A1.1) + (A2.2) + (B1), (E7.1) + (A1.1) + (A3.1) + (B1), (E7.1) + (A1.1) + (A3.2) + (B1), (E7.1) + (A1.1) + (A4.1) + (B1), (E7.1) + (A1.1) + (A4.2) + (B1);
(E7.1) + (A1.2) + (A2.1) + (B1), (E7.1) + (A1.2) + (A2.2) + (B1), (E7.1) + (A1.2) + (A3.1) + (B1), (E7.1) + (A1.2) + (A3.2) + (B1), (E7.1) + (A1.2) + (A4.1) + (B1), (E7.1) + (A1.2) + (A4.2) + (B1);
(E7.1) + (A2.1) + (A2.2) + (B1), (E7.1) + (A2.1) + (A3.1) + (B1), (E7.1) + (A2.1) + (A3.2) + (B1), (E7.1) + (A2.1) + (A4.1) + (B1), (E7.1) + (A2.1) + (A4.2) + (B1);
(E7.1) + (A2.2) + (A3.1) + (B1), (E7.1) + (A2.2) + (A3.2) + (B1), (E7.1) + (A2.2) + (A4.1) + (B1), (E7.1) + (A2.2) + (A4.2) + (B1);
(E7.1) + (A3.1) + (A3.2) + (B1), (E7.1) + (A3.1) + (A4.1) + (B1), (E7.1) + (A3.1) + (A4.2) + (B1); (E7.1) + (A3.2) + (A4.1) + (B1), (E7.1) + (A3.2) + (A4.2) + (B1), (E7.1) + (A4.1) + (A4.2) + (B1);
(E7.1) + (A1.1) + (A1.2) + (B2), (E7.1) + (A1.1) + (A2.1) + (B2), (E7.1) + (A1.1) + (A2.2) + (B2), (E7.1) + (A1.1) + (A3.1) + (B2), (E7.1) + (A1.1) + (A3.2) + (B2), (E7.1) + (A1.1) + (A4.1) + (B2), (E7.1) + (A1.1) + (A4.2) + (B2);
(E7.1) + (A1.2) + (A2.1) + (B2), (E7.1) + (A1.2) + (A2.2) + (B2), (E7.1) + (A1.2) + (A3.1) + (B2), (E7.1) + (A1.2) + (A3.2) + (B2), (E7.1) + (A1.2) + (A4.1) + (B2), (E7.1) + (A1.2) + (A4.2) + (B2);
(E7.1) + (A2.1) + (A2.2) + (B2), (E7.1) + (A2.1) + (A3.1) + (B2), (E7.1) + (A2.1) + (A3.2) + (B2), (E7.1) + (A2.1) + (A4.1) + (B2), (E7.1) + (A2.1) + (A4.2) + (B2);
(E7.1) + (A2.2) + (A3.1) + (B2), (E7.1) + (A2.2) + (A3.2) + (B2), (E7.1) + (A2.2) + (A4.1) + (B2), (E7.1) + (A2.2) + (A4.2) + (B2);
(E7.1) + (A3.1) + (A3.2) + (B2), (E7.1) + (A3.1) + (A4.1) + (B2), (E7.1) + (A3.1) + (A4.2) + (B2); (E7.1) + (A3.2) + (A4.1) + (B2), (E7.1) + (A3.2) + (A4.2) + (B2), (E7.1) + (A4.1) + (A4.2) + (B2);
(E7.1) + (A1.1) + (A1.2) + (B3), (E7.1) + (A1.1) + (A2.1) + (B3), (E7.1) + (A1.1) + (A2.2) + (B3), (E7.1) + (A1.1) + (A3.1) + (B3), (E7.1) + (A1.1) + (A3.2) + (B3), (E7.1) + (A1.1) + (A4.1) + (B3), (E7.1) + (A1.1) + (A4.2) + (B3);
(E7.1) + (A1.2) + (A2.1) + (B3), (E7.1) + (A1.2) + (A2.2) + (B3), (E7.1) + (A1.2) + (A3.1) + (B3), (E7.1) + (A1.2) + (A3.2) + (B3), (E7.1) + (A1.2) + (A4.1) + (B3), (E7.1) + (A1.2) + (A4.2) + (B3);
(E7.1) + (A2.1) + (A2.2) + (B3), (E7.1) + (A2.1) + (A3.1) + (B3), (E7.1) + (A2.1) + (A3.2) + (B3), (E7.1) + (A2.1) + (A4.1) + (B3), (E7.1) + (A2.1) + (A4.2) + (B3);
(E7.1) + (A2.2) + (A3.1) + (B3), (E7.1) + (A2.2) + (A3.2) + (B3), (E7.1) + (A2.2) + (A4.1) + (B3), (E7.1) + (A2.2) + (A4.2)+(B3);
(E7.1) + (A3.1) + (A3.2) + (B3), (E7.1) + (A3.1) + (A4.1) + (B3), (E7.1) + (A3.1) + (A4.2) + (B3); (E7.1) + (A3.2) + (A4.1) + (B3), (E7.1) + (A3.2) + (A4.2) + (B3), (E7.1) + (A4. 1) + (A4.2) + (B3);
(E7.2) + (A1.1) + (B1), (E7.2) + (A1.1) + (B2), (E7.2) + (A1.1) + (B3), (E7.2) + (A2.1) + (B1). (E7.2) + (A2.1) + (B2), (E7.2) + (A2.1) + (B3), (E7.2) + (A3.1) + (B1), (E7.2) + (A3.1) + (B2), (E7.2) + (A3.1) + (B3), (E7.2) + (A4.1) + (B1), (E7.2) + (A4.1) + (B2),
(E7.2) + (A4.1) + (B3), (E7.2) + (A1.2) + (B1), (E7.2) + (A1.2) + (B2), (E7.2) + (A1.2) + (B3), (E7.2) + (A2.2) + (B1), (E7.2) + (A2.2) + (B2), (E7.2) + (A2.2) + (B3), (E7.2) + (A3.2) + (B1), (E7.2) + (A3.2) + (B2), (E7.2) + (A3.2) + (B3), (E7.2) + (A4.2) + (B1),
(E7.2) + (A4.2) + (B2), (E7.2) + (A4.2) + (B3),
(E7.2) + (A1.1) + (A1.2) + (B1), (E7.2) + (A1.1) + (A2.1) + (B1), (E7.2) + (A1.1) + (A2.2) + (B1), (E7.2) + (A1.1) + (A3.1) + (B1), (E7.2) + (A1.1) + (A3.2) + (B1), (E7.2) + (A1.1) + (A4.1) + (B1), (E7.2) + (A1.1) + (A4.2) + (B1);
(E7.2) + (A1.2) + (A2.1) + (B1), (E7.2) + (A1.2) + (A2.2) + (B1), (E7.2) + (A1.2) + (A3.1) + (B1), (E7.2) + (A1.2) + (A3.2) + (B1), (E7.2) + (A1.2) + (A4.1) + (B1), (E7.2) + (A1.2) + (A4.2) + (B1);
(E7.2) + (A2.1) + (A2.2) + (B1), (E7.2) + (A2.1) + (A3.1) + (B1), (E7.2) + (A2.1) + (A3.2) + (B1), (E7.2) + (A2.1) + (A4.1) + (B1), (E7.2) + (A2.1) + (A4.2) + (B1);
(E7.2) + (A2.2) + (A3.1) + (B1), (E7.2) + (A2.2) + (A3.2) + (B1), (E7.2) + (A2.2) + (A4.1) + (B1), (E7.2) + (A2.2) + (A4.2) + (B1);
(E7.2) + (A3.1) + (A3.2) + (B1), (E7.2) + (A3.1) + (A4.1) + (B1), (E7.2) + (A3.1) + (A4.2) + (B1); (E7.2) + (A3.2) + (A4.1) + (B1), (E7.2) + (A3.2) + (A4.2) + (B1), (E7.2) +(A4.1)+(A4.2)+(B1);
(E7.2) + (A1.1) + (A1.2) + (B2), (E7.2) + (A1.1) + (A2.1) + (B2), (E7.2) + (A1.1) + (A2.2) + (B2), (E7.2) + (A1.1) + (A3.1) + (B2), (E7.2) + (A1.1) + (A3.2) + (B2), (E7.2) + (A1.1) + (A4.1) + (B2), (E7.2) + (A1.1) + (A4.2) + (B2);
(E7.2) + (A1.2) + (A2.1) + (B2), (E7.2) + (A1.2) + (A2.2) + (B2), (E7.2) + (A1.2) + (A3.1) + (B2), (E7.2) + (A1.2) + (A3.2) + (B2), (E7.2) + (A1.2) + (A4.1) + (B2), (E7.2) + (A1.2) + (A4.2) + (B2);
(E7.2) + (A2.1) + (A2.2) + (B2), (E7.2) + (A2.1) + (A3.1) + (B2), (E7.2) + (A2.1) + (A3.2) + (B2), (E7.2) + (A2.1) + (A4.1) + (B2), (E7.2) + (A2.1) + (A4.2) + (B2);
(E7.2) + (A2.2) + (A3.1) + (B2), (E7.2) + (A2.2) + (A3.2) + (B2), (E7.2) + (A2.2) + (A4.1) + (B2). (E7.2) + (A2.2) + (A4.2) + (B2);
(E7.2) + (A3.1) + (A3.2) + (B2), (E7.2) + (A3.1) + (A4.1) + (B2), (E7.2) + (A3.1) + (A4.2) + (B2); (E7.2) + (A3.2) + (A4.1) + (B2), (E7.2) + (A3.2) + (A4.2) + (B2), (E7.2) + (A4.1) + (A4.2) + (B2);
(E7.2) + (A1.1) + (A1.2) + (B3). (E7.2) + (A1.1) + (A2.1) + (B3), (E7.2) + (A1.1) + (A2.2) + (B3), (E7.2) + (A1.1) + (A3.1) + (B3), (E7.2) + (A1.1) + (A3.2) + (B3), (E7.2) + (A1.1) + (A4.1) + (B3), (E7.2) + (A1.1) + (A4.2) + (B3);
(E7.2) + (A1.2) + (A2.1) + (B3), (E7.2) + (A1.2) + (A2.2) + (B3), (E7.2) + (A1.2) + (A3.1) + (B3), (E7.2) + (A1.2) + (A3.2) + (B3), (E7.2) + (A1.2) + (A4.1) + (B3), (E7.2) + (A1.2) + (A4.2) + (B3);
(E7.2) + (A2.1) + (A2.2) + (B3), (E7.2) + (A2.1) + (A3.1) + (B3), (E7.2) + (A2.1) + (A3.2) + (B3), (E7.2) + (A2.1) + (A4.1) + (B3), (E7.2) + (A2.1) + (A4.2) + (B3);
(E7.2) + (A2.2) + (A3.1) + (B3), (E7.2) + (A2.2) + (A3.2) + (B3), (E7.2) + (A2.2) + (A4.1) + (B3), (E7.2) + (A2.2) + (A4.2) + (B3);
(E7.2) + (A3.1) + (A3.2) + (B3), (E7.2) + (A3.1) + (A4.1) + (B3), (E7.2) + (A3.1) + (A4.2) + (B3); (E7.2) + (A3.2) + (A4.1) + (B3), (E7.2) + (A3.2) + (A4.2) + (B3), (E7.2) + (A4.1) + (A4.2) + (B3);
(E8) + (A1.1) + (B1), (E8) + (A1.1) + (B2), (E8) + (A1.1) + (B3), (E8) + (A2.1) + (B1),
(E8) + (A2.1) + (B2), (E8) + (A2.1) + (B3), (E8) + (A3.1) + (B1), (E8) + (A3.1) + (B2),
(E8) + (A3.1) + (B3), (E8) + (A4.1) + (B1), (E8) + (A4.1) + (B2), (E8) + (A4.1) + (B3),
(E8) + (A1.2) + (B1), (E8) + (A1.2) + (B2), (E8) + (A1.2) + (B3), (E8) + (A2.2) + (B1),
(E8) + (A2.2) + (B2), (E8) + (A2.2) + (B3), (E8) + (A3.2) + (B1), (E8) + (A3.2) + (B2),
(E8) + (A3.2) + (B3), (E8) + (A4.2) + (B1), (E8) + (A4.2) + (B2), (E8) + (A4.2) + (B3),
(E8) + (A1.1) + (A1.2) + (B1), (E8) + (A1.1) + (A2.1) + (B1), (E8) + (A1.1) + (A2.2) + (B1), (E8) + (A1.1) + (A3.1) + (B1), (E8) + (A1.1) + (A3.2) + (B1), (E8) + (A1.1) + (A4.1) + (B1), (E8) + (A1.1) + (A4.2) + (B1);
(E8) + (A1.2) + (A2.1) + (B1), (E8) + (A1.2) + (A2.2) + (B1), (E8) + (A1.2) + (A3.1) + (B1), (E8) + (A1.2) + (A3.2) + (B1), (E8) + (A1.2) + (A4.1) + (B1), (E8) + (A1.2) + (A4.2) + (B1);
(E8) + (A2.1) + (A2.2) + (B1), (E8) + (A2.1) + (A3.1) + (B1), (E8) + (A2.1) + (A3.2) + (B1), (E8) + (A2.1) + (A4.1) + (B1), (E8) + (A2.1) + (A4.2) + (B1);
(E8) + (A2.2) + (A3.1) + (B1), (E8) + (A2.2) + (A3.2) + (B1), (E8) + (A2.2) + (A4.1) + (B1), (E8) + (A2.2) + (A4.2) + (B1);
(E8) + (A3.1) + (A3.2) + (B1), (E8) + (A3.1) + (A4.1) + (B1), (E8) + (A3.1) + (A4.2) + (B1); (E8) + (A3.2) + (A4.1) + (B1), (E8) + (A3.2) + (A4.2) + (B1), (E8) + (A4.1) + (A4.2)+(B1);
(E8) + (A1.1) + (A1.2) + (B2), (E8) + (A1.1) + (A2.1) + (B2), (E8) + (A1.1) + (A2.2) + (B2), (E8) + (A1.1) + (A3.1) + (B2), (E8) + (A1.1) + (A3.2) + (B2), (E8) + (A1.1) + (A4.1) + (B2), (E8) + (A1.1) + (A4.2) + (B2);
(E8) + (A1.2) + (A2.1) + (B2), (E8) + (A1.2) + (A2.2) + (B2), (E8) + (A1.2) + (A3.1) + (B2), (E8) + (A1.2) + (A3.2) + (B2), (E8) + (A1.2) + (A4.1) + (B2), (E8) + (A1.2) + (A4.2) + (B2);
(E8) + (A2.1) + (A2.2) + (B2), (E8) + (A2.1) + (A3.1) + (B2), (E8) + (A2.1) + (A3.2) + (B2), (E8) + (A2.1) + (A4.1) + (B2), (E8) + (A2.1) + (A4.2) + (B2);
(E8) + (A2.2) + (A3.1) + (B2), (E8) + (A2.2) + (A3.2) + (B2), (E8) + (A2.2) + (A4.1) + (B2), (E8) + (A2.2) + (A4.2) + (B2);
(E8) + (A3.1) + (A3.2) + (B2), (E8) + (A3.1) + (A4.1) + (B2), (E8) + (A3.1) + (A4.2) + (B2); (E8) + (A3.2) + (A4.1) + (B2), (E8) + (A3.2) + (A4.2) + (B2), (E8) + (A4.1) + (A4.2) + (B2);
(E8) + (A1.1) + (A1.2) + (B3), (E8) + (A1.1) + (A2.1) + (B3), (E8) + (A1.1) + (A2.2) + (B3), (E8) + (A1.1) + (A3.1) + (B3), (E8) + (A1.1) + (A3.2) + (B3), (E8) + (A1.1) + (A4.1) + (B3), (E8) + (A1.1) + (A4.2) + (B3);
(E8) + (A1.2) + (A2.1) + (B3), (E8) + (A1.2) + (A2.2) + (B3), (E8) + (A1.2) + (A3.1) + (B3), (E8) + (A1.2) + (A3.2) + (B3), (E8) + (A1.2) + (A4.1) + (B3), (E8) + (A1.2) + (A4.2) + (B3);
(E8) + (A2.1) + (A2.2) + (B3), (E8) + (A2.1) + (A3.1) + (B3), (E8) + (A2.1) + (A3.2) + (B3), (E8) + (A2.1) + (A4.1) + (B3), (E8) + (A2.1) + (A4.2) + (B3);
(E8) + (A2.2) + (A3.1) + (B3), (E8) + (A2.2) + (A3.2) + (B3), (E8) + (A2.2) + (A4.1) + (B3), (E8) + (A2.2) + (A4.2) + (B3);
(E8) + (A3.1) + (A3.2) + (B3), (E8) + (A3.1) + (A4.1) + (B3), (E8) + (A3.1) + (A4.2) + (B3); (E8) + (A3.2) + (A4.1) + (B3), (E8) + (A3.2) + (A4.2) + (B3), (E8) + (A4.1) + (A4.2) + (B3);
(E8.1) + (A1.1) + (B1), (E8.1) + (A1.1) + (B2), (E8.1) + (A1.1) + (B3), (E8.1) + (A2.1) + (B1), (E8.1) + (A2.1) + (B2), (E8.1) + (A2.1) + (B3), (E8.1) + (A3.1) + (B1). (E8.1) + (A3.1) + (B2), (E8.1) + (A3.1) + (B3), (E8.1) + (A4.1) + (B1), (E8.1) + (A4.1) + (B2),
(E8.1) + (A4.1) + (B3), (E8.1) + (A1.2) + (B1), (E8.1) + (A1.2) + (B2), (E8.1) + (A1.2) + (B3), (E8.1) + (A2.2) + (B1), (E8.1) + (A2.2) + (B2), (E8.1) + (A2.2) + (B3), (E8.1) + (A3.2) + (B1), (E8.1) + (A3.2) + (B2), (E8.1) + (A3.2) + (B3), (E8.1) + (A4.2) + (B1),
(E8.1) + (A4.2) + (B2), (E8.1) + (A4.2) + (B3),
(E8.1) + (A1.1) + (A1.2) + (B1), (E8.1) + (A1.1) + (A2.1) + (B1), (E8.1) + (A1.1) + (A2.2) + (B1), (E8.1) + (A1.1) + (A3.1) + (B1), (E8.1) + (A1.1) + (A3.2) + (B1), (E8.1) + (A1.1) + (A4.1) + (B1), (E8.1) + (A1.1) + (A4.2) + (B1);
(E8.1) + (A1.2) + (A2.1) + (B1), (E8.1) + (A1.2) + (A2.2) + (B1), (E8.1) + (A1.2) + (A3.1) + (B1), (E8.1) + (A1.2) + (A3.2) + (B1), (E8.1) + (A1.2) + (A4.1) + (B1), (E8.1) + (A1.2) + (A4.2) + (B1);
(E8.1) + (A2.1) + (A2.2) + (B1), (E8.1) + (A2.1) + (A3.1) + (B1), (E8.1) + (A2.1) + (A3.2)+(B1), (E8.1) + (A2.1) + (A4.1) + (B1), (E8.1) + (A2.1) + (A4.2) + (B1);
(E8.1) + (A2.2) + (A3.1) + (B1), (E8.1) + (A2.2) + (A3.2) + (B1), (E8.1) + (A2.2) + (A4.1) + (B1), (E8.1) + (A2.2) + (A4.2) + (B1);
(E8.1) + (A3.1) + (A3.2) + (B1), (E8.1) + (A3.1) + (A4.1) + (B1), (E8.1) + (A3.1) + (A4.2) + (B1); (E8.1) + (A3.2) + (A4.1) + (B1), (E8.1) + (A3.2) + (A4.2) + (B1), (E8.1) + (A4.1) + (A4.2) + (B1);
(E8.1) + (A1.1) + (A1.2) + (B2), (E8.1) + (A1.1) + (A2.1) + (B2), (E8.1) + (A1.1) + (A2.2) + (B2), (E8.1) + (A1.1) + (A3.1) + (B2), (E8.1) + (A1.1) + (A3.2) + (B2), (E8.1) + (A1.1) + (A4.1) + (B2), (E8.1) + (A1.1) + (A4.2) + (B2);
(E8.1) + (A1.2) + (A2.1) + (B2), (E8.1) + (A1.2) + (A2.2) + (B2), (E8.1) + (A1.2) + (A3.1) + (B2), (E8.1) + (A1.2) + (A3.2) + (B2), (E8.1) + (A1.2) + (A4.1) + (B2), (E8.1) + (A1.2) + (A4.2) + (B2);
(E8.1) + (A2.1) + (A2.2) + (B2), (E8.1) + (A2.1) + (A3.1) + (B2), (E8.1) + (A2.1) + (A3.2) + (B2), (E8.1) + (A2.1) + (A4.1) + (B2), (E8.1) + (A2.1) + (A4.2) + (B2);
(E8.1) + (A2.2) + (A3.1) + (B2), (E8.1) + (A2.2) + (A3.2) + (B2), (E8.1) + (A2.2) + (A4.1) + (B2), (E8.1) + (A2.2) + (A4.2) + (B2);
(E8.1) + (A3.1) + (A3.2) + (B2), (E8.1) + (A3.1) + (A4.1) + (B2), (E8.1) + (A3.1) + (A4.2) + (B2); (E8.1) + (A3.2) + (A4.1) + (B2), (E8.1) + (A3.2) + (A4.2) + (B2), (E8.1) +(A4.1)+(A4.2)+(B2);
(E8.1) + (A1.1) + (A1.2) + (B3), (E8.1) + (A1.1) + (A2.1) + (B3), (E8.1) + (A1.1) + (A2.2) + (B3), (E8.1) + (A1.1) + (A3.1) + (B3), (E8.1) + (A1.1) + (A3.2) + (B3), (E8.1) + (A1.1) + (A4.1) + (B3), (E8.1) + (A1.1) + (A4.2) + (B3);
(E8.1) + (A1.2) + (A2.1) + (B3), (E8.1) + (A1.2) + (A2.2) + (B3), (E8.1) + (A1.2) + (A3.1) + (B3), (E8.1) + (A1.2) + (A3.2) + (B3), (E8.1) + (A1.2) + (A4.1) + (B3), (E8.1) + (A1.2) + (A4.2) + (B3);
(E8.1) + (A2.1) + (A2.2) + (B3), (E8.1) + (A2.1) + (A3.1) + (B3), (E8.1) + (A2.1) + (A3.2) + (B3), (E8.1) + (A2.1) + (A4.1) + (B3), (E8.1) + (A2.1) + (A4.2) + (B3);
(E8.1) + (A2.2) + (A3.1) + (B3), (E8.1) + (A2.2) + (A3.2) + (B3), (E8.1) + (A2.2) + (A4.1) + (B3), (E8.1) + (A2.2) + (A4.2) + (B3);
(E8.1) + (A3.1) + (A3.2) + (B3), (E8.1) + (A3.1) + (A4.1) + (B3), (E8.1) + (A3.1) + (A4.2) + (B3); (E8.1) + (A3.2) + (A4.1) + (B3), (E8.1) + (A3.2) + (A4.2) + (B3), (E8.1) + (A4.1) + (A4.2) + (B3);
(E8.2) + (A1.1) + (B1), (E8.2) + (A1.1) + (B2), (E8.2) + (A1.1) + (B3), (E8.2) + (A2.1) + (B1), (E8.2) + (A2.1) + (B2), (E8.2) + (A2.1) + (B3), (E8.2) + (A3.1) + (B1), (E8.2) + (A3.1) + (B2), (E8.2) + (A3.1) + (B3), (E8.2) + (A4.1) + (B1), (E8.2) + (A4.1) + (B2),
(E8.2) + (A4.1) + (B3), (E8.2) + (A1.2) + (B1), (E8.2) + (A1.2) + (B2), (E8.2) + (A1.2) + (B3), (E8.2) + (A2.2) + (B1), (E8.2) + (A2.2) + (B2), (E8.2) + (A2.2) + (B3), (E8.2) + (A3.2) + (B1), (E8.2) + (A3.2) + (B2), (E8.2) + (A3.2) + (B3), (E8.2) + (A4.2) + (B1),
(E8.2) + (A4.2) + (B2), (E8.2) + (A4.2) + (B3),
(E8.2) + (A1.1) + (A1.2) + (B1), (E8.2) + (A1.1) + (A2.1) + (B1), (E8.2) + (A1.1) + (A2.2) + (B1), (E8.2) + (A1.1) + (A3.1) + (B1), (E8.2) + (A1.1) + (A3.2) + (B1), (E8.2) + (A1.1) + (A4.1) + (B1), (E8.2) + (A1.1) + (A4.2) + (B1);
(E8.2) + (A1.2) + (A2.1) + (B1), (E8.2) + (A1.2) + (A2.2) + (B1), (E8.2) + (A1.2) + (A3.1) + (B1), (E8.2) + (A1.2) + (A3.2) + (B1), (E8.2) + (A1.2) + (A4.1) + (B1), (E8.2) +(A1.2)+(A4.2)+(B1);
(E8.2) + (A2.1) + (A2.2) + (B1), (E8.2) + (A2.1) + (A3.1) + (B1), (E8.2) + (A2.1) + (A3.2) + (B1). (E8.2) + (A2.1) + (A4.1) + (B1), (E8.2) + (A2.1) + (A4.2) + (B1);
(E8.2) + (A2.2) + (A3.1) + (B1), (E8.2) + (A2.2) + (A3.2) + (B1), (E8.2) + (A2.2) + (A4.1) + (B1), (E8.2) + (A2.2) + (A4.2) + (B1);
(E8.2) + (A3.1) + (A3.2) + (B1), (E8.2) + (A3.1) + (A4.1) + (B1), (E8.2) + (A3.1) + (A4.2) + (B1); (E8.2) + (A3.2) + (A4.1) + (B1), (E8.2) + (A3.2) + (A4.2) + (B1), (E8.2) +(A4.1)+(A4.2)+(B1);
(E8.2) + (A1.1) + (A1.2) + (B2), (E8.2) + (A1.1) + (A2.1) + (B2), (E8.2) + (A1.1) + (A2.2) + (B2), (E8.2) + (A1.1) + (A3.1) + (B2), (E8.2) + (A1.1) + (A3.2) + (B2), (E8.2) + (A1.1) + (A4.1) + (B2), (E8.2) + (A1.1) + (A4.2) + (B2);
(E8.2) + (A1.2) + (A2.1) + (B2), (E8.2) + (A1.2) + (A2.2) + (B2), (E8.2) + (A1.2) + (A3.1) + (B2), (E8.2) + (A1.2) + (A3.2) + (B2), (E8.2) + (A1.2) + (A4.1) + (B2), (E8.2) + (A1.2) + (A4.2) + (B2);
(E8.2) + (A2.1) + (A2.2) + (B2), (E8.2) + (A2.1) + (A3.1) + (B2), (E8.2) + (A2.1) + (A3.2) + (B2), (E8.2) + (A2.1) + (A4.1) + (B2), (E8.2) + (A2.1) + (A4.2) + (B2);
(E8.2) + (A2.2) + (A3.1) + (B2), (E8.2) + (A2.2) + (A3.2) + (B2), (E8.2) + (A2.2) + (A4.1) + (B2), (E8.2) + (A2.2) + (A4.2) + (B2);
(E8.2) + (A3.1) + (A3.2) + (B2), (E8.2) + (A3.1) + (A4.1) + (B2), (E8.2) + (A3.1) + (A4.2) + (B2); (E8.2) + (A3.2) + (A4.1) + (B2), (E8.2) + (A3.2) + (A4.2) + (B2), (E8.2) + (A4.1) + (A4.2) + (B2);
(E8.2) + (A1.1) + (A1.2) + (B3), (E8.2) + (A1.1) + (A2.1) + (B3), (E8.2) + (A1.1) + (A2.2) + (B3), (E8.2) + (A1.1) + (A3.1) + (B3), (E8.2) + (A1.1) + (A3.2) + (B3), (E8.2) + (A1.1) + (A4.1) + (B3), (E8.2) + (A1.1) + (A4.2) + (B3);
(E8.2) + (A1.2) + (A2.1) + (B3), (E8.2) + (A1.2) + (A2.2) + (B3), (E8.2) + (A1.2) + (A3.1) + (B3), (E8.2) + (A1.2) + (A3.2) + (B3), (E8.2) + (A1.2) + (A4.1) + (B3), (E8.2) + (A1.2) + (A4.2) + (B3);
(E8.2) + (A2.1) + (A2.2) + (B3), (E8.2) + (A2.1) + (A3.1) + (B3), (E8.2) + (A2.1) + (A3.2) + (B3), (E8.2) + (A2.1) + (A4.1) + (B3), (E8.2) + (A2.1) + (A4.2) + (B3);
(E8.2) + (A2.2) + (A3.1) + (B3), (E8.2) + (A2.2) + (A3.2) + (B3), (E8.2) + (A2.2) + (A4.1) + (B3), (E8.2) + (A2.2) + (A4.2) + (B3);
(E8.2) + (A3.1) + (A3.2) + (B3), (E8.2) + (A3.1) + (A4.1) + (B3), (E8.2) + (A3.1) + (A4.2) + (B3); (E8.2) + (A3.2) + (A4.1) + (B3), (E8.2) + (A3.2) + (A4.2) + (B3), (E8.2) +(A4.1)+(A4.2)+(B3);
(E9) + (A1.1) + (B1), (E9) + (A1.1) + (B2), (E9) + (A1.1) + (B3), (E9) + (A2.1) + (B1),
(E9) + (A2.1) + (B2), (E9) + (A2.1) + (B3), (E9) + (A3.1) + (B1), (E9) + (A3.1) + (B2),
(E9) + (A3.1) + (B3), (E9) + (A4.1) + (B1), (E9) + (A4.1) + (B2), (E9) + (A4.1) + (B3),
(E9) + (A1.2) + (B1), (E9) + (A1.2) + (B2), (E9) + (A1.2) + (B3), (E9) + (A2.2) + (B1),
(E9) + (A2.2) + (B2), (E9) + (A2.2) + (B3), (E9) + (A3.2) + (B1), (E9) + (A3.2) + (B2),
(E9) + (A3.2) + (B3), (E9) + (A4.2) + (B1), (E9) + (A4.2) + (B2), (E9) + (A4.2) + (B3),
(E9) + (A1.1) + (A1.2) + (B1), (E9) + (A1.1) + (A2.1) + (B1), (E9) + (A1.1) + (A2.2) + (B1), (E9) + (A1.1) + (A3.1) + (B1), (E9) + (A1.1) + (A3.2) + (B1), (E9) + (A1.1) + (A4.1) + (B1), (E9) + (A1.1) + (A4.2) + (B1);
(E9) + (A1.2) + (A2.1) + (B1), (E9) + (A1.2) + (A2.2) + (B1), (E9) + (A1.2) + (A3.1) + (B1), (E9) + (A1.2) + (A3.2) + (B1), (E9) + (A1.2) + (A4.1) + (B1), (E9) + (A1.2) + (A4.2)+(B1);
(E9) + (A2.1) + (A2.2) + (B1), (E9) + (A2.1) + (A3.1) + (B1), (E9) + (A2.1) + (A3.2) + (B1), (E9) + (A2.1) + (A4.1) + (B1), (E9) + (A2.1) + (A4.2) + (B1);
(E9) + (A2.2) + (A3.1) + (B1), (E9) + (A2.2) + (A3.2) + (B1), (E9) + (A2.2) + (A4.1) + (B1), (E9) + (A2.2) + (A4.2) + (B1);
(E9) + (A3.1) + (A3.2) + (B1), (E9) + (A3.1)+ (A4.1) + (B1), (E9) + (A3.1) + (A4.2) + (B1); (E9) + (A3.2) + (A4.1) + (B1), (E9) + (A3.2) + (A4.2) + (B1), (E9) + (A4.1) + (A4.2) + (B1);
(E9) + (A1.1) + (A1.2) + (B2), (E9) + (A1.1) + (A2.1) + (B2), (E9) + (A1.1) + (A2.2) + (B2), (E9) + (A1.1) + (A3.1) + (B2), (E9) + (A1.1) + (A3.2) + (B2), (E9) + (A1.1) + (A4.1) + (B2), (E9) + (A1.1) + (A4.2) + (B2);
(E9) + (A1.2) + (A2.1) + (B2), (E9) + (A1.2) + (A2.2) + (B2), (E9) + (A1.2) + (A3.1) + (B2), (E9) + (A1.2) + (A3.2) + (B2), (E9) + (A1.2) + (A4.1) + (B2), (E9) + (A1.2) + (A4.2) + (B2);
(E9) + (A2.1) + (A2.2) + (B2), (E9) + (A2.1) + (A3.1) + (B2), (E9) + (A2.1) + (A3.2) + (B2), (E9) + (A2.1) + (A4.1) + (B2), (E9) + (A2.1) + (A4.2) + (B2);
(E9) + (A2.2) + (A3.1) + (B2), (E9) + (A2.2) + (A3.2) + (B2), (E9) + (A2.2) + (A4.1) + (B2), (E9) + (A2.2) + (A4.2) + (B2);
(E9) + (A3.1) + (A3.2) + (B2), (E9) + (A3.1) + (A4.1) + (B2), (E9) + (A3.1) + (A4.2) + (B2); (E9) + (A3.2) + (A4.1) + (B2), (E9) + (A3.2) + (A4.2) + (B2), (E9) + (A4.1) + (A4.2) + (B2);
(E9) + (A1.1) + (A1.2) + (B3), (E9) + (A1.1) + (A2.1) + (B3), (E9) + (A1.1) + (A2.2) + (B3), (E9) + (A1.1) + (A3.1) + (B3), (E9) + (A1.1) + (A3.2) + (B3), (E9) + (A1.1) + (A4.1) + (B3), (E9) + (A1.1) + (A4.2) + (B3);
(E9) + (A1.2) + (A2.1) + (B3), (E9) + (A1.2) + (A2.2) + (B3), (E9) + (A1.2) + (A3.1) + (B3), (E9) + (A1.2) + (A3.2) + (B3), (E9) + (A1.2) + (A4.1) + (B3), (E9) + (A1.2) + (A4.2) + (B3);
(E9) + (A2.1) + (A2.2) + (B3), (E9) + (A2.1) + (A3.1) + (B3), (E9) + (A2.1) + (A3.2) + (B3), (E9) + (A2.1) + (A4.1) + (B3), (E9) + (A2.1) + (A4.2) + (B3);
(E9) + (A2.2) + (A3.1) + (B3), (E9) + (A2.2) + (A3.2) + (B3), (E9) + (A2.2) + (A4.1) + (B3), (E9) + (A2.2) + (A4.2) + (B3);
(E9) + (A3.1) + (A3.2) + (B3), (E9) + (A3.1) + (A4.1) + (B3), (E9) + (A3.1) + (A4.2) + (B3); (E9) + (A3.2) + (A4.1) + (B3), (E9) + (A3.2) + (A4.2) + (B3), (E9) + (A4.1) + (A4.2) + (B3);
(E9.1) + (A1.1) + (B1), (E9.1) + (A1.1) + (B2), (E9.1) + (A1.1) + (B3), (E9.1) + (A2.1) + (B1), (E9.1) + (A2.1) + (B2), (E9.1) + (A2.1) + (B3), (E9.1) + (A3.1) + (B1), (E9.1) + (A3.1) + (B2), (E9.1) + (A3.1) + (B3), (E9.1) + (A4.1) + (B1), (E9.1) + (A4.1) + (B2),
(E9.1) + (A4.1) + (B3), (E9.1) + (A1.2) + (B1), (E9.1) + (A1.2) + (B2), (E9.1) + (A1.2) + (B3), (E9.1) + (A2.2) + (B1), (E9.1) + (A2.2) + (B2), (E9.1) + (A2.2) + (B3), (E9.1) + (A3.2) + (B1), (E9.1) + (A3.2) + (B2), (E9.1) + (A3.2) + (B3), (E9.1) + (A4.2) + (B1),
(E9.1) + (A4.2) + (B2), (E9.1) + (A4.2) + (B3),
(E9.1) + (A1.1) + (A1.2) + (B1), (E9.1) + (A1.1) + (A2.1) + (B1), (E9.1) + (A1.1) + (A2.2) + (B1), (E9.1) + (A1.1) + (A3.1) + (B1), (E9.1) + (A1.1) + (A3.2) + (B1), (E9.1) + (A1.1) + (A4.1) + (B1), (E9.1) + (A1.1) + (A4.2) + (B1);
(E9.1) + (A1.2) + (A2.1) + (B1), (E9.1) + (A1.2) + (A2.2) + (B1), (E9.1) + (A1.2) + (A3.1) + (B1), (E9.1) + (A1.2) + (A3.2) + (B1), (E9.1) + (A1.2) + (A4.1) + (B1), (E9.1) + (A1.2) + (A4.2) + (B1);
(E9.1) + (A2.1) + (A2.2) + (B1), (E9.1) + (A2.1) + (A3.1) + (B1), (E9.1) + (A2.1) + (A3.2) + (B1), (E9.1) + (A2.1) + (A4.1) + (B1), (E9.1) + (A2.1) + (A4.2) + (B1);
(E9.1) + (A2.2) + (A3.1) + (B1), (E9.1) + (A2.2) + (A3.2) + (B1), (E9.1) + (A2.2) + (A4.1) + (B1), (E9.1) + (A2.2) + (A4.2) + (B1);
(E9.1) + (A3.1) + (A3.2) + (B1), (E9.1) + (A3.1) + (A4.1) + (B1), (E9.1) + (A3.1) + (A4.2) + (B1); (E9.1) + (A3.2) + (A4.1) + (B1), (E9.1) + (A3.2) + (A4.2) + (B1), (E9.1) + (A4.1) + (A4.2) + (B1);
(E9.1) + (A1.1) + (A1.2) + (B2), (E9.1) + (A1.1) + (A2.1) + (B2), (E9.1) + (A1.1) + (A2.2) + (B2), (E9.1) + (A1.1) + (A3.1) + (B2), (E9.1) + (A1.1) + (A3.2) + (B2), (E9.1) + (A1.1) + (A4.1) + (B2), (E9.1) + (A1.1) + (A4.2) + (B2);
(E9.1) + (A1.2) + (A2.1) + (B2), (E9.1) + (A1.2) + (A2.2) + (B2), (E9.1) + (A1.2) + (A3.1) + (B2), (E9.1) + (A1.2) + (A3.2) + (B2), (E9.1) + (A1.2) + (A4.1) + (B2), (E9.1) + (A1.2) + (A4.2) + (B2);
(E9.1) + (A2.1) + (A2.2) + (B2), (E9.1) + (A2.1) + (A3.1) + (B2), (E9.1) + (A2.1) + (A3.2) + (B2), (E9.1) + (A2.1) + (A4.1) + (B2), (E9.1) + (A2.1) + (A4.2) + (B2);
(E9.1) + (A2.2) + (A3.1) + (B2), (E9.1) + (A2.2) + (A3.2) + (B2), (E9.1) + (A2.2) + (A4.1) + (B2), (E9.1) + (A2.2) + (A4.2) + (B2);
(E9.1) + (A3.1) + (A3.2) + (B2), (E9.1) + (A3.1) + (A4.1) + (B2), (E9.1) + (A3.1) + (A4.2) + (B2); (E9.1) + (A3.2) + (A4.1) + (B2), (E9.1) + (A3.2) + (A4.2) + (B2), (E9.1) + (A4.1) + (A4.2) + (B2);
(E9.1) + (A1.1) + (A1.2) + (B3), (E9.1) + (A1.1) + (A2.1) + (B3), (E9.1) + (A1.1) + (A2.2) + (B3), (E9.1) + (A1.1) + (A3.1) + (B3), (E9.1) + (A1.1) + (A3.2) + (B3), (E9.1) + (A1.1) + (A4.1) + (B3), (E9.1) + (A1.1) + (A4.2) + (B3);
(E9.1) + (A1.2) + (A2.1) + (B3), (E9.1) + (A1.2) + (A2.2) + (B3), (E9.1) + (A1.2) + (A3.1) + (B3), (E9.1) + (A1.2) + (A3.2) + (B3), (E9.1) + (A1.2) + (A4.1) + (B3), (E9.1) + (A1.2) + (A4.2) + (B3);
(E9.1) + (A2.1) + (A2.2) + (B3), (E9.1) + (A2.1) + (A3.1) + (B3), (E9.1) + (A2.1) + (A3.2) + (B3), (E9.1) + (A2.1) + (A4.1) + (B3), (E9.1) + (A2.1) + (A4.2) + (B3);
(E9.1) + (A2.2) + (A3.1) + (B3), (E9.1) + (A2.2) + (A3.2) + (B3), (E9.1) + (A2.2) + (A4.1) + (B3), (E9.1) + (A2.2) + (A4.2) + (B3);
(E9.1) + (A3.1) + (A3.2) + (B3), (E9.1) + (A3.1) + (A4.1) + (B3), (E9.1) + (A3.1) + (A4.2) + (B3); (E9.1) + (A3.2) + (A4.1) + (B3), (E9.1) + (A3.2) + (A4.2) + (B3), (E9.1) + (A4.1) + (A4.2) + (B3).

Sämtliche vorgenannten Kombinationen können auch mehrere agrochemische Wirkstoffe (E) enthalten, insbesondere zwei oder drei Wirkstoffe (E), vorzugsweise ausgewählt aus der Gruppe (E1), (E1.1), (E1.2), (E1.3), (E1.4), (E1.5), (E2), (E2.1), (E2.2), (E2.3), (E2.4), (E2.5), (E2.6), (E2.7), (E2.8), (E2.9), (E3), (E3.1), (E3.2), (E3.3), (E4), (E4.1), (E4.2), (E5), (E5.1), (E5.2), (E6), (E6.1), (E6.2), (E6.3), (E6.4), (E6.5), (E7), (E7.1), (E7.2), (E8), (E8.1), (E8.2), (E9), (E9.1). Bevorzugte Kombinationen (A), (B), (E) mit zwei oder drei Wirkstoffen (E) enthalten als Komponente (E) (E1.1) + (E1.2), (E1.1) + (E1.2) + (E6.3), (E1.1) + (E1.2) + (E2.6) oder (E5.1) + (E6.3). Besonders bevorzugt sind dabei die in den vorgenannten Kombinationen enthaltenen Komponenten (A) und (B) mit den Komponenten (E) (E1.1) + (E1.2), (E1.1) + (E1.2) + (E6.3), (E1.1) + (E1.2) + (E2.6) oder (E5.1) + (E6.3) kombiniert.

Als übliche Hilfs- und Zusatzstoffe (Komponente F) können in den erfindungsgemäßen herbiziden Mittel z.B. noch enthalten sein: Tenside wie Emulgatoren und Dispergatoren, Verdickungs- und Thixotropiermittel, Netz-, Antidrift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie Hydroxy-Gruppe gegebenenfalls alkoxyliert ist,
   - die z. B. kommerziell als Genapol^{®}X- und Genapol^{®}O-Reihe (Clariant), Crovol^{®}M-Reihe (Croda) oder Lutensol^{®}Reihe (BASF) erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor^{®}BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-*sec*-butylphenol, und einem Ethoxylierungsgrad zwischen 2 und 40, bevorzugt 4 bis 15, wie z. B. Arkopal^{®}N-Reihe oder Sapogenat^{®}T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen^{®}EL-Reihe (Clariant) oder Agnique^{®}CSO-Reihe (Cognis),
5) polyalkoxylierte, vorzugsweise polyethoxylierte Sorbitanester, wie z. B. Atplus^{®}309 F (Uniqema) oder Alkamuls^{®}-Reihe (Rhodia)
6) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol^{®}PF-Reihe (Clariant), Pluronic^{®}-Reihe (BASF), oder Synperonic^{®}PE-Reihe (Uniqema),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Der Gesamtanteil an nichtionischen Emulgatoren und Dispergatoren in den erfindungsgemäßen herbiziden Mitteln liegt im allgemeinen zwischen 0 und 20 Gew.%. Werden nichtionische Emulgatoren und Dispergatoren, neben ihren emulgierenden/dispergierenden Eigenschaften, auch zur Erhöhung der biologischen Effektivität, z. B. als Penetrations- oder Haftmittel, eingesetzt, kann sich ihr Anteil in den erfindungsgemäßen herbiziden Mitteln auf bis zu 60 Gew.% erhöhen.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®}-Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Der Gesamtanteil an ionischen Emulgatoren und Dispergatoren in den erfindungsgemäßen herbiziden Mitteln liegt im allgemeinen zwischen 0 und 20 Gew.%, insbesondere zwischen 0 und 8 Gew.%.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie Bentone^{®} (Elementis), Attagel^{®} (Engelhard), Agsorb^{®} (Oil-Dri Corporation) oder Hectorite^{®} (Akzo Nobel)
2) synthetische Silikate, wie Silikate der Sipernat^{®}-, Aerosil^{®}- oder Durosil^{®}-Reihe (Degussa), der CAB-O-SIL^{®}-Reihe (Cabot) oder der Van Gel-Reihe (R.T. Vanderbilt),
3) Verdicker auf Basis synthetischer Polymere, wie Verdicker der Thixin^{®}-oder Thixatrol^{®}-Reihe (Elementis).
4) Verdicker auf Basis natürlicher Polymere und natürlicher Öle, z.B. aus der Thixin^{®}- oder Thixatrol^{®}-Reihe (Elementis).

Bevorzugte Verdickungs- und Thixotropiermittel sind z.B. modifizierte Schichtsilikate und Verdicker auf Basis synthetischer Polymere.

Der Anteil an Verdickungs- und Thixotropiermitteln in den erfindungsgemäßen herbiziden Mitteln liegt im allgemeinen zwischen 0 und 5 Gew.%, insbesondere zwischen 0,2 und 3 Gew.%.

Die erfindungsgemäßen herbizid wirksamen Mittel lassen sich durch übliche, bereits bekannte Verfahren herstellen, z.B. durch Vermischen der verschiedenen Komponenten mit Hilfe von Rührern, Schüttlern, Mühlen oder (statischen) Mischern. Dabei ist gegebenenfalls kurzzeitig ein Erwärmen der Gemische vorteilhaft, um ein vollständiges Auflösen aller involvierter Komponenten zu erzielen.

Bevorzugt sind erfindungsgemäße herbizid wirksame Mittel, enthaltend:
A) 0,1 bis 30 Gew.-% eines oder mehrerer Sulfonylharnstoffe aus der Gruppe (A1.1), (A1.2), (A1.3), (A1.4), (A2.1), (A2.2), (A2.3), A2.4), (A3.1), (A3.2), (A3.3), (A3.4), (A4.1), (A4.2), vorzugsweise aus der Gruppe (A1.1), (A2.1), (A3.1), (A4.1),
B) 2 bis 40 Gew.-% eines oder mehrerer Safener aus der Gruppe (B1), (B2), (B3), (B4), (B5), (B6), (B7), (B8), (B9), vorzugsweise aus der Gruppe (B1), (B2), (B3), (B8), besonders bevorzugt (B1), (B2), (B3), ganz besonders bevorzugt (B1), (B2), insbesondere (B1),
C) 20 bis 80 Gew.-% eines oder mehrerer Lösungsmittel, vorzugsweise aus der Gruppe der aliphatischen Kohlenwasserstoffe, der Gemische von aromatischen und aliphatischen Kohlenwasserstoffe und der Pflanzenöle wie Rapsölmethylester,
D) 0,5 bis 30 Gew.-% eines oder mehrerer Sulfosuccinate, vorzugsweise aus der Gruppe der Alkali Di(C₄-C₁₈)alkylsulfosuccinate wie Natrium Di(C₄-C₁₈)alkylsulfosuccinat,
E) 1 bis 20 Gew.-% eines oder mehrerer von A) und B) verschiedener agrochemischer Wirkstoffe,
F) 0 bis 40 Gew.-% an üblichen Hilfs- und Zusatzstoffen, vorzugsweise 0 bis 20 Gew.-% eines oder mehrerer nichtionischer Emulgatoren und Dispergatoren, 0 bis 8 Gew.-% eines oder mehrerer ionischer Emulgatoren und Dispergatoren, und 0 bis 3 Gew.-% eines oder mehrerer Verdickungs- und Thixotropiermittel.

Gegenstand der vorliegenden Erfindung ist weiterhin ein Verfahren, das dadurch gekennzeichnet ist, daß die Komponenten (A): und (B) des erfindungsgemäßen herbizid wirksamen Mittels gemeinsam auf die Schadpflanzen, Kulturpflanzen, Pflanzensamen oder die Fläche auf der die Pflanzen wachsen, aufgebracht werden, gegebenenfalls in Kombination mit weiteren Komponenten, z.B. gemeinsam oder getrennt mit den Komponenten (C), (D), (E) und (F). Dabei werden einer oder mehrere Safener aus der Gruppe (B) (vorzugsweise in antidotisch wirksamer Menge) gleichzeitig mit dem(n) Sulfonylharnstoffen (A) auf die Pflanzen, Pflanzensamen oder die Fläche, auf der die Pflanzen wachsen, appliziert.

Die erfindungsgemäßen herbizid wirksamen Mittel können auch zur Bekämpfung von Schadpflanzen in Kulturen von bekannten oder noch zu entwickelnden gentechnisch veränderten Pflanzen eingesetzt werden. Die transgenen. Pflanzen zeichnen sich in der Regel durch besondere vorteilhafte .Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung des erfindungsgemäßen herbizid wirksamen Mittels zur Bekämpfung von Schadpflanzen in transgenen Kulturpflanzen oder Kulturpflanzen, die Toleranz durch Selektionszüchtung aufweisen.

Die Safener aus der Gruppe (B) und die Sulfonylharnstoffe (A) können gegebenenfalls in Kombination mit weiteren Komponenten, z.B. den Komponenten (C), (D), (E) und (F), auf verschiedene Art, gemeinsam formuliert werden, je nachdem welche biologischen und/oder chemisch-physikalischen Parameter vorgegeben sind. Als Formulierungsmöglichkeiten kommen beispielsweise in Frage:
Dispersionen auf Öl basis.

Diese einzelnen Formulierungstypen sind im Prinzip bekannt und beispielsweise beschrieben in: Winnacker-Küchler, "Chemische Technologie" Band 7, C. Häuser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen herstellen, z.B. mit als Pflanzenschutzmittel wirksamen Stoffen, wie Insektiziden, Akariziden, Herbiziden, Fungiziden oder Safenern, Düngemitteln und/oder Wachstumsregulatoren, z.B. in Form einer Fertigformulierung oder als Tankmix.

Suspensionskonzentrate können auf Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Bevorzugte Formulierungen sind Flüssigformulierungen wie Ölsuspensionskonzentrate, und daraus erhältliche Spritzbrühen, vorzugsweise wässrige Spritzbrühen.

Ein besonders bevorzugter flüssiger Formulierungstyp sind Ölsuspensionskonzentrate, d.h. Suspensionkonzentrate auf Basis organischer Lösungsmittel, und daraus durch Verdünnung erhältliche Formulierungen wie Lösungen, Emulsionen, Suspoemulsionen und Suspensionen. In den Ölsuspensionskonzentraten sind ein oder mehrere Wirkstoffe in dem organischen Lösungsmittel suspendiert, weitere Wirkstoffe können in dem organischen Lösungsmittel gelöst sein. In einem bevorzugten Ölsuspensionskonzentrat liegt das Herbizid (A) in suspendierter Form in dem organischen Lösungsmittel vor. Dies bedeutet, daß der Hauptanteil (in Gew.-%) an Sulfonamid ungelöst in fein verteilter Form vorliegt, ein geringerer Teil des Sulfonamids kann gelöst vorliegen. Vorzugsweise ist das Sulfonamid im organischen Lösungsmittel zu mehr als 80 Gew.-%, besonders bevorzugt zu mehr als 90 Gew.-% suspendiert, jeweils bezogen auf die Gesamtmenge an Sulfonamid in dem erfindungsgemäßen Ölsuspensionskonzentrat.

Die agrochemischen Formulierungen enthalten in der Regel 0,1 bis 99 Gew.-%, insbesondere 0,1 bis 95 Gew.-% Wirkstoffe, z.B. Safener - Wirkstoffe (B), oder Sulfonylharnstoffe (A), oder des erfindungsgemäßen Herbizid/Safener-Wirkstoffgemischs, enthaltend Sulfonylharnstoffe (A) und Safener-Wirkstoffe (B), und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

Daneben enthalten die genannten Wirkstoffformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Zur Anwendung werden die in handelsüblicher Form vorliegenden Formulierungen gegebenenfalls in üblicher Weise verdünnt z. mittels Wasser. Bevorzugte Formulierungen, die mit Wasser verdünnt werden sind z.B. Flüssigformulierungen wie Ölsuspensionen, Ölsuspertsionskonzenträte,

Mit den äußeren Bedingungen wie Temperatur, Feuchtigkeit, der Art des verwendeten Herbizids, u.a. variiert die erforderliche Aufwandmenge der Herbizide (A). Sie kann innerhalb weiter Grenzen variiert werden, z.B. zwischen 0,001 und 10,0 kg/ha oder mehr an Herbizid, vorzugsweise liegt sie zwischen 0,005 und 5 kg/ha.

Folgende Beispiele dienen zur Erläuterung der Erfindung:

### A. Formulierungsbeispiele

a) Ein Ölsuspensionskonzentrat wird z.B. durch Vermischen der Komponenten erhalten, z.B. indem man eine Vormischung herstellt, wobei in dem Lösungsmittel C) optional ein Sulfosuccinat D) gelöst wird und dieser Lösung, gegebenenfalls weitere Hilfs- und Zusatzstoffe F) zugegeben werden. Dann werden gegebenenfalls verwendete lösliche Safener B) und agrochemische Wirkstoffe E) in der Vormischung gelöst. Nach Abschluß des Lösungsprozesses wird fester Sulfonylharnstoff A) und gegebenenfalls verwendete unlösliche Safener B) und agrochemische Wirkstoffe E) in die Mischung suspendiert. Die grobe Suspension wird, gegebenenfalls nach einer Vorvermahlung, einer Feinvermahlung unterzogen.
   In einer anderen Ausführungsvariante zur Herstellung eines Ölsuspensionskonzentrats wird fester Sulfonylharnstoff A), sowie gegebenenfalls verwendete unlösliche Komponenten B), E) und F), in das Lösungsmittel C) suspendiert, welches optional ein Sulfosuccinat D) enthält, und einer Vermahlung unterzogen. Gegebenenfalls verwendete lösliche Wirkstoffe B) und E) sowie Hilfs- und Zusatzstoffe aus F), die keiner Vermahlung bedürfen oder für den Mahlvorgang nicht notwendig sind, werden nach der Vermahlung zugesetzt.
   In einer weiteren Ausführungsvariante zur Herstellung eines Ölsuspensionskonzentrats, in der Verdicker als Hilfs- und Zusatzstoffe F) eingesetzt werden, wird zunächst der.Verdicker mit dem Lösemittel C) vermischt. Danach erfolgt die Zugabe der Wirkstoffe A), B) und gegebenenfalls E) und etwaiger weiterer Hilfs- und Zusatzstoffe F) und Sulfosuccinate D) sowie die Vermahlung des Gemisches, z.B. in einer Mühle.
b) Herstellung von speziellen Ölsuspensionskonzentraten Es werden Solvesso® 200 ND, Bentone® 34 und Propylencarbonat in eine Mühle gegeben und intensiv durchmischt, bis eine Paste erhalten wird. Dann werden nacheinander die übrigen Komponenten (Hilfs- und Zusatzstoffe und Wirkstoffe) unter Rühren zugesetzt und anschließend wird das enthaltene Gemisch mittels einer Kugelmühle homogenisiert. In der nachfolgenden Tabelle sind die Anteile der Formulierungsbestandteile (in Gew.-%) der auf diese Weise hergestellten Ölsuspensionskonzentrate angegeben.

**Tabelle**

| Beispiele | 1 | 2 | 3 | 4 | 5 | 6 | 7 |
|---|---|---|---|---|---|---|---|
| Metsulfuron-methyl | 8,65 | -- | -- | -- | -- | -- | -- |
| Metsulfuron-methyl-natrium | -- | 8,65 | -- | -- | -- | -- | -- |
| Thifensulfuron-methyl | -- | -- | 15,7 | -- | -- | -- | -- |
| Thifensulfuron-methyl-natrium | -- | -- | -- | 15,7 | -- | -- | -- |
| Tribenuron-methyl-natrium | -- | -- | -- | -- | 15,7 | -- | -- |
| Chlorsulfuron | -- | -- | -- | -- | -- | 15,7 | -- |
| Chlorsulfuron-natrium | -- | -- | -- | -- | -- | -- | 15,7 |
| Mefenpyr-diethyl | 1,74 | 1,74 | 3,13 | 3,13 | 3,13 | 3,13 | 3,13 |
| Triton® GR-7M-E | 28,9 | 28,9 | 26,0 | 26,0 | 26,0 | 26,0 | 26,0 |
| Emulsogen® EL 400 | 8,7 | 8,7 | 8,0 | 8,0 | 8,0 | 8,0 | 8,0 |
| Etocas® 10 | 7,2 | 7,2 | 7,0 | 7,0 | 7,0 | 7,0 | 7,0 |
| Genapol® PF 10 | 4,4 | 4,4 | 4,0 | 4,0 | 4,0 | 4,0 | 4,0 |
| Morwet® D 425 | 2,9 | 2,9 | 2,7 | 2,7 | 2,7 | 2,7 | 2,7 |
| Bentone®34 | 0,72 | 0,72 | 0,7 | 0,7 | 0,7 | 0,7 | 0,7 |
| Propylencarbonat | 0,72 | 0,72 | 0,7 | 0,7 | 0,78 | 0,7 | 0,7 |
| Rhodorsil® 454 | 0,07 | 0,07 | 0,07 | 0,07 | 0,07 | 0,07 | 0,07 |
| Solvesso® 200 ND | 36 | 36 | 32 | 32 | 32 | 32 | 32 |

### Erläuterungen:

Bei Triton® GR-7M-E handelt es sich um Di-2-ethylhexyl-sulfosuccinatnatrium, bei Emulsogen® EL400 um ein ethoxyliertes Rizinusöl mit 40 Ethylenoxideinheiten, bei Etocas® 10 um ein ethoxyliertes Rhizinusöl mit 10 Ethylenoxideinheiten, bei Genapol® PF 10 um ein polymeres Tensid (Block-Co-Polymer aus Ethylen- und Propylenoxid), bei Morwet® D 425 um einen polymeren, anionischen Dispergator, bei Bentone® 34 um einen Verdicker (Basis: modifiziertes Schichtsilikat), bei Rhodorsil® 454 um einen Silikonentschäumer, bei Solvesso® 200 ND um ein hochsiedendes, aromatisches Lösemittel.

## Patentansprüche

1. Flüssigformulierung in Form eines Ölsuspensionskonzentrats oder einer daraus erhältlichen wässrigen Spritzbrühe, enthaltend
(A) einen oder mehrere Sulfonylharnstoffe aus der Gruppe Metsulfuron, Thifensulfuron, Tribenuron, Chlorsulfuron und deren Salze und Ester,
(B) einen oder mehrere Safener aus der Gruppe Mefenpyr, Isoxadifen, Cloquintocet, Fenchlorazol und deren Salze und Ester,
(C) ein oder mehrere Lösungsmittel, bevorzugt organische Lösungsmittel.

2. Flüssigformulierung gemäß Anspruch 1, zusätzlich enthaltend
(D) ein oder mehrere Sulfosuccinate.

3. Flüssigformulierung gemäß Anspruch 1 oder 2, zusätzlich enthaltend
(E) einen oder mehrere von (A) und (B) verschiedene agrochemische Wirkstoffe.

4. Flüssigformulierung gemäß einem oder mehreren der Ansprüche 1 bis 3, zusätzlich enthaltend
(F) übliche Hilfs- und Zusatzstoffe.

5. Flüssigformulierung gemäß einem oder mehreren der Ansprüche 1 bis 4, enthaltend eine herbizid wirksame Menge an einem oder mehreren Sulfonylharnstoffen (A) und eine antidotisch wirksame Mange an einem oder mehreren Safenern (B).

6. Verfahren zur Bekämpfung von Schadpflanzen in Pflanzenkulturen, **dadurch gekennzeichnet, daß** die Komponenten der Flüssigformulierung gemäß einem oder mehreren der Ansprüche 1 bis 5 gemeinsam oder getrennt auf die Schadpflanzen, Kulturpflanzen, Pflanzensamen oder die Fläche, auf der die Pflanzen wachsen, aufgebracht werden.

7. Verfahren gemäß Anspruch 6, **dadurch gekennzeichnet, daß** die Kulturpflanzen aus der Gruppe Mais, Weizen, Roggen, Gerste, Hafer, Reis, Sorghum, Baumwolle und Soja stammen.

8. Verfahren gemäß Anspruch 6 oder 7, **dadurch gekennzeichnet, daß** die Kulturpflanzen transgen sind oder Toleranz durch Selektionszüchtung ausweisen.

9. Verwendung einer Flüssigformulierung gemäß einem oder mehreren der Ansprüche 1 bis 5, zur Bekämpfung von Schadpflanzen in Pflanzenkulturen.

10. Verfahren zur Herstellung einer Flüssigformulierung gemäß einem oder mehreren der Ansprüche 1 bis 5, worin die Komponenten miteinander vermischt werden.

## Claims

1. A liquid formulation in the form of an oil suspension concentrate or an aqueous spray liquor obtainable therefrom, comprising
(A) one or more sulfonylureas from the group consisting of metsulfuron, thifensulfuron, tribenuron, chlorsulfuron and their salts and esters,
(B) one or more safeners from the group consisting of mefenpyr, isoxadifen, cloquintocet, fenchlorazole and their salts and esters,
(C) one or more solvents, preferably organic solvents.

2. The liquid formulation as claimed in claim 1, additionally comprising
(D) one or more sulfosuccinates.

3. The liquid formulation as claimed in claim 1 or 2, additionally comprising
(E) one or more agrochemically active compounds different from (A) and (B).

4. The liquid formulation as claimed in one or more of claims 1 to 3, additionally comprising (F) customary auxiliaries and additives.

5. The liquid formulation as claimed in one or more of claims 1 to 4, comprising a herbicidally effective amount of one or more sulfonylureas (A) and an antidote-effective amount of one or more safeners (B).

6. A method for controlling harmful plants in plant crops, which comprises applying the components of the liquid formulation as claimed in one or more of claims 1 to 5 jointly or separately to the harmful plants, crop plants, plant seeds or to the area in which the plants grow.

7. The method as claimed in claim 6, wherein the crop plants are from the group consisting of corn, wheat, rye, barley, oats, rice, sorghum, cotton and soybeans.

8. The method as claimed in claim 6 or 7, wherein the crop plants are transgenic or tolerant owing to selective breeding.

9. The use of a liquid formulation as claimed in one or more of claims 1 to 5 for controlling harmful plants in plant crops.

10. A process for preparing a liquid formulation as claimed in one or more of claims 1 to 5, which process comprises mixing the components.

## Revendications

1. Formulation liquide sous la forme d'un concentré d'huile en suspension ou d'une bouillie de pulvérisation aqueuse obtenue à partir de celui-ci, contenant
(A) une ou plusieurs sulfonylurées du groupe metsulfuron, thifensulfuron, tribenuron, chlorsulfuron et leurs sels et esters,
(B) un ou plusieurs antidotes du groupe mefenpyr, isoxadifen, cloquintocet, fenchlorazol et leurs sels et esters,
(C) un ou plusieurs solvants, de préférence des solvants organiques.

2. Formulation liquide selon la revendication 1, contenant de plus
(D) un ou plusieurs sulfosuccinates.

3. Formulation liquide selon la revendication 1 ou 2, contenant de plus
(E) une ou plusieurs substances actives agrochimiques différentes de (A) et (B).

4. Formulation liquide selon une ou plusieurs des revendications 1 à 3, contenant de plus
(F) des adjuvants et additifs usuels.

5. Formulation liquide selon une ou plusieurs des revendications 1 à 4, contenant une quantité herbicide efficace d'une ou plusieurs substances sulfonylurée (A) et une quantité efficace comme antidote d'un ou plusieurs antidotes (B).

6. Procédé de lutte contre les plantes nuisibles dans les cultures végétales, **caractérisé en ce que**, les composants de la formulation liquide selon une ou plusieurs des revendications 1 à 5 sont appliqués ensemble ou séparément sur les plantes nuisibles, les plantes cultivées, les semences de plantes ou la surface sur laquelle poussent les plantes.

7. Procédé selon la revendication 6, **caractérisé en ce que**, les plantes de culture proviennent du groupe maïs, froment, seigle, orge, avoine, riz, sorgho, coton et soja.

8. Procédé selon la revendication 6 ou 7, **caractérisé en ce que**, les plantes de culture sont transgéniques ou présentent une tolérance au moyen d'une culture de sélection.

9. Utilisation d'une formulation liquide selon une ou plusieurs des revendications 1 à 5, pour la lutte contre les plantes nuisibles dans les cultures de plantes.

10. Procédé pour la préparation d'une formulation liquide selon une ou plusieurs des revendications 1 à 5, dans lequel on mélange ensemble les composants.
